(19) **Europäisches Patentamt**
**European Patent Office**
**Office européen des brevets**

(11) **EP 3 650 670 B1**

(12) **EUROPEAN PATENT SPECIFICATION**

(45) Date of publication and mention
of the grant of the patent:
**03.05.2023 Bulletin 2023/18**

(51) International Patent Classification (IPC):
**F02B 31/04** (2006.01)   **F02D 9/10** (2006.01)
**F02F 1/42** (2006.01)   **F02M 35/104** (2006.01)
**F02M 35/108** (2006.01)   **F02B 31/06** (2006.01)

(21) Application number: **18828400.4**

(22) Date of filing: **11.05.2018**

(52) Cooperative Patent Classification (CPC):
**F02B 31/06; F02B 31/04; F02D 9/10; F02M 35/108;**
Y02T 10/12

(86) International application number:
**PCT/JP2018/018361**

(87) International publication number:
**WO 2019/008900 (10.01.2019 Gazette 2019/02)**

(54) **AIR INTAKE STRUCTURE FOR INTERNAL COMBUSTION ENGINE**

LUFTANSAUGSTRUKTUR FÜR BRENNKRAFTMASCHINE

STRUCTURE D'ADMISSION D'AIR POUR MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2017 JP 2017132017**
**31.07.2017 JP 2017147459**

(43) Date of publication of application:
**13.05.2020 Bulletin 2020/20**

(73) Proprietor: **Honda Motor Co., Ltd.**
**Tokyo 107-8556 (JP)**

(72) Inventors:
• **NAKAMURA, Yohei**
**Wako-shi**
**Saitama 351-0193 (JP)**
• **IMAMURA, Takanori**
**Wako-shi**
**Saitama 351-0193 (JP)**
• **INOUE, Yosuke**
**Wako-shi**
**Saitama 351-0193 (JP)**

(74) Representative: **Kiwit, Benedikt**
**Mitscherlich PartmbB**
**Patent- und Rechtsanwälte**
**Sonnenstraße 33**
**80331 München (DE)**

(56) References cited:
**JP-A- H08 312 358      JP-A- 2004 301 064**
**JP-A- 2009 293 381      JP-A- 2010 090 849**
**JP-A- 2013 213 409      US-A- 4 240 387**
**US-A- 5 551 392**

EP 3 650 670 B1

**Description**

[Technical Field]

The present invention relates to an intake structure for an internal combustion engine in which an intake flow path is partitioned into a main flow path and a tumble flow path.

[Background Art]

An intake structure for an internal combustion engine in which a tumble control valve (TCV, also called intake apportioning valve or intake control valve) is provided on the downstream side of a throttle valve, an intake flow path on the downstream side of the tumble control valve is partitioned by a partition plate section into a main flow path and a tumble flow path such that intake air passed therethrough generates a tumble flow in a combustion chamber, and the proportions of intake air flowing through the main flow path and the tumble flow path is changed by the tumble control valve, is described, for example, in WO 2013 / 146 703 A1.

However, the intake structure described in WO 2013 / 146 703 A1 is a structure in which the tumble control valve is individually provided on the downstream side of the throttle valve; therefore, an interlock mechanism for operating the tumble control valve correspondingly to an operation of the throttle valve or an actuator for singly operating the tumble control valve is needed, so that the number of component parts is increased and the cost is raised.

US 4 240 387 A discloses a multi-cylinder engine comprising a carburetor housing forming therein at least two branch mixture passages. Each of the branch mixture passages is connected to a respective intake port. A throttle valve of the carburetor is provided for each cylinder. Each of the throttle valves is arranged in the respective branch mixture passage and attached onto a common throttle shaft. A wedge shaped groove is formed on the upper inner wall of each of the branch mixture passages, and the common throttle shaft is arranged in the wedge shaped groove for causing the mixture to flow only along the bottom wall of the branch mixture passage. A single common connecting passage and branch connecting passages which are connected to the common connecting passage are provided. Each of the branch connecting passages opens into the respective intake port in the vicinity of the rear face of the valve head of the corresponding intake valve.

[Summary of the Invention]

[Underlying Problems to be solved by the Invention]

The present invention has been made in consideration of the prior art as above-mentioned, and provides an intake structure for an internal combustion engine which is capable of guiding intake air to a tumble flow path and strengthening a tumble flow in a combustion chamber, without providing a TCV, and capable of simplifying device configuration.

The present description discloses, while not forming part of the invention:

an intake structure for an internal combustion engine, including a throttle body having an intake passage constituting part of an intake flow path continuous with a combustion chamber of an internal combustion engine, and a throttle valve that is provided in the throttle body and variably controls flow path area of the intake passage,

the intake flow path being partitioned on a downstream side of the throttle valve by a partition section into a tumble flow path configured such that intake air passed therethrough generates a tumble flow in the combustion chamber and a main flow path exclusive of the tumble flow path, and

a fuel being injected and supplied by a fuel injection valve,

in which sectional area of the main flow path is set greater than sectional area of the tumble flow path, the throttle valve is a butterfly type valve rotatably supported in the throttle body by a throttle valve shaft disposed to perpendicularly intersect a center axis of the intake passage, and a valve body of the throttle valve is bisected on both sides of the throttle valve shaft to have a one-end-side half and an other-end-side half, and

at a slight opening position of the throttle valve, the intake air passes through a gap formed between the one-end-side half and an inner surface of the intake passage and a gap formed between the other-end-side half and the inner surface of the intake passage, and

an intake air proportion varying member that changes proportions of intake air flowing into the main flow path and the tumble flow path when the throttle valve is in the slight opening position is not provided on a downstream side of the throttle valve.

According to the above-mentioned configuration,

even without providing an intake air proportion varying member that varies proportions of intake air flowing respectively into the main flow path and the tumble flow path,

where a portion of intake air having flowed respectively from the one-end-side half and the other-end-side half on both sides of the throttle valve shaft of the throttle valve to the downstream side of the intake passage which has flowed into the main flow path is caused to flow back upstream, and the intake air having once flowed into the main flow path is guided to the tumble flow path, thereby, a conspicuous effect that the tumble flow in the combustion chamber can be strengthened is produced.

In other words, since the main flow path set larger than the tumble flow path, at the slight opening position of the throttle valve, the vigor of intake air having passed through the gap formed between the other-end-side half of the throttle valve and the inner surface of the intake passage and flowing in the main flow path is liable to be attenuated, the intake air flowing in the main flow path while having lost its vigor is induced by a negative pressure generated at an immediate downstream part of the throttle valve, and flows back upstream.

Then, the intake air having flowed back through the main flow path of larger sectional area is induced by a negative pressure generated at an immediate downstream part on the tumble flow path side, and thereafter flows into the tumble flow path together with the intake air having passed through the gap formed between the one-end-side half of the throttle valve and the inner surface of the intake passage, whereby the quantity of intake air flowing through the tumble flow path is increased.

Therefore, by causing the intake air to flow in respectively from the one-end-side half and the other-end-side half on both sides of the throttle valve at a slight opening position and by setting the sectional area of the main flow path greater than the sectional area of the tumble flow path, without providing an intake air proportion varying member, for example, a tumble control valve (TCV) or the like, the intake air having once flowed into the main flow path can be guided to the tumble flow path, and the tumble flow in the combustion chamber can be strengthened. In addition, device configuration can be simplified, and it is possible to reduce the number of component parts and reduce cost, as compared to the case where a tumble control valve is provided.

Present description further discloses, while not forming part of the invention, that a configuration may be adopted in which in a sectional view perpendicular to the throttle valve shaft and along the center axis of the intake passage, the one-end-side half of the throttle valve at the time of full closure contacts an inner surface of the intake passage on a downstream side at an acute angle, whereas the other-end-side half of the throttle valve contacts the inner surface of the intake passage on the downstream side at an obtuse angle, and the tumble flow path of the intake flow path is located on the downstream side of the one-end-side half, whereas the main flow path of the intake flow path is located on the downstream side of the other-end-side half.

According to this configuration,
Even in the case where the distance from the one-end-side half to the partition section is greater than the distance from the other-end-side half to the partition section in the intake flow direction, it is ensured that at the time of slight opening of the throttle valve or at the time of a low load on the internal combustion engine, a converging flow of intake air is generated at a peripheral edge of the one-end-side half of the throttle valve such that the downstream side thereof forms an acute angle with the inner surface of the intake passage, whereas a diverging flow of intake air is generated at a peripheral edge of the other-end-side half of the throttle valve such that the downstream side thereof forms an obtuse angle with the inner surface of the intake passage. Therefore, by taking the back flow of the diverging flow into the converging intake air and guiding it into the tumble flow path, it is possible to increase the quantity of the intake air flowing through the tumble flow path.

In the above-mentioned configuration,

let the diameter of the intake passage of the throttle body at a position of the throttle valve be throttle bore D (unit: mm), and let a distance between the center axis of the intake flow path and a surface on the tumble flow path side of the partition section, in a sectional view orthogonal to the partition section and along the center axis of the intake flow path, be partition height H (unit: mm), and it is preferable that H/D is within a range between an upper limit (H/D)max and a lower limit (H/D)min that are calculated by

$$\text{Formula 1: } (H/D)max = -0.00002D^2 + 0.0025D + 0.31,$$

and

$$\text{Formula 2: } (H/D)min = 0.00005D^2 - 0.0064D + 0.26.$$

According to this configuration,
by setting "H/D: partition section height position" to within the range between the upper limit (H/D)max and the lower limit (H/D)min that are calculated by Formulas 1 and 2, correspondingly to the throttle bore D (unit: mm), the tumble flow path flow rate ratio (fA/fT) is increased, and the tumble flow T is strengthened favorably.

In the aforementioned configuration,

let a diameter of the intake passage of the throttle body at the position of the throttle valve be throttle bore D (unit: mm), let an intake passage sectional area be throttle bore sectional area Sth, and let sectional area of the tumble flow path be A, and it is preferable that
A/Sth (a ratio (%) of tumble flow path sectional area to throttle bore sectional area) is
within a range between an upper limit (A/Sth)max and a lower limit (A/Sth)min that are calculated by

$$\text{Formula 3: } (A/Sth)max = -0.006D^2 + 0.79D + 19.82,$$

and

$$\text{Formula 4: } (A/Sth)min = 0.002D^2 - 0.33D + 15.59.$$

According to this configuration,
by setting "A/Sth: a ratio (%) of tumble flow path sectional area to throttle bore sectional area" to within the range between the upper limit (A/Sth)max and the lower limit (A/Sth)min that are calculated by Formulas 3 and 4, correspondingly to the throttle bore D (unit: mm), the tumble flow path flow rate ratio (fA/fT) is increased, and the tumble flow T is strengthened favorably.

In the above-mentioned configuration,

let a diameter of the intake passage of the throttle body at a position of the throttle valve be throttle bore D (unit: mm), let sectional area of the tumble flow path be A, and let sectional area of the main flow path be B, and it is preferable that
A/(A + B) (a ratio (%) of tumble flow path sectional area to total flow path sectional area) is
within a range between an upper limit (A/ (A + B))max and a lower limit (A/ (A + B))min that are calculated by

$$\text{Formula 5: } (A/(A + B))max = -0.0052D^2 + 0.6402D + 26.35,$$

and

$$\text{Formula 6: } (A/(A + B))min = 0.0023D^2 - 0.3287D + 15.19.$$

According to this configuration,
By setting "A/(A + B): a ratio (%) of the tumble flow path sectional area to the total flow path sectional area" to within the upper limit (A/ (A + B))max and the lower limit (A/(A + B))min that are calculated by Formulas 5 and 6, correspondingly to the throttle bore D (mm), the tumble flow path flow rate ratio (fA/fT) is increased, and the tumble flow T is strengthened favorably.

Let a diameter of the intake passage of the throttle body at a position of the throttle valve be throttle bore D, and let a distance from a flow path width directional center of an upstream-side end portion of the partition section to a center of the throttle valve shaft in the direction of a center axis of the intake flow path be L (unit: mm), and it is preferable that

a partition section depth position L/D in relation to the throttle bore D (unit: mm) is
within a range between an upper limit (L/D)max that is calculated by

$$\text{Formula 7: } (L/D)max = 0.00008D^2 - 0.0192D + 2.58$$

and a minimum of 0.0.

According to this configuration,
by setting "L/D: partition section depth position" to within the range between the upper limit (L/D)max that is calculated by Formula 7 and the minimum of 0.0, correspondingly to the throttle bore D (unit: mm), the tumble flow path flow rate ratio (fA/fT) is increased, and the tumble flow T is strengthened favorably.

In the aforementioned configuration,
the upstream-side end portion of the partition section may be formed with a cutout recess recessed toward a downstream side.

According to this configuration,
the area where the intake air flowing into the intake flow path impinges on the partition section is gradually increased, variations in pressure and velocity can be moderated, and flow rate loss can be suppressed.

In the above-mentioned configuration,
a diameter Dp of the intake flow path of an inlet pipe connected to a downstream side of the throttle body may be greater than a diameter D of the intake passage of the throttle body at the position of the throttle valve.

According to this configuration
variation in the flow path sectional area due to the addition of the partition section to the inside of the intake flow path can be suppressed by the difference between the diameter D and the diameter Dp.

In the aforementioned configuration,
a tapered section gradually increased in diameter toward a radial-directionally outer side may be formed from an upstream end of the inlet pipe toward the downstream side.

According to this configuration,
the flow path sectional area of the inlet pipe is enlarged by the tapered section gradually increased in diameter toward the radial-directionally outer side that is formed from the upstream end toward the downstream side, whereby variation in the flow path sectional area due to the addition of the partition section can be suppressed.

In the above-mentioned configuration,
a configuration may be adopted in which the tumble flow path is provided on a curved inner peripheral side of the intake flow path being curved, whereas the main flow path is provided on a curved outer peripheral side of the curved intake flow path, a height HB of the main flow path of the inlet pipe connected to a downstream side of the throttle body in a curve radial direction is greater than a height HA of the tumble flow path of the inlet pipe in the curve radial direction, and the fuel injection valve is disposed on the main flow path side.

According to this configuration,
the height HB in the curve radial direction of the main flow path, of the intake flow path, is greater than the height HA in the curve radial direction of the tumble flow path; therefore, by providing the main flow path on the curved outer peripheral side of the intake flow path, the distance between the fuel injection valve and the partition section can be set large, and the partition section can be made to hardly interfere with the fuel injected from the fuel injection valve, as compared to the case where the tumble flow path is provided on the curved outer peripheral side of the intake flow path.

In addition, present description further discloses, while not forming part of the invention, that
a configuration may be adopted in which in a sectional view perpendicular to the throttle valve shaft and along a center axis of the intake passage, the one-end-side half of the throttle valve at the time of full closure contacts an inner surface of the intake passage on a downstream side at an obtuse angle, whereas the other-end-side half of the throttle valve contacts the inner surface of the intake passage on the downstream side at an acute angle, and the tumble flow path of the intake flow path is located on the downstream side of the one-end-side half, whereas the main flow path of the intake flow path is located on the downstream side of the other-end-side half.

According to this configuration,
in the sectional view perpendicular to the throttle valve shaft and along the center axis of the intake passage, the one-end-side half of the throttle valve at the time of full closure is disposed to contact the inner surface of the intake passage on the downstream side at an obtuse angle. Therefore, the one-end-side half is inclined from the main flow path toward the tumble flow path on the downstream side of the throttle valve, so that at the time of slight opening of the throttle valve or the like, the back flow in the main flow path is easily guided toward the tumble flow path side, the partition section can be set close to the one-end-side half, and, in the intake flow direction, the distance from the one-end-side half to the partition section is smaller than the distance from the other-end-side half to the partition section. Accordingly, the intake air having passed through the one-end-side half easily flows into the tumble flow path, so that the quantity of intake air flowing into the tumble flow path can be increased.

In the above-mentioned configuration,

let a diameter of the intake passage of the throttle body at a position of the throttle valve be throttle bore D (unit: mm), and let a distance between the center axis of the intake flow path and a surface on the tumble flow path of the partition section in a sectional view orthogonal to the partition section and along the center axis of the intake flow path be partition height H (unit: mm), and it is preferable that

H/D is
within a range between an upper limit (H/D)max and a lower limit (H/D)min that are calculated by

$$\text{Formula 11: } (H/D)\text{max} = -0.000004D^2 + 0.0006D + 0.34,$$

and

$$\text{Formula 12: } (H/D)\text{min} = -0.0000004D^2 + 0.0006D + 0.02.$$

According to this configuration,
by setting "H/D: partition section height position" to within the range between the upper limit (H/D)max and the lower limit (H/D)min that are calculated by Formulas 1 and 2, correspondingly to the throttle bore D (unit: mm), the tumble flow path flow rate ratio (fA/fT) is increased, and the tumble flow T is strengthened favorably.
In the aforementioned configuration,

let a diameter of the intake passage of the throttle body at a position of the throttle valve be throttle bore D (unit: mm), let an intake passage sectional area be throttle bore sectional area Sth, and let sectional area of the tumble flow path be A, then it is preferable that
A/Sth (a ratio (%) of tumble flow path sectional area to throttle bore sectional area) is
within the range between an upper limit (A/Sth)max and a lower limit (A/Sth)min that are calculated by

$$\text{Formula 13: } (A/Sth)\text{max} = -0.001D^2 + 0.06D + 45.34,$$

and

$$\text{Formula 14: } (A/Sth)\text{min} = 0.0005D^2 - 0.08D + 11.54.$$

According to this configuration,
by setting "A/Sth: the ratio (%) of the tumble flow path sectional area to throttle bore sectional area" to within the range between the upper limit (A/Sth)max and the lower limit (A/Sth)min that are calculated by Formulas 3 and 4, correspondingly to the throttle bore D (unit: mm), the tumble flow path flow rate ratio (fA/fT) is increased, and the tumble flow T is strengthened favorably.
In the above-mentioned configuration,

let a diameter of the intake passage of the throttle body at the position of the throttle valve be throttle bore D (unit: mm), let sectional area of the tumble flow path be A, and let sectional area of the main flow path be B, and it is preferable that
A/(A + B) (a ratio (%) of tumble flow path sectional area to total flow path sectional area) is
within a range between an upper limit (A/ (A + B))max and a lower limit (A/ (A + B))min that are calculated by

$$\text{Formula 15: } (A/(A + B))\text{max} = 0.0024D^2 - 0.3283D + 55.48,$$

and

$$\text{Formula 16: } (A/(A + B))\text{min} = 0.0008D^2 - 0.1187D + 12.4.$$

According to this configuration,
by setting "A/(A + B): the ratio (%) of the tumble flow path sectional area to the total flow path sectional area) to within the range between the upper limit (A/(A + B))max and the lower limit (A/(A + B))min that are calculated by Formulas 5 and 6, correspondingly to the throttle bore D (unit: mm), the tumble flow path flow rate ratio (fA/fT) is increased, and the tumble flow T is strengthened favorably.
In the aforementioned configuration,

let a diameter of the intake passage of the throttle body at a position of the throttle valve be throttle bore D, and let a distance from a flow path width directional center of the upstream-side end portion of the partition section to a center of the throttle valve shaft in the direction of the center axis of the intake flow path be L (unit: mm), and it is preferable that

a partition section depth position L/D in relation to the throttle bore D (unit: mm) is within the range between an upper limit (L/D)max that is calculated by

$$\text{Formula 17: } (L/D)max = 0.0002D^2 - 0.0308D + 2.78$$

and a minimum of 0.0.

According to this configuration,
by setting "L/D: partition section depth position" to within the range between the upper limit (L/D)max that is calculated by Formula 7 and the minimum of 0.0, correspondingly to the throttle bore D (unit: mm), the tumble flow path flow rate ratio (fA/fT) is increased, and the tumble flow T is strengthened favorably.

[Means to solve the Problems]

The above-mentioned problem, is solved by appended Claims 1 and 9. The dependent claims further develop advantageous aspects of the present invention.
According to the above-mentioned configuration of Claims 1 and 9,

even if a varying member that variably controls flow path area in the intake passage in the throttle body and a part ranging from the downstream of the throttle body to the intake valve, of the intake flow path, is only the throttle valve, where a portion of the intake air having flowed respectively from the one-end-side half and the other-end-side half on both sides of the throttle valve shaft of the throttle valve to the downstream side of the intake flow path which has flowed into the main flow path is caused to flow back upstream, and the intake air having once flowed into the main flow path is guided to the tumble flow path, thereby, a conspicuous effect that the tumble flow in the combustion chamber can be strengthened is produced.

In other words, since the main flow path is set greater than the tumble flow path, at the slight opening position of the throttle valve, the vigor of the intake air having passed through the gap formed between the other-end-side half of the throttle valve and the inner surface of the intake passage and flowing in the main flow path is liable to be attenuated, and the intake air having flowed into the main flow path while having lost the vigor is induced by a negative pressure generated at an immediate downstream part of the throttle valve, and flows back upstream.
Then, the intake air having flowed back in the main flow path of larger sectional area is induced by the negative pressure generated at an immediate downstream part on the tumble flow path side, and thereafter flows into the tumble flow path together with the intake air having passed through the gap formed between the one-end-side half of the throttle valve and the inner surface of the intake passage, whereby the quantity of intake air flowing through the tumble flow path is increased.
Therefore, by causing the intake air to flow in respectively from the one-end-side half and the other-end-side half on both sides of the throttle valve at a slight opening position, and by setting the sectional area of the main flow path greater than the sectional area of the tumble flow path, even with the single throttle valve, the intake air having once flowed into the main flow path can be guided to the tumble flow path, and the tumble flow in the combustion engine can be strengthened. In addition, device configuration can be simplified, and it is possible to reduce the number of component parts and reduce cost, as compared to the case where a tumble control valve is provided.
Further, as described in Claim 1,
a configuration may be adopted in which in a sectional view perpendicular to the throttle valve shaft and along the center axis of the intake passage, the one-end-side half of the throttle valve at the time of full closure contacts an inner surface of the intake passage on a downstream side at an acute angle, whereas the other-end-side half of the throttle valve contacts the inner surface of the intake passage on the downstream side at an obtuse angle, and the tumble flow path of the intake flow path is located on the downstream side of the one-end-side half, whereas the main flow path of the intake flow path is located on the downstream side of the other-end-side half.
According to this configuration,
Even in the case where the distance from the one-end-side half to the partition section is greater than the distance from the other-end-side half to the partition section in the intake flow direction, it is ensured that at the time of slight opening of the throttle valve or at the time of a low load on the internal combustion engine, a converging flow of intake air is generated at a peripheral edge of the one-end-side half of the throttle valve such that the downstream side thereof forms an acute angle with the inner surface of the intake passage, whereas a diverging flow of intake air is generated at a peripheral edge of the other-end-side half of the throttle valve such that the downstream side thereof forms an obtuse angle with the inner surface of the intake passage. Therefore, by taking the back flow of the diverging flow into the converging intake air and guiding it into the tumble flow path, it is possible to increase the quantity of the intake air flowing through the tumble flow path.

In the above-mentioned configuration,

let a diameter of the intake passage of the throttle body at a position of the throttle valve be throttle bore D (unit: mm), and let a distance between the center axis of the intake flow path and a surface on the tumble flow path side of the partition section, in a sectional view orthogonal to the partition section and along the center axis of the intake flow path, be partition height H (unit: mm), and it is preferable that
H/D is
within a range between an upper limit (H/D)max and a lower limit (H/D)min that are calculated by

$$\text{Formula 1: } (H/D)max = -0.00002D^2 + 0.0025D + 0.31,$$

and

$$\text{Formula 2: } (H/D)min = 0.00005D^2 - 0.0064D + 0.26.$$

According to this configuration,
by setting "H/D: partition section height position" to within the range between the upper limit (H/D)max and the lower limit (H/D)min that are calculated by Formulas 1 and 2, correspondingly to the throttle bore D (unit: mm), the tumble flow path flow rate ratio (fA/fT) is increased, and the tumble flow T is strengthened favorably.

In the aforementioned configuration,

let a diameter of the intake passage of the throttle body at the position of the throttle valve be throttle bore D (unit: mm), let an intake passage sectional area be throttle bore sectional area Sth, and let sectional area of the tumble flow path be A, and it is preferable that
A/Sth (a ratio (%) of tumble flow path sectional area to throttle bore sectional area) is
within a range between an upper limit (A/Sth)max and a lower limit (A/Sth)min that are calculated by

$$\text{Formula 3: } (A/Sth)max = -0.006D^2 + 0.79D + 19.82,$$

and

$$\text{Formula 4: } (A/Sth)min = 0.002D^2 - 0.33D + 15.59.$$

According to this configuration,
by setting "A/Sth: a ratio (%) of tumble flow path sectional area to throttle bore sectional area" to within the range between the upper limit (A/Sth)max and the lower limit (A/Sth)min that are calculated by Formulas 3 and 4, correspondingly to the throttle bore D (unit: mm), the tumble flow path flow rate ratio (fA/fT) is increased, and the tumble flow T is strengthened favorably.

In the above-mentioned configuration,

let a diameter of the intake passage of the throttle body at a position of the throttle valve be throttle bore D (unit: mm), let sectional area of the tumble flow path be A, and let sectional area of the main flow path be B, and it is preferable that
A/(A + B) (a ratio (%) of tumble flow path sectional area to total flow path sectional area) is
within a range between an upper limit (A/(A + B))max and a lower limit (A/(A + B))min that are calculated by

$$\text{Formula 5: } (A/(A + B))max = -0.0052D^2 + 0.6402D + 26.35,$$

and

$$\text{Formula 6: } (A/(A + B))\text{min} = 0.0023D^2 - 0.3287D + 15.19.$$

According to this configuration,
By setting "A/(A + B): a ratio (%) of the tumble flow path sectional area to the total flow path sectional area" to within the upper limit (A/(A + B))max and the lower limit (A/(A + B))min that are calculated by Formulas 5 and 6, correspondingly to the throttle bore D (mm), the tumble flow path flow rate ratio (fA/fT) is increased, and the tumble flow T is strengthened favorably.

As given in claim 1,

a diameter of the intake passage of the throttle body at a position of the throttle valve is throttle bore D, and a distance from a flow path width directional center of an upstream-side end portion of the partition section to a center of the throttle valve shaft in the direction of a center axis of the intake flow path is L (unit: mm), and
a partition section depth position L/D in relation to the throttle bore D (unit: mm) is
within a range between an upper limit (L/D)max that is calculated by

$$\text{Formula 7: } (L/D)\text{max} = 0.00008D^2 - 0.0192D + 2.58$$

and a minimum of 0.0.

According to this configuration,
by setting "L/D: partition section depth position" to within the range between the upper limit (L/D)max that is calculated by Formula 7 and the minimum of 0.0, correspondingly to the throttle bore D (unit: mm), the tumble flow path flow rate ratio (fA/fT) is increased, and the tumble flow T is strengthened favorably.

In the aforementioned configuration,
the upstream-side end portion of the partition section may be formed with a cutout recess recessed toward a downstream side.

According to this configuration,
the area where the intake air flowing into the intake flow path impinges on the partition section is gradually increased, variations in pressure and velocity can be moderated, and flow rate loss can be suppressed.

In the above-mentioned configuration,
a diameter Dp of the intake flow path of an inlet pipe connected to a downstream side of the throttle body may be greater than a diameter D of the intake passage of the throttle body at the position of the throttle valve.

According to this configuration
variation in the flow path sectional area due to the addition of the partition section to the inside of the intake flow path can be suppressed by the difference between the diameter D and the diameter Dp.

In the aforementioned configuration,
a tapered section gradually increased in diameter toward a radial-directionally outer side may be formed from an upstream end of the inlet pipe toward the downstream side.

According to this configuration,
the flow path sectional area of the inlet pipe is enlarged by the tapered section gradually increased in diameter toward the radial-directionally outer side that is formed from the upstream end toward the downstream side, whereby variation in the flow path sectional area due to the addition of the partition section can be suppressed.

In the above-mentioned configuration,
a configuration may be adopted in which the tumble flow path is provided on a curved inner peripheral side of the intake flow path being curved, whereas the main flow path is provided on a curved outer peripheral side of the curved intake flow path, a height HB of the main flow path of the inlet pipe connected to a downstream side of the throttle body in a curve radial direction is greater than a height HA of the tumble flow path of the inlet pipe in the curve radial direction, and the fuel injection valve is disposed on the main flow path side.

According to this configuration,
the height HB in the curve radial direction of the main flow path, of the intake flow path, is greater than the height HA in the curve radial direction of the tumble flow path; therefore, by providing the main flow path on the curved outer peripheral side of the intake flow path, the distance between the fuel injection valve and the partition section can be set large, and the partition section can be made to hardly interfere with the fuel injected from the fuel injection valve, as compared to the case where the tumble flow path is provided on the curved outer peripheral side of the intake flow path.

In addition, as described in Claim 9,
a configuration may be adopted in which in a sectional view perpendicular to the throttle valve shaft and along a center axis of the intake passage, the one-end-side half of the throttle valve at the time of full closure contacts an inner surface of the intake passage on a downstream side at an obtuse angle, whereas the other-end-side half of the throttle valve contacts the inner surface of the intake passage on the downstream side at an acute angle, and the tumble flow path of the intake flow path is located on the downstream side of the one-end-side half, whereas the main flow path of the intake flow path is located on the downstream side of the other-end-side half.

According to this configuration,
in the sectional view perpendicular to the throttle valve shaft and along the center axis of the intake passage, the one-end-side half of the throttle valve at the time of full closure is disposed to contact the inner surface of the intake passage on the downstream side at an obtuse angle. Therefore, the one-end-side half is inclined from the main flow path toward the tumble flow path on the downstream side of the throttle valve, so that at the time of slight opening of the throttle valve or the like, the back flow in the main flow path is easily guided toward the tumble flow path side, the partition section can be set close to the one-end-side half, and, in the intake flow direction, the distance from the one-end-side half to the partition section is smaller than the distance from the other-end-side half to the partition section. Accordingly, the intake air having passed through the one-end-side half easily flows into the tumble flow path, so that the quantity of intake air flowing into the tumble flow path can be increased.

In the above-mentioned configuration,

let a diameter of the intake passage of the throttle body at a position of the throttle valve be throttle bore D (unit: mm), and let a distance between the center axis of the intake flow path and a surface on the tumble flow path of the partition section in a sectional view orthogonal to the partition section and along the center axis of the intake flow path be partition height H (unit: mm), and it is preferable that
H/D is
within a range between an upper limit (H/D)max and a lower limit (H/D)min that are calculated by

$$\text{Formula 11: } (H/D)\text{max} = -0.000004D^2 + 0.0006D + 0.34,$$

and

$$\text{Formula 12: } (H/D)\text{min} = -0.0000004D^2 + 0.0006D + 0.02.$$

According to this configuration,
by setting "H/D: partition section height position" to within the range between the upper limit (H/D)max and the lower limit (H/D)min that are calculated by Formulas 1 and 2, correspondingly to the throttle bore D (unit: mm), the tumble flow path flow rate ratio (fA/fT) is increased, and the tumble flow T is strengthened favorably.

In the aforementioned configuration,

let a diameter of the intake passage of the throttle body at a position of the throttle valve be throttle bore D (unit: mm), let an intake passage sectional area be throttle bore sectional area Sth, and let sectional area of the tumble flow path be A, then it is preferable that
A/Sth (a ratio (%) of tumble flow path sectional area to throttle bore sectional area) is
within the range between an upper limit (A/Sth)max and a lower limit (A/Sth)min that are calculated by

$$\text{Formula 13: } (A/Sth)\text{max} = -0.001D^2 + 0.06D + 45.34,$$

and

$$\text{Formula 14: } (A/Sth)\text{min} = 0.0005D^2 - 0.08D + 11.54.$$

According to this configuration,
by setting "A/Sth: the ratio (%) of the tumble flow path sectional area to throttle bore sectional area" to within the range between the upper limit (A/Sth)max and the lower limit (A/Sth)min that are calculated by Formulas 13 and 14, correspondingly to the throttle bore D (unit: mm), the tumble flow path flow rate ratio (fA/fT) is increased, and the tumble flow T is strengthened favorably.

In the above-mentioned configuration,

let a diameter of the intake passage of the throttle body at the position of the throttle valve be throttle bore D (unit: mm), let sectional area of the tumble flow path be A, and let sectional area of the main flow path be B, and it is preferable that

A/(A + B) (a ratio (%) of tumble flow path sectional area to total flow path sectional area) is

within a range between an upper limit (A/ (A + B))max and a lower limit (A/ (A + B))min that are calculated by

$$\text{Formula 15: } (A/(A + B))\text{max} = 0.0024D^2 - 0.3283D + 55.48,$$

and

$$\text{Formula 16: } (A/(A + B))\text{min} = 0.0008D^2 - 0.1187D + 12.4.$$

According to this configuration,

by setting "A/(A + B): the ratio (%) of the tumble flow path sectional area to the total flow path sectional area) to within the range between the upper limit (A/(A + B))max and the lower limit (A/(A + B))min that are calculated by Formulas 15 and 16, correspondingly to the throttle bore D (unit: mm), the tumble flow path flow rate ratio (fA/fT) is increased, and the tumble flow T is strengthened favorably.

Further, as given in Claim 9,

a diameter of the intake passage of the throttle body at a position of the throttle valve is throttle bore D, and a distance from a flow path width directional center of the upstream-side end portion of the partition section to a center of the throttle valve shaft in the direction of the center axis of the intake flow path is L (unit: mm), and

a partition section depth position L/D in relation to the throttle bore D (unit: mm) is

within the range between an upper limit (L/D)max that is calculated by

$$\text{Formula 17: } (L/D)\text{max} = 0.0002D^2 - 0.0308D + 2.78$$

and a minimum of 0.0.

According to this configuration,

by setting "L/D: partition section depth position" to within the range between the upper limit (L/D)max that is calculated by Formula 17 and the minimum of 0.0, correspondingly to the throttle bore D (unit: mm), the tumble flow path flow rate ratio (fA/fT) is increased, and the tumble flow T is strengthened favorably.

Present description further discloses, while not forming part of the invention,

an intake structure for an internal combustion engine, including a throttle body having an intake passage constituting part of an intake flow path continuous with a combustion chamber of an internal combustion engine, and a throttle valve provided in the throttle body,

the intake flow path being partitioned on a downstream side of the throttle valve by a partition section into a tumble flow path configured such that intake air passed therethrough generates a tumble flow in the combustion chamber and a main flow path exclusive of the tumble flow path, and

a fuel being injected and supplied by a fuel injection valve,

in which the throttle valve is a butterfly type valve rotatably supported in the throttle body by a throttle valve shaft disposed to perpendicularly intersect a center axis (X) of the intake passage, a valve body of the throttle valve is bisected on both sides of the throttle valve shaft to have a one-end-side half and an other-end-side half,

at a slight opening position of the throttle valve, the intake air passes through a gap formed between the one-end-side half and an inner surface of the intake passage and a gap formed between the other-end-side half and the inner surface of the intake passage,

an intake air proportion varying member that changes proportions of intake air flowing into the main flow path and the tumble flow path when the throttle valve is in the slight opening position is not provided on a downstream side of the throttle valve,

in a sectional view perpendicular to the throttle valve shaft and along the center axis of the intake passage, the one-end-side half of the throttle valve at the time of full closure contacts the inner surface of the intake passage on a downstream side at an acute angle, whereas the other-end-side half of the throttle valve contacts the inner surface of the intake passage on the downstream side at an obtuse angle, sectional area of the main flow path is set greater than sectional area of the tumble flow path, the tumble flow path of the intake flow path is located on the downstream side of the one-end-side half, whereas the main flow path of the intake flow path is located on the downstream side of the other-end-side half, let a diameter of the intake passage of the throttle body at the position of the throttle valve be throttle bore D, and let a distance from a flow path width directional center of an upstream-side end portion of the partition section to a center of the throttle valve shaft in the direction of a center axis of the intake flow path be L (unit: mm), and a partition section depth position L/D in relation to the throttle bore D (unit: mm) is within a range between an upper limit (L/D)max that is calculated by

$$\text{Formula 7: } (L/D)\text{max} = 0.00008D^2 - 0.0192D + 2.58$$

and a minimum of 0.0.

According to the above-mentioned configuration,

in addition to effects produced by the configurations of Claims 1 and 3, by setting "L/D: partition section depth position" to within the range between the upper limit (L/D)max that is calculated by Formula 7 and the minimum of 0.0, correspondingly to the throttle bore D (unit: mm), the tumble flow path flow rate ratio (fA/fT) is increased, and the tumble flow T is strengthened favorably.

Present description further discloses, while not forming part of the invention,

an intake structure for an internal combustion engine, including a throttle body having an intake passage constituting part of an intake flow path continuous with a combustion chamber of an internal combustion engine, and a throttle valve provided in the throttle body, the intake flow path being partitioned on a downstream side of the throttle valve by a partition section into a tumble flow path configured such that intake air passed therethrough generates a tumble flow in the combustion chamber and a main flow path exclusive of the tumble flow path, and a fuel being injected and supplied by a fuel injection valve, in which the throttle valve is a butterfly type valve rotatably supported in the throttle body by a throttle valve shaft disposed to perpendicularly intersect a center axis of the intake passage, and a valve body of the throttle valve is bisected on both sides of the throttle valve shaft to have a one-end-side half and an other-end-side half, at a slight opening position of the throttle valve, the intake air passes through a gap formed between the one-end-side half and an inner surface of the intake passage and a gap formed between the other-end-side half and the inner surface of the intake passage, an intake air proportion varying member that changes proportions of intake air flowing into the main flow path and the tumble flow path when the throttle valve is in the slight opening position is not provided on a downstream side of the throttle valve, in a sectional view perpendicular to the throttle valve shaft and along the center axis of the intake passage, the one-end-side half of the throttle valve at the time of full closure contacts the inner surface of the intake passage on a downstream side at an obtuse angle, whereas the other-end-side half of the throttle valve contacts the inner surface of the intake passage on the downstream side at an acute angle, sectional area of the main flow path is set greater than sectional area of the tumble flow path, the tumble flow path of the intake flow path is located on the downstream side of the one-end-side half, whereas the main flow path of the intake flow path is located on the downstream side of the other-end-side half, and in which let a diameter of the intake passage of the throttle body at the position of the throttle valve be throttle bore D, and let a distance from a flow path width directional center of an upstream-side end portion of the partition section to a center of the throttle valve shaft in the direction of a center axis of the intake flow path be L (unit: mm), and a partition section depth position L/D in relation to the throttle bore D (unit: mm) is within a range between an upper limit (L/D)max that is calculated by

$$\text{Formula 17: } (L/D)\text{max} = 0.0002D^2 - 0.0308D + 2.78$$

and a minimum of 0.0.

According to the above-mentioned configuration,

in addition to effects produced by the configurations of Claims 1 and 12,
by setting "L/D: partition section depth position" to within the range between the upper limit (L/D)max that is calculated by Formula 17 and the minimum of 0.0, correspondingly to the throttle bore D (unit: mm), the tumble flow path flow rate ratio (fA/fT) is increased, and the tumble flow T is strengthened favorably.

Present description further discloses, while not forming part of the invention,

an intake structure for an internal combustion engine, including a throttle body having an intake passage constituting part of an intake flow path continuous with a combustion chamber of an internal combustion engine, a throttle valve provided in the throttle body, an intake port constituting part of the intake flow path, and an intake valve that opens and closes an intake valve port fronting on the combustion chamber on a downstream end of the intake port, the intake flow path being partitioned on a downstream side of the throttle valve by a partition section into a tumble flow path configured such that intake air passed therethrough generates a tumble flow in the combustion chamber and a main flow path exclusive of the tumble flow path, and
a fuel being injected and supplied by a fuel injection valve,
in which the throttle valve is a butterfly type valve rotatably supported in the throttle body by a throttle valve shaft disposed to perpendicularly intersect a center axis of the intake passage, and a valve body of the throttle valve is bisected on both sides of the throttle valve shaft to have a one-end-side half and an other-end-side half,
at a slight opening position of the throttle valve, the intake air passes through a gap formed between the one-end-side half and an inner surface of the intake passage and a gap formed between the other-end-side half and the inner surface of the intake passage, and
a varying member that variably controls flow path area, in the intake passage in the throttle body and a part ranging from the downstream of the throttle body to the intake valve, of the intake flow path, is only the throttle valve,
in a sectional view perpendicular to the throttle valve shaft and along the center axis of the intake passage, the one-end-side half of the throttle valve at the time of full closure contacts the inner surface of the intake passage on a downstream side at an acute angle, whereas the other-end-side half of the throttle valve contacts the inner surface of the intake passage on the downstream side at an obtuse angle,
sectional area of the main flow path is set greater than sectional area of the tumble flow path,
the tumble flow path of the intake flow path is located on the downstream side of the one-end-side half, whereas the main flow path of the intake flow path is located on the downstream side of the other-end-side half, and
let a diameter of the intake passage of the throttle body at the position of the throttle valve be throttle bore D, and let a distance from a flow path width directional center of an upstream-side end portion of the partition section to a center of the throttle valve shaft in the direction of a center axis of the intake flow path be L (unit: mm), and
a partition section depth position L/D in relation to the throttle bore D (unit: mm) is
within a range between an upper limit (L/D)max that is calculated by

$$\text{Formula 7: } (L/D)max = 0.00008D^2 - 0.0192D + 2.58$$

and a minimum of 0.0.

According to the above-mentioned configuration,

in addition to effects produced by the configurations of Claims 17 and 18,
by setting "L/D: partition section depth position" to within the range between the upper limit (L/D)max that is calculated by Formula 7 and the minimum of 0.0, correspondingly to the throttle bore D (unit: mm), the tumble flow path flow rate ratio (fA/fT) is increased, and the tumble flow T is strengthened favorably.

Present description further discloses, while not forming part of the invention,

an intake structure for an internal combustion engine, including a throttle body having an intake passage constituting part of an intake flow path continuous with a combustion chamber of an internal combustion engine, a throttle valve provided in the throttle body, an intake port constituting part of the intake flow path, and an intake valve that opens and closes an intake valve port fronting on the combustion chamber on a downstream end of the intake port,

the intake flow path being partitioned on a downstream side of the throttle valve by a partition section into a tumble flow path configured such that intake air passed therethrough generates a tumble flow in the combustion chamber and a main flow path exclusive of the tumble flow path, and

a fuel being injected and supplied by a fuel injection valve,

in which the throttle valve is a butterfly type valve rotatably supported in the throttle body by a throttle valve shaft disposed to perpendicularly intersect a center axis of the intake passage, and a valve body of the throttle valve is bisected on both sides of the throttle valve shaft to have a one-end-side half and an other-end-side half,

at a slight opening position of the throttle valve, the intake air passes through a gap formed between the one-end-side half and an inner surface of the intake passage and a gap formed between the other-end-side half and the inner surface of the intake passage, and

a varying member that variably controls flow path area, in the intake passage in the throttle body and a part ranging from the downstream of the throttle body to the intake valve, of the intake flow path, is only the throttle valve,

in a sectional view perpendicular to the throttle valve shaft and along the center axis of the intake passage, the one-end-side half of the throttle valve at the time of full closure contacts the inner surface of the intake passage on a downstream side at an obtuse angle, whereas the other-end-side half of the throttle valve contacts the inner surface of the intake passage on the downstream side at an acute angle,

sectional area of the main flow path is set greater than sectional area of the tumble flow path,

the tumble flow path of the intake flow path is located on the downstream side of the one-end-side half (577A), whereas the main flow path of the intake flow path is located on the downstream side of the other-end-side half, and

let a diameter of the intake passage of the throttle body at the position of the throttle valve be throttle bore D, and let a distance from a flow path width directional center of an upstream-side end portion of the partition section to a center of the throttle valve shaft in the direction of a center axis of the intake flow path be L (unit: mm), and

a partition section depth position L/D in relation to the throttle bore D (unit: mm) is

within a range between an upper limit (L/D)max that is calculated by

$$\text{Formula 17: } (L/D)max = 0.0002D^2 - 0.0308D + 2.78$$

and a minimum of 0.0.

According to the above-mentioned configuration,

in addition to effects produced by the configurations of Claims 17 and 27,

by setting "L/D: partition section depth position" to within the range between the upper limit (L/D)max that is calculated by Formula 17 and the minimum of 0.0, correspondingly to the throttle bore D (unit: mm), the tumble flow path flow rate ratio (fA/fT) is increased, and the tumble flow T is strengthened favorably.

[Effects of the Invention]

According to the intake structure for the internal combustion engine of the present invention,

even without providing an intake air proportion varying member that varies proportions of intake air flowing respectively into the main flow path and the tumble flow path,

where a portion of intake air having flowed respectively from the one-end-side half and the other-end-side half on both sides of the throttle valve shaft of the throttle valve to the downstream side of the intake passage which has flowed into the main flow path is caused to flow back upstream, and the intake air having once flowed into the main flow path is guided to the tumble flow path, thereby, a conspicuous effect that the tumble flow in the combustion chamber can be strengthened is produced.

In other words, since the main flow path set larger than the tumble flow path, at the slight opening position of the throttle valve, the vigor of the intake air having passed through the gap formed between the other-end-side half of the throttle valve and the inner surface of the intake passage and flowing in the main flow path is liable to be attenuated, and the intake air having flowed into the main flow path while having lost the vigor is induced by a negative pressure generated at an immediate downstream part of the throttle valve, and flows back upstream.

Then, the intake air having flowed back in the main flow path of larger sectional area is induced by a negative pressure generated at an immediate downstream part on the tumble flow path side, and thereafter flows into the tumble flow path together with the intake air having passed through the gap formed between the one-end-side half of the throttle valve and the inner surface of the intake passage, whereby the quantity of intake air flowing through the tumble flow path is increased.

Therefore, by causing the intake air to flow in respectively from the one-end-side half and the other-end-side half on both sides of the throttle valve at a slight opening position and by setting the sectional area of the main flow path greater than the sectional area of the tumble flow path, without providing an intake air proportion varying member, for example, a tumble control valve (TCV) or the like, the intake air having once flowed into the main flow path can be guided to the tumble flow path, and the tumble flow in the combustion chamber can be strengthened. In addition, device configuration can be simplified, and it is possible to reduce the number of component parts and reduce cost, as compared to the case where a tumble control valve is provided.

Alternatively, even if a varying member that variably controls flow path area in the intake passage in the throttle body and a part ranging from the downstream of the throttle body to the intake valve, of the intake flow path, is only the throttle valve,

where a portion of intake air having flowed respectively from the one-end-side half and the other-end-side half on both sides of the throttle valve shaft of the throttle valve to the downstream side of the intake passage which has flowed into the main flow path is caused to flow back upstream, and the intake air having once flowed into the main flow path is guided to the tumble flow path, thereby, a conspicuous effect that the tumble flow in the combustion chamber can be strengthened is produced.

In other words, since the main flow path is set larger than the tumble flow path, at the slight opening position of the throttle valve, the vigor of the intake air having passed through the gap formed between the other-end-side half of the throttle valve and the inner surface of the intake passage and flowing in the main flow path is liable to be attenuated, and the intake air having flowed into the main flow path while having lost the vigor is induced by a negative pressure generated at an immediate downstream part of the throttle valve, and flows back upstream.

Then, the intake air having flowed back in the main flow path of larger sectional area is induced by a negative pressure generated at an immediate downstream part on the tumble flow path side, and thereafter flows into the tumble flow path together with the intake air having passed through the gap formed between the one-end-side half of the throttle valve and the inner surface of the intake passage, whereby the quantity of intake air flowing through the tumble flow path is increased.

Therefore, by causing the intake air to flow in respectively from the one-end-side half and the other-end-side half on both sides of the throttle valve at a slight opening position, and by setting the sectional area of the main flow path greater than the sectional area of the tumble flow path, even with the single throttle valve, the intake air having once flowed into the main flow path can be guided to the tumble flow path, and the tumble flow in the combustion engine can be strengthened. In addition, device configuration can be simplified, and it is possible to reduce the number of component parts and reduce cost, as compared to the case where a tumble control valve is provided.

[Brief Description of Drawings]

FIG. 1 is a right side view of a motorcycle on which a power unit including an intake structure for an internal combustion engine according to Embodiment 1 or 2 of the present invention is mounted.

FIG. 2 is a rear portion right side view in which a body cover is detached from the motorcycle of FIG. 1.

FIG. 3 is a side sectional view of the power unit of Example 1A including the intake structure for the internal combustion engine according to Embodiment 1, taking out the power unit in FIG. 2 and depicting the power unit in an orientation substantially the same as in FIG. 2.

FIG. 4 is an enlarged view of a major part of FIG. 3.

FIG. 5 is an upstream-side front view of a throttle body as viewed along arrows V-V of FIG. 4.

FIG. 6 is a sectional view taken along arrow VI of FIG. 4, depicting an upstream-side end portion of a partition section.

FIG. 7 is a sectional view including a center axis of an intake passage and vertical to a throttle valve shaft, of a part in the vicinity of a throttle valve of the throttle body of Embodiment 1.

FIG. 8 is a schematic illustration of the flow of intake air when the throttle valve is located in a slight opening position in FIG. 7, in a sectional view perpendicular to the throttle valve shaft and along the center axis of the intake passage.

FIG. 9 is a schematic illustration of the flow of intake air when the intake passage is viewed from above, corresponding to a view along arrows IX-IX of FIG. 8.

FIG. 10 is a schematic illustration of the flow of intake air when the intake passage is viewed from below, corresponding to a view along arrows X-X of FIG. 8.

FIG. 11 is a schematic illustration of a state in which a partition section is provided, in a sectional view similar to FIG. 8.

FIG. 12 is a schematic illustration, in a section orthogonal to the partition section and along the center axis of an intake flow path, of a form of the intake passage on the front and rear sides of a throttle valve of the throttle body of Embodiment 1 and the intake flow path continuous therewith.

FIG. 13 depicts a graph of analytical results of the relation of "tumble flow path flow rate ratio (fA/fT)" to "L/D: partition section depth position" of Embodiment 1, in the cases where the throttle bore D is 24 φ, 48 φ and 80 φ, at a throttle position of 15%.

FIG. 14 is a graph depicting a tumble flow strengthening establishment range, corresponding to the throttle bore D (mm), of "L/D: partition section depth position," deduced from FIG. 13.

FIG. 15 is a graph of analytical results of the relation of "tumble flow path flow rate ratio (fA/fT)" to "H/D: partition section height position" of Embodiment 1, in the cases where the throttle bore D is 24 φ, 48 φ and 80 φ, at a throttle position of 15%.

FIG. 16 is a graph depicting a tumble flow strengthening establishment range, corresponding to the throttle bore D (mm), of "H/D: partition section height position," deduced from FIG. 15.

FIG. 17 is a graph of analytical results of the relation of "tumble flow path flow rate ration (fA/fT)" to "A/Sth: a ratio (%) of tumble flow path sectional area to throttle bore sectional area" of Embodiment 1, in the cases where the throttle bore D is 24 φ, 48 φ and 80 φ, at a throttle position of 15%.

FIG. 18 is a graph depicting a tumble flow strengthening establishment range, corresponding to the throttle bore D (mm), of "A/Sth: the ratio (%) of tumble flow path sectional area to throttle bore sectional area," deduced from FIG. 17.

FIG. 19 is a graph of analytical results of the relation of "tumble flow path flow rate ratio (fA/fT)" to "A/(A + B): the ratio (%) of tumble flow path sectional area to total flow path sectional area" of Embodiment 1, in the cases where the throttle bore D is 24 φ, 48 φ and 80 φ, at a throttle position of 15%.

FIG. 20 is a graph depicting a tumble flow strengthening establishment range, corresponding to the throttle bore D (mm), of "A/(A + B): the ratio (%) of tumble flow path sectional area to total flow path sectional area," deduced from FIG. 19.

FIG. 21 is a right side view, partly in section, of a power unit of Example 1B including the intake structure for the internal combustion engine according to Embodiment 1.

FIG. 22 is a left side view, partly in section, of a power unit of Example 1C including the intake structure for the internal combustion engine according to Embodiment 1.

FIG. 23 is a left side view, partly in section, of a power unit of Example 1D including the intake structure for the internal combustion engine according to Embodiment 1.

FIG. 24 is a side sectional view of a power unit of Example 2A including an intake structure for an internal combustion engine according to Embodiment 2, taking out the power unit of FIG. 2 and depicting the power unit in an orientation substantially the same as in FIG. 2.

FIG. 25 is an enlarged view of a major part of FIG. 24.

FIG. 26 is a sectional view, including the center axis of the intake passage and perpendicular to the throttle valve shaft, of a part in the vicinity of the throttle valve of the throttle body of Embodiment 2.

FIG. 27 is a schematic illustration of a state in which the partition section is provided and when the throttle valve is located in a slight opening position in FIG. 26, in a sectional view perpendicular to the throttle valve shaft and along the center axis of the intake passage.

FIG. 28 is a schematic illustration, in section orthogonal to the partition section and along the center axis of the intake flow path, of a form of the intake passage on the front and rear sides of the throttle valve of the throttle body of Embodiment 2 and the intake flow path continuous therewith.

FIG. 29 depicts a graph of analytical results of the relation of "tumble flow path flow rate ratio (fA/fT)" to "L/D: partition section depth position" of Embodiment 2, in the cases where the throttle bore D is 24 φ, 48 φ and 80 φ, at a throttle position of 15%.

FIG. 30 is a graph depicting a tumble flow strengthening establishment range, corresponding to the throttle bore D (mm), of "L/D: partition section depth position," deduced from FIG. 29.

FIG. 31 is a graph of analytical results of the relation of "tumble flow path flow rate ratio (fA/fT)" to "H/D: partition section depth position" of Embodiment 2, in the cases where the throttle bore D is 24 φ, 48 φ and 80 φ, at a throttle position of 15%.

FIG. 32 is a graph depicting a tumble flow strengthening establishment range, corresponding to the throttle bore D (mm), of "H/D: partition section height position," deduced from FIG. 31.

FIG. 33 is a graph of analytical results of the relation of "tumble flow path flow rate ratio (fA/fT)" to "A/Sth: the ratio (%) of tumble flow path sectional area to throttle bore sectional area" of Embodiment 2, in the cases where the throttle bore D is 24 φ, 48 φ and 80 φ, at a throttle position of 15%.

FIG. 34 is a graph depicting a tumble flow strengthening establishment range, corresponding to the throttle bore D (mm), of "A/Sth: the ratio (%) of tumble flow path sectional area to throttle bore sectional area," deduced from FIG. 33.

FIG. 35 is a graph of analytical results of the relation of "tumble flow path flow rate ratio (fA/fT)" to "A/(A + B): the ratio (%) of the tumble flow path sectional area to the total flow path sectional area" of Embodiment 2, in the cases where the throttle bore D is 24 φ, 48 φ and 80 φ, at a throttle position of 15%.

FIG. 36 is a graph depicting a tumble flow strengthening establishment range, corresponding to the throttle bore D (mm), of "A/(A + B): the ratio (%) of the tumble flow path sectional area to the total flow path sectional area," deduced from FIG. 35.

FIG. 37 is a right side view, partly in section, of a power unit of Example 2B including the intake structure for the internal combustion engine according to Embodiment 2.

FIG. 38 is a left side view, partly in section, of a power unit of Example 2C including the intake structure for the internal combustion engine according to Embodiment 2.

FIG. 39 is a left side view, partly in section, of a power unit of Example 2D including the intake structure for the internal combustion engine according to Embodiment 2.

[Mode for carrying out the Invention]

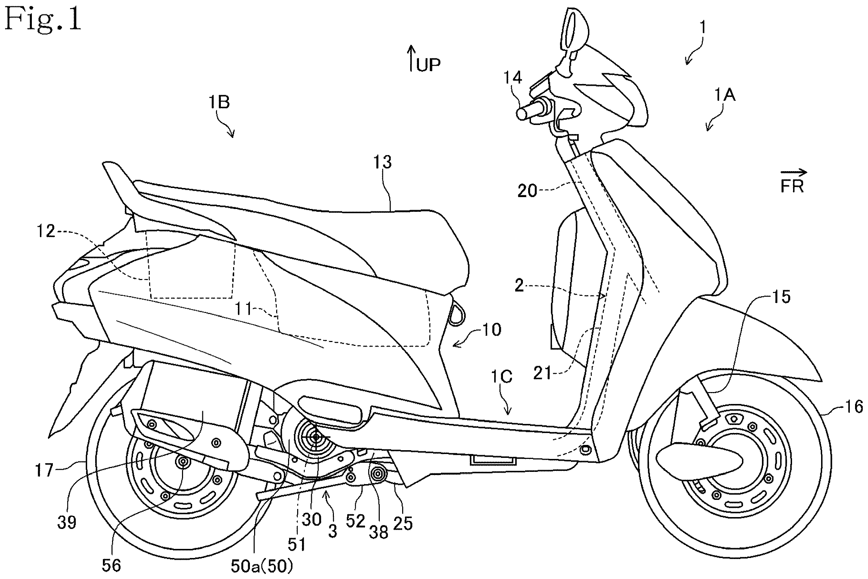

Based on FIGS. 1 to 23, an intake structure for an internal combustion engine according to Embodiment 1 of the present invention will be described.

Note that the directions such as forward, rearward, leftward, rightward, upward, and downward directions in the description herein and the claims are in conformity to the directions of a vehicle in a state in which a power unit including an intake structure for an internal combustion engine according to the present embodiment is mounted on the vehicle. The vehicle in the present embodiment is a small-type vehicle, specifically, a motorcycle.

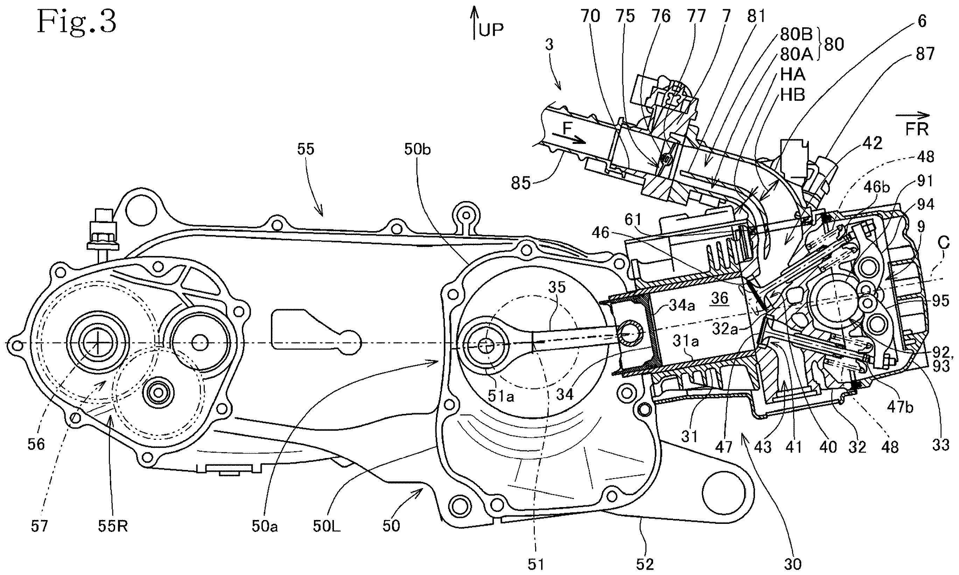

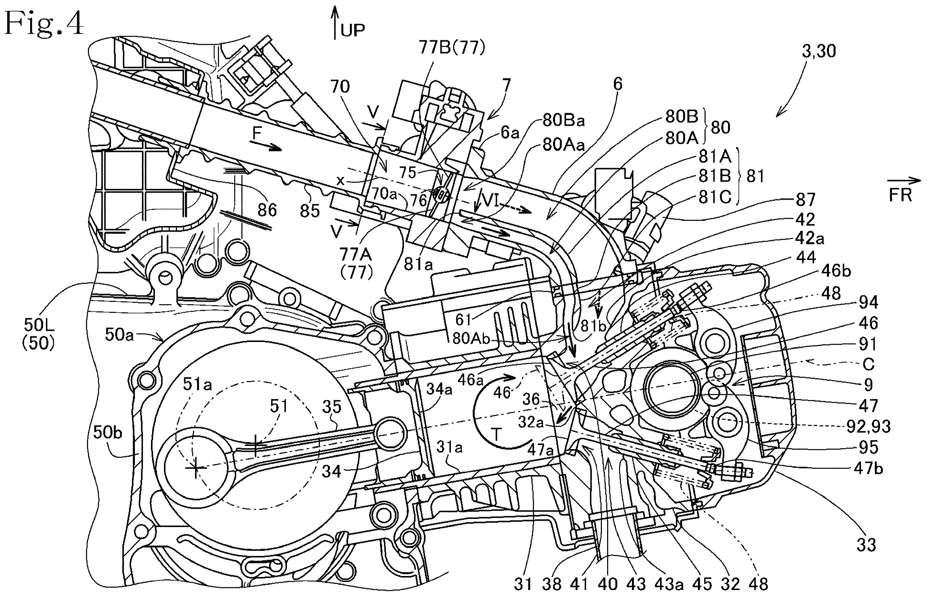

It is to be noted, however, that with respect an intake passage 70 of a throttle body 7 and an intake flow path 80, the upper side of a partition section 81 partitioning them along an intake air flow direction will be described as the "upper" side, and the lower side of the partition section 81 will be described as the "lower" side (see FIGS. 3 and 4).

In addition, arrow FR in the drawings indicates the vehicle front side, LH indicates the vehicle left-hand side, RH indicates the vehicle right-hand side, and UP indicates the vehicle upper side.

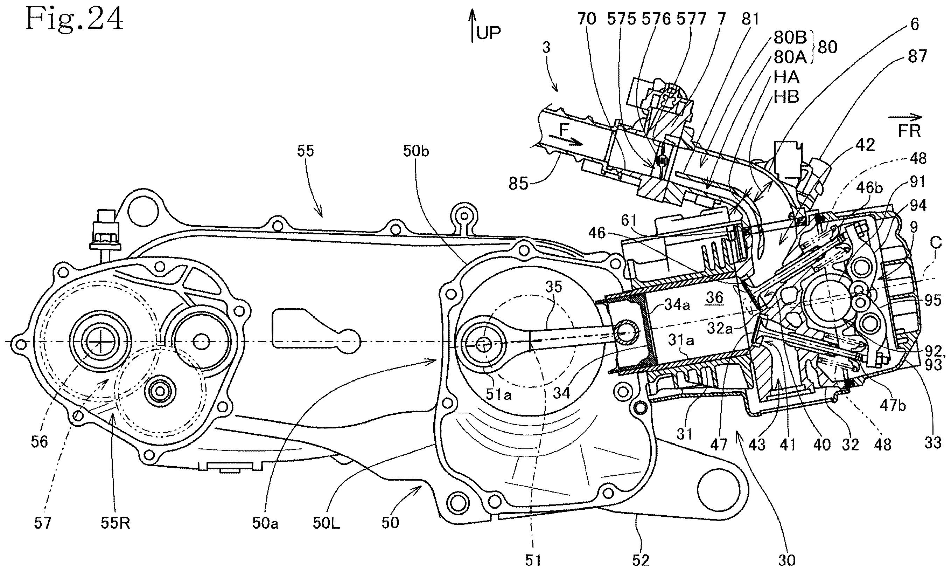

The foregoing applies also to Embodiment 2 depicted in FIGS. 24 to 39.

FIG. 1 depicts a right side view of a motorcycle 1 on which a power unit 3 of Example 1A including an intake structure for an internal combustion engine of Embodiment 1 of the present invention is mounted.

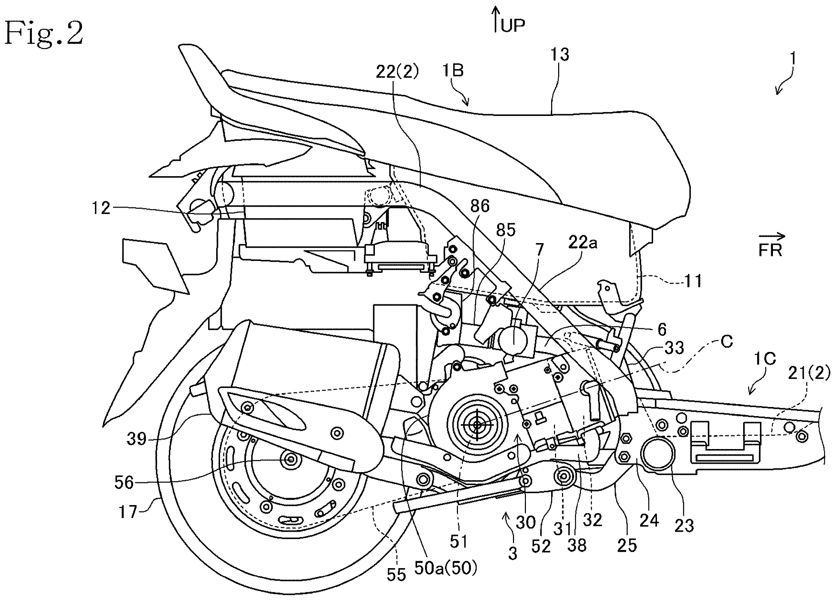

In addition, FIG. 2 depicts a rear portion right side view in a state in which a body cover 10 of the motorcycle 1 of FIG. 1 has been detached.

Note that FIGS. 1 and 2 will be similarly referred to also in Embodiment 2 described later.

The motorcycle 1 according to Embodiment 1 is a so-called scooter type motorcycle, in which a vehicle body front portion 1A and a vehicle body rear portion 1B are connected through a low floor section 1C, and a body frame 2 serving as a skeleton of the vehicle body is composed generally of a down tube 21 and a main pipe 22 (see FIG. 2).

Specifically, the down tube 21 extends downward from a head pipe 20 of the vehicle body front portion 1A, the down tube 21 is bent horizontally at a lower end thereof and extends rearward on the lower side of the floor section 1C. As depicted in FIG. 2, at a rear end of the down tube 21, a pair of left and right main pipes 22 are connected through a connection frame 23 disposed in the vehicle width direction. The main pipes 22 rise obliquely rearward as inclined sections 22a from the connection frame 23, are bent such as to moderate the inclination at intermediate portions and extend rearward.

On the upper side of the inclined sections 22a of the main pipes 22, an accommodation box 11 and a fuel tank 12 are supported. The accommodation box 11 and the fuel tank 12 are covered by a rider seat 13 mounted on the upper side of them, and the lower side of the rider seat 13 inclusive of the accommodation box 11 and the fuel tank 12 is covered with the body cover 10.

On the other hand, at the vehicle body front portion 1A, a handlebar 14 is provided on an upper side while shaft-supported by the head pipe 20, a front fork 15 extends on a lower side, and a front wheel 16 is shaft-supported on a lower end of the front fork 15.

As a rear portion right side view of the motorcycle 1 with the body cover 10 detached therefrom is illustrated in FIG. 2, a bracket 24 is projectingly provided in the vicinity of lower ends of the inclined sections 22a of the main pipes 22, and the power unit 3 of Example 1A is oscillatably linked to and supported by the bracket 24 through a link member 25.

Of the power unit 3 of Example 1A, a front portion is a single-cylinder 4-stroke-cycle air-cooled internal combustion engine (hereinafter referred to simply as "internal combustion engine") 30. The power unit 3 is in a posture in which a crankshaft 51 is disposed in the vehicle width direction and rotatably supported at a front portion of a power unit case 50 constituting a crankcase section 50a, and a cylinder axis C is largely inclined forward into a state of being nearly horizontal. An end portion of a hanger arm 52 projecting forward from a lower end of the power unit case 50 is vertically oscillatably linked through the link member 25 attached to the bracket 24 of the main pipes 22.

A cylinder block 31, a cylinder head 32 and a cylinder head cover 33 which constitute the internal combustion engine 30 are fastened to the power unit 3 in the manner of being sequentially piled up, while being largely inclined forward nearly horizontally at a front portion of the power unit case 50 constituting the crankcase section 50a. In addition, a power transmission case section 55 including a belt-type continuously variable transmission and the like integrally extends from the crankcase section 50a to a left rear side, a rear axle 56 as an output shaft of the power unit 3 is provided at a rear portion thereof, and a rear wheel 17 is mounted to the rear axle 56.

In other words, the power unit 3 is a so-called swing unit, with a rear cushion (not illustrated) interposed between the power transmission case section 55 at a rear portion of the power unit 3 and rear portions of the main pipes 22.

As depicted in FIG. 2, at an upper portion of the power unit 3, an inlet pipe 6 extends from an upper portion of the cylinder head 32 largely inclined forward of the internal combustion engine 30 and is bent rearward, the throttle body 7 connected to the inlet pipe 6 is located on an upper side of the cylinder block 31, and an air cleaner device 86 connected to the throttle body 7 through a connecting tube 85 is disposed on an upper side of the power transmission case section 55.

On the other hand, an exhaust pipe 38 extending downward from a lower portion of the cylinder head 32 is bent rearward, extends rearward while tending to be located on the right side, and is connected to a muffler 39 on the right side of the rear wheel 17.

FIG. 3 is a side sectional view of the power unit 3, taking out the power unit 3 of FIG. 2 and depicting the power unit 3 in an orientation substantially the same as in FIG. 2.

Of the internal combustion engine 30 in the power unit 3, sections on a left half side of the cylinder block 31, the cylinder head 32 and the cylinder head cover 33 are illustrated, and a left case half 50L of the power unit case 50 is depicted in a state in which a mating surface 50b for mating with a right case half (not illustrated) is directed to the viewer's side of the drawing.

The power unit case 50 is configured by uniting the left case half 50L and the right case half (not illustrated) which are divided to the left and right sides. The right case half constitutes a right half of the crankcase section 50a, whereas the left case half 50L has a front portion constituting a left half of the crankcase section 50a, and is extended rearward to form the power transmission case section 55 accommodating a power transmission device including the long belt type continuously variable transmission (not illustrated) and a speed reduction gear mechanism 57 and the like between the crankshaft 51 and the rear axle 56 of the rear wheel 17 along the longitudinal vehicle direction.

The speed reduction gear mechanism 57 is accommodated in the inside of a right-side opening surface 55R of a rear portion of the power transmission case section 55, and is covered with a speed reducer case (not illustrated). An output shaft of the speed reduction gear mechanism 57 is the rear axle 56 of the rear wheel 17.

Rotational power of the crankshaft 51 in the crankcase section 50a of the internal combustion engine 30 is transmitted to the rear wheel 17 through the belt-type continuously variable transmission and the speed reduction gear mechanism 57 in the power transmission case section 55.

A piston 34 reciprocating in a cylinder bore 31a of the cylinder block 31 is linked to a crank pin 51a of the crankshaft 51 of the crankcase section 50a by a connecting rod 35.

A combustion chamber 36 is configured between a top surface 34a of the piston 34 slidably fitted in the cylinder bore 31a of the cylinder block 31 and a combustion chamber ceiling surface 32a of the cylinder head 32 that faces the top surface 34a.

In Example 1A, the internal combustion engine 30 adopts a two-valve system of a single overhead camshaft (SOHC) type, and a valve train 9 is provided in the cylinder head 32. The cylinder head cover 33 is put over the cylinder head 32 in such a manner as to cover the valve train 9.

For transmission power to the valve train 9 in the cylinder head cover 33, an endless-form cam chain (not illustrated) is arranged between a cam shaft 91 and the crankshaft 51 while passing through a cam chain chamber (not illustrated) provided on one side in regard of the direction of the crankshaft 51 of the crankcase section 50a, the cylinder block 31 and the cylinder head 32, and the cam shaft 91 is rotated synchronously with, and at 1/2 times the rotating speed of, the crankshaft 51.

Note that in the cylinder head 32, an ignition plug (not illustrated) is fitted and inserted from the opposite side (the other side in regard of the direction of the crankshaft 51) of the cam chain chamber toward the inside of the combustion chamber 36.

As illustrated in FIG. 3 and FIG. 4 which is an enlarged view of a major part of FIG. 3, in the cylinder head 32 with the cylinder axis C largely inclined forward nearly horizontally, an intake port 42 and an exhaust port 43 are formed to extend, from an intake valve port 40 and an exhaust valve port 41 opened in the combustion chamber ceiling surface 32a, while bending in directions for vertically spacing from each other.

An upstream end of the intake port 42 opens toward an upper side of the cylinder head 32, and is connected to the inlet pipe 6 to configure a continuous intake flow path 80, and the throttle body 7 is connected to the upstream side of the inlet pipe 6.

A downstream end of the exhaust port 43 opens toward a lower side of the cylinder head 32, and is connected to the exhaust pipe 38 (see FIG. 2).

A cylindrical intake valve guide 44 is integrally fitted to a curve outer wall section 42a of the intake port 42 in the cylinder head 32, and an intake valve 46 slidably supported by the intake valve guide 44 opens and closes the intake valve port 40 fronting on the combustion chamber 36 of the intake port 42.

In addition, an exhaust valve 47 slidably supported by an exhaust valve guide 45 integrally fitted to a curve outer wall section 43a of the exhaust port 43 in the cylinder head 32 opens and closes an exhaust valve port 41 fronting on the combustion chamber 36 of the exhaust port 43.

The intake valve 46 and the exhaust valve 47 are biased upward by a valve spring 48 such that their valve head portions 46a and 47a close the intake valve port 40 and the exhaust valve port 41 both fronting on the combustion chamber 36. As illustrated in FIG. 3, stem ends 46b and 47b of the intake valve 46 and the exhaust valve 47b are pressed downward by an intake rocker arm 94 and an exhaust rocker arm 95 oscillated in contact with an intake cam 92 and an exhaust cam 93 of the cam shaft 91, and the intake valve 46 and the exhaust valve 47 are opened at predetermined timings to establish communication between the intake port 42 and the combustion chamber 36 and between the exhaust port 43 and the combustion chamber 36, whereby intake and exhaust are performed at predetermined timings.

In the internal combustion engine 30 of Example 1A as above, an intake structure for giving a tumble flow ("tumble flow" in the present invention) T, or vertical rotation, of a fuel-air mixture in the combustion chamber 36 is configured for the purpose of obtaining better combustion in the combustion chamber 36.

Specifically, to an upstream end of the intake port 42 of the internal combustion engine 30, the inlet pipe 6 is connected through an insulator 61, whereby the intake flow path 80 having a roughly circular continuous sectional shape is configured, and the throttle body 7 is connected to the upstream side of the inlet pipe 6.

The throttle body 7 has the intake passage 70 which has a roughly circular sectional shape and constitutes part of the intake flow path 80 continuous with the combustion chamber 36 of the internal combustion engine 30, and the upstream side of the throttle body 7 is connected to the air cleaner device 86 (see FIG. 2) through the connecting tube 85.

The throttle body 7 is provided with a throttle valve 75 which is rotatably supported in the throttle body 7 by a throttle valve shaft 76, disposed substantially horizontally while perpendicularly intersecting an intake air flow direction F of the intake passage 70, in other words, perpendicularly intersecting the center axis X of the intake passage 70, controls variably the flow path area of the intake passage 70, and can open and close the intake passage 70.

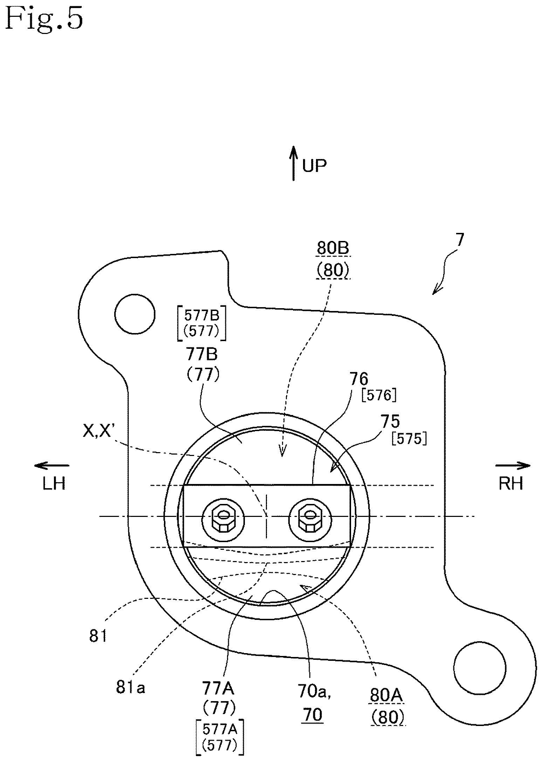

As illustrated in FIG. 5 which is an upstream-side front view of the throttle body 7, taken along arrows V-V of FIG. 4, the throttle valve 75 is of a butterfly type, and has the throttle valve shaft 76 and a disk-shaped valve body 77 fixed to the throttle valve shaft 76 and rotated as one body with the throttle valve shaft 76. The valve body 77 is bisected on both sides of the throttle valve shaft 76 into a half disk-shaped one-end-side half 77A on one side and a half disk-shaped other-end-side half 77B on the other side.

The throttle valve 75 can be rotated clockwise in a valve-opening direction in FIGS. 3 and 4 by a driver's operation or the like. The valve body 77 is biased counterclockwise in a valve-closing direction by a return spring (not illustrated) to be located in a full-closed position such that the rotating one-end-side half 77A contacts the inner surface 70a of the intake passage 70 and the rotating other-end-side half 77B contacts the inner surface 70a of the intake passage 70.

In Example 1A, the intake passage 70 of the throttle body 7 is disposed substantially horizontally, a lower-end-side valve body is the one-end-side half 77A, and an upper-end-side valve body is the other-end-side half 77B.

In Example 1A, the intake flow path 80 is divided along the intake air flow direction by the partition section 81 continuously from the inlet pipe 6 to the intake port 42, and is partitioned into a tumble flow path 80A configured such that intake air passed therethrough generates the tumble flow T in the combustion chamber 36, and a main flow path 80B other than the tumble flow path 80A.

In the present invention, the "tumble flow path" is an intake air flow path for generating the tumble flow T in the combustion chamber 36 at the time of a slight opening position of the throttle valve 75, in other words, at the time of a low load on the internal combustion engine 30.

In Example 1A, the lower-side portion of the intake flow path 80 partitioned by the partition section 81 is the tumble flow path 80A, and the upper-side portion is the main flow path 80B, but their upper-lower disposition is not limitative in the present invention.

In addition, herein the "upper, lower" regarding the intake flow path 80, the intake passage 70 and the throttle valve 75 is such that in the direction of the cylinder axis C, the direction of the cylinder head 32 or the cylinder head cover 33 is "upper" and the direction of the crankshaft 51 is "lower," and is not meaning the absolute "upper, lower" on a spatial basis.

The partition section 81 is configured by an inlet pipe side partition section 81A, an insulator side partition section 81B and an intake port side partition section 81C which are located in succession from the upstream side toward the downstream side of the intake air flow.

As depicted in FIG. 5, the main flow path 80B on the upper side in the drawing and the tumble flow path 80A on the lower side in the drawing are formed by partitioning the intake flow path 80 on the downstream side of the throttle valve 75 vertically in the drawing by the longitudinal partition section 81 over a range from the inlet pipe 6 to the intake port 42, and are each defined to have a roughly circular sectional shape.

Note that a surface, in the width direction of the intake flow path 80, of the partition section 81 and the throttle valve shaft 76 are parallel to each other.

Therefore, an inlet opening 80Aa of the tumble flow path 80A of the intake flow path 80 of the inlet pipe 6 connected to the downstream side of the intake passage 70 of the throttle body 7 is located and opens on the downstream side of the one-end-side half 77A of the throttle valve 75, whereas an inlet opening 80Ba of the main flow path 80B is located and opens on the downstream side of an other end portion 71B of the throttle valve 75.

Note that a fuel injection valve 87 externally penetrating the main flow path 80B from above and disposed such as to inject and supply a fuel toward the intake valve port 40 is attached to the inlet pipe 6.

While the fuel injection valve 87 is disposed at the inlet pipe 6 in the present embodiment, a direct injection structure may also be adopted in which the fuel injection valve 87 is disposed at the cylinder head 32 or the cylinder block 31 and injects the fuel into the combustion chamber 36.

In addition, as illustrated in FIG. 4, a downstream-side end portion 81b of the partition section 81, in other words, the downstream-side end portion 81b located in the intake port 42 of the cylinder head 32 is integrally formed while bent toward the cylinder block 31 side in the cylinder head 32, and a final end 80Ab of the tumble flow path 80A is formed to be directed to the combustion chamber ceiling surface 32a of the cylinder head 32.

For this reason, the intake air flowing in the tumble flow path 80A can be caused to flow into the cylinder bore 31a after passing on the upper side of the valve head portion 46a of the intake valve 46 as indicated by small arrow in FIG. 4, and, therefore, it is ensured that a tumble flow T is easily generated in the combustion chamber 36. In this way, the tumble flow path 80A is configured such that the intake air passed therethrough will easily generate a tumble flow T.

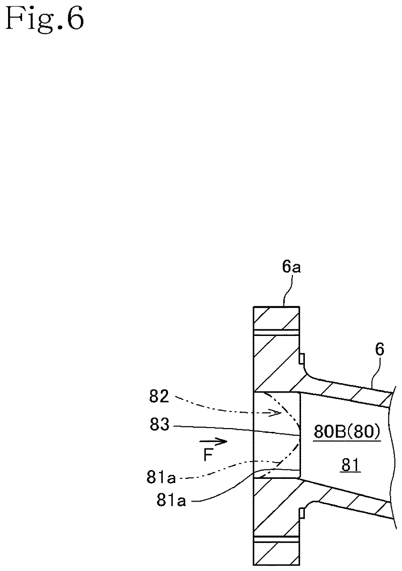

FIG. 6 is a sectional view taken along arrow VI of FIG. 4, and depicts an upstream-side end portion 81a of the partition section 81.

The upstream-side end portion 81a may be rectilinearly formed vertically to the intake air flow direction F, as indicated by solid line in FIG. 6, but may also be formed to have a cutout recess 82 recessed to the downstream side toward a flow path width directional center 83, as indicated by alternate long and two short dashes line. In that case, the area where the intake air flowing into the intake flow path 80 impinges on the partition section 81 gradually increases, and, therefore, changes in the pressure and velocity of the intake air are moderated, and flow rate loss can be reduced.

The cutout recess 82 can be adopted not only in a structure in which the upstream-side end portion 81a of the partition section 81 is located inside the inlet pipe 6 as in Example 1A but also in a structure in which the upstream-side end portion 81a is located inside the intake port 42 as indicated in other Examples, and similar effects can be obtained.

In both cases, "L" in "the partition section depth position L/D" described later is the distance from the flow path width directional center 83 of the upstream-side end portion 81a of the partition section 81 to the center of the throttle valve shaft 76 in the direction of the center axis X' of the intake flow path 80.

In a conventional device, generally, a TCV ("intake air proportion varying member" in the present invention) for guiding the intake air when the throttle valve is in a slight opening position to the tumble flow path is provided on the downstream side of the throttle valve controlling the intake flow rate. In the present invention, on the other hand, the TCV is not provided, and a barrier or a guide is not particularly provided in the intake flow path 80 or the intake passage 70, but it is ensured that much intake air can be guided to the tumble flow path 80A when the throttle valve 75 is slightly opened at the time of a low load on the internal combustion engine 30, and the intake air can be guided to the tumble flow path 80A and the main flow path 80B, without any trouble, according to the position (throttle position) of the throttle valve 75 at the time of a high load on the internal combustion engine 30.

Note that "slight opening" described in the present invention as described in the claims and in the embodiments means a throttle position in the range from full closure of the throttle valve to a predetermined position at the time of a low load on the internal combustion engine, and can be set arbitrarily according to the characteristics of the internal combustion engine under low load. In this embodiment, a region ranging from the full closure of the throttle valve to a throttle position of 30% is assumed, but this throttle position is not limitative. For example, it may be set, as required, to a throttle position which is used frequently, according to the driver's operation characteristics and road conditions.

The characteristic feature of the present invention is found out from the present inventors' extensive and intensive research, and is not found from the viewpoint of using the conventional device similarly to the conventional use. With the throttle valve 75 and the partition section 81 configured in a specified setting as indicated in this embodiment, the inflow of intake air into the main flow path 80B can be restrained by the throttle valve 75 in a region ranging from the full closure of the throttle valve 75 to a slight opening state. In addition, the flow of intake air can be localized and guided to the tumble flow path 80A, and the tumble flow T in the combustion chamber 36 can be strengthened.

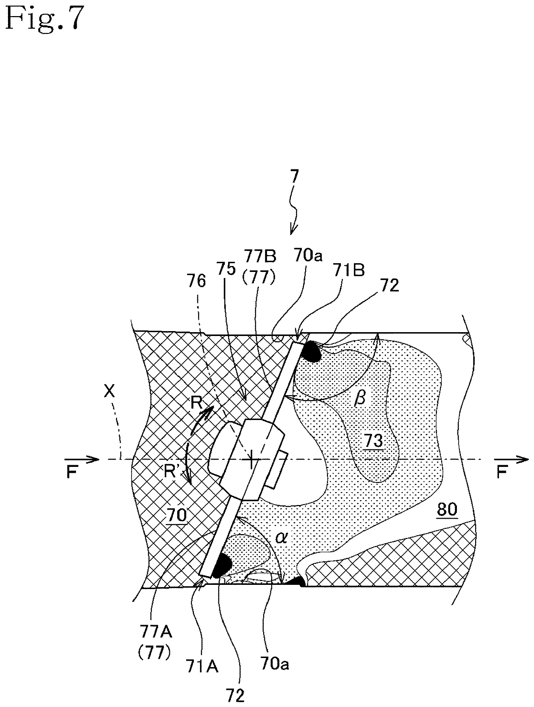

As depicted in FIG. 7 which illustrates a section, including the center axis X of the intake passage 70 and perpendicular to the throttle valve shaft 76, of a part in the vicinity of the throttle valve 75 of the throttle body 7 of this embodiment, in this embodiment, the throttle valve 75 can be rotated clockwise R in a valve-opening direction in the drawing. In addition, in a full-closed position where the throttle valve 75 is biased counterclockwise R', the valve body 77 of the throttle valve 75 is positioned in a state in which the rotating one-end-side half 77A contacts the inner surface 70a on the lower side in the drawing of the intake passage 70, whereas the rotating other-end-side half 77B contacts the inner surface 70a on the upper side in the drawing of the intake passage 70.

The one-end-side half 77A of the throttle valve 75 in the full-closed position is such that its contact angle α with the inner surface 70a of the intake passage 70 on the downstream side of the intake air flow direction F is an acute angle, whereas the other-end-side half 77B of the throttle valve 75 is such that its contact angle β with the inner surface 70a of the intake passage 70 on the downstream side of the intake air flow direction F is an obtuse angle.

When the throttle valve 75 is moved from the full-closed position in such a state to a slight opening position, the intake air passes from the upstream side of the intake passage 70 through a gap (hereinafter referred to as "acute angle side gap") 71A formed between the one-end-side half 77A and the inner surface 70a of the intake passage 70 and through a gap (hereinafter referred to as "obtuse angle side gap") 71B formed between the other-end-side half 77B and the inner surface 70a of the intake passage 70, and then flows from the downstream side of the intake passage 70 to the intake flow path 80.

A strong negative pressure is generated in the immediate downstream parts 72 (black parts in the drawing) of the acute angle side gap 71A and the obtuse angle side gap 71B, and a wide negative pressure region 73 (dot hatched part in the drawing) is generated in a range on the downstream side of the throttle valve 75 inclusive of the throttle valve shaft 76.

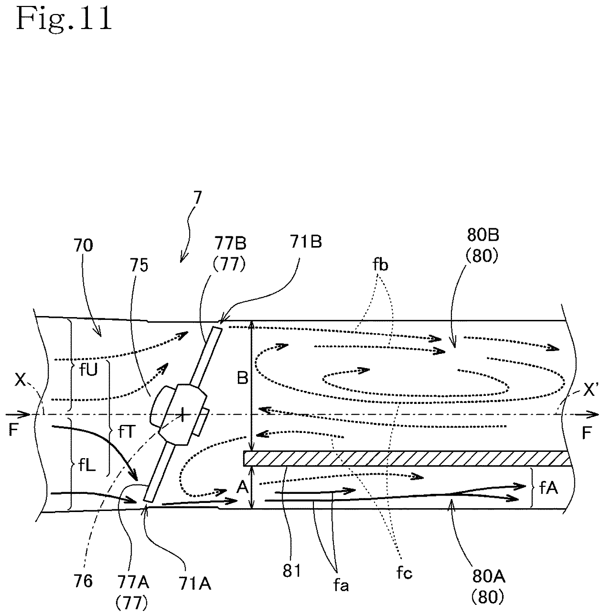

Here, similarly to illustration in FIG. 11 described later, the intake flow path 80 on the downstream side of the throttle valve 75 is partitioned by the partition section 81 having a surface parallel to the throttle valve shaft 76 along the intake air flow direction F, into the two flow paths 80B and 80A which are respectively larger and smaller in sectional area, the flow path B on the side of larger sectional area is disposed on the downstream side of the other-end-side half 77B, and the flow path A on the side of smaller sectional area is disposed on the downstream side of the one-end-side half 77A. With such a configuration, at the time of slight opening of the throttle valve 75, or at the time of a low load on the internal combustion engine 30, the vigor of the intake air passing through the throttle valve 75 and flowing into the flow path 80B of larger sectional area is liable to be attenuated, and the intake air having flowed into the flow path 80B of larger sectional area while having lost its vigor is induced by the negative pressure generated in the immediate downstream parts (black parts in the drawing) of end portions of the one-end-side half 77A and the other-end-side half 77B of the throttle valve 75, and flows back toward the upstream side.

Then, the intake air thus flowing back is induced by the negative pressure generated in the immediate downstream part 72 of the one-end-side half 77A on the side of the flow path 80A of smaller sectional area, and flows into the flow path 80A of smaller sectional area together with the intake air having passed the throttle valve 75, so that the quantity of the intake air flowing in the flow path 80A is increased.

From the foregoing, the present inventors have found out that by causing the flow path 80B of larger sectional area to be a main flow path and causing the flow path 80A of smaller sectional area to be a tumble flow path, in other words, by setting the sectional area of the main flow path 80B larger than the sectional area of the tumble flow path 80A, the intake air having once flowed into the main flow path 80B can be guided into the tumble flow path 80A.

Thus, when the sectional area of the main flow path 80B is set greater than the sectional area of the tumble flow path 80A, the intake air having once flowed into the main flow path 80B can be guided into the tumble flow path 80A, and the tumble flow T in the combustion chamber 36 can be strengthened, without providing a TCV. In addition, the device configuration of the intake structure of the internal combustion engine 30 can be simplified, and it is possible to reduce the number of component parts and reduce cost, as compared to the case where a TCV is provided.

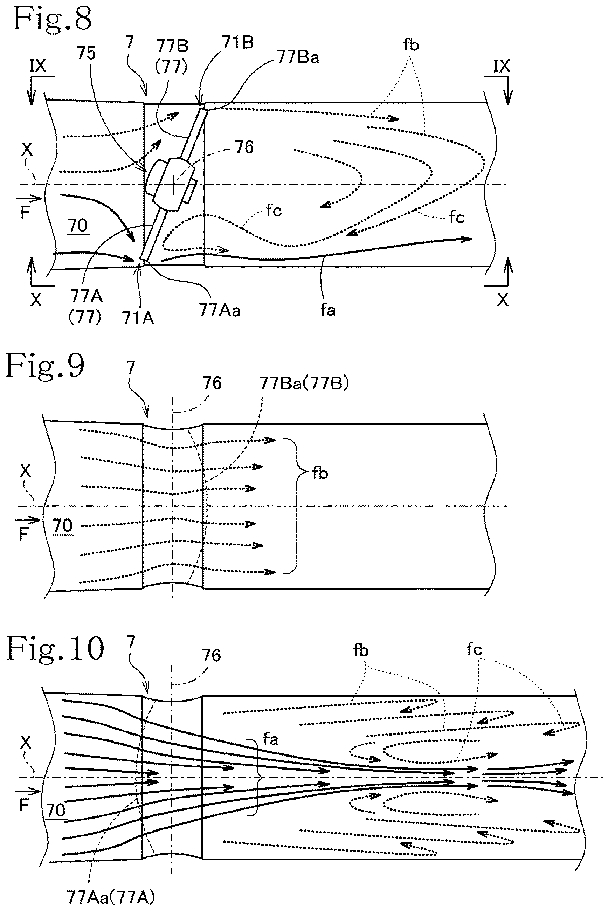

FIG. 8 schematically depicts the flow of intake air when the throttle valve 75 is positioned in the slight opening position in FIG. 7, in sectional view perpendicular to the throttle valve shaft 76 and along the center axis X of the intake passage 70.

FIG. 9 schematically depicts the flow of intake air when the intake passage 70 is viewed from above, corresponding to a view along arrows IX-IX of FIG. 8.

FIG. 10 schematically depicts the flow of intake air when the intake passage 70 is viewed from below, corresponding to a view along arrows X-X of FIG. 8.

In the figures, the solid-line arrows indicate the flow of intake air having flowed on the lower side in FIG. 8 as compared to the center axis X of the intake passage 70, or on the side of the one-end-side half 77A, on the upstream side of the throttle valve 75, whereas the broken-line arrows indicate the flow of intake air having flowed on the upper side in FIG. 8 as compared to the center axis X of the intake passage 70, or on the side of the other-end-side half 77B, on the upstream side of the throttle valve 75.

According to the further finding from the present inventors' extensive and intensive research, as depicted in FIG. 10, it has been found out that the intake air passing through the acute angle side gap 71A of the one-end-side half 77A of the throttle valve 75 generates a converging flow fa.

In addition, it has been found out that the intake air passing through the obtuse angle side gap 71B of the other-end-side half 77B of the throttle valve 75 generates a diverging flow fb.

The intake air having passed through the acute angle side gap 71A flows downstream as a strong converging flow fa, whereas the intake air having passed through the obtuse angle side gap 71B spreads as a diverging flow fb into a wide negative-pressure region 73 inclusive of the downstream side of the throttle valve shaft 76, and part thereof flows back as fc in the figure, and joins the converging flow fa having passed through the acute angle side gap 71A.

It has been found that this tendency does not change even when the partition section 81 is inserted on the downstream side of the throttle valve 75.

In this embodiment, from the aforementioned findings, the partition section 81 is disposed in the intake flow path 80 connected to the downstream side of the throttle valve 75, to partition the intake flow path 80 along the intake air flow direction F, the tumble flow path 80A is disposed on the acute angle side gap 71A side, in other words, on the downstream side of the one-end-side half 77A of the throttle valve 75, whereas the main flow path 80B is disposed on the obtuse angle side gap 71B side, in other words, on the downstream side of the other-end-side half 77B of the throttle valve 75, and, at the time of slight opening of the throttle valve 75, the back flow fc in the main flow path 80B is introduced in a joining manner, whereby the intake is caused to flow in a localized manner into the tumble flow path 80A.

In this case, even in the case where as viewed in the intake air flow direction, the distance from the one-end-side half 77A to the partition section 81 is greater than the distance from the other-end-side half 77B to the partition section 81, at the time of slight opening of the throttle valve 75, or at the time of a low load on the internal combustion engine 30, the converging flow fa of intake air is generated at a peripheral edge 77Aa of the one-end-side half 77A of the throttle valve 75 where the downstream side forms the acute angle $\alpha$ with the inner surface 70a of the intake passage 70, whereas the diverging flow fb of intake air is generated at a peripheral edge 77Ba of the other-end-side half 77B of the throttle valve 75 where the downstream side forms the obtuse angle $\beta$ with the inner surface 70a of the intake passage 70. Therefore, by taking the back flow fc of the diverging flow fb into the converging flow fa and guiding it into the tumble flow path 80A, the quantity of intake air flowing in the tumble flow path 80A can be increased.

FIG. 11 schematically depicts a state in which the partition section 81 is provided, in a sectional view similar to FIG. 8.

As illustrated in FIG. 11, the intake passage 70 and the intake flow path 80 are continuous with each other, with their center axis X and center axis X' coincident with each other. In this embodiment, by the partition section 81 located on the acute angle side gap 71A side on the lower side in the figure as compared to the center axis X of the intake passage 70, in other words, on the one-end-side half 77A side of the throttle valve 75, the intake flow path 80 was partitioned into the tumble flow path 80A on the lower side in the figure and the main flow path 80B on the upper side in the figure, and the distribution of intake air at the time of slight opening of the throttle valve 75 was confirmed.

As a result, in the case where the ratio A:B of the sectional area A of the tumble flow path 80A to the sectional area B of the main flow path 80B is 2:8, when the proportion of intake air fU flowing through an upper half in the figure as compared to the center axis X of the intake passage 70 on the upstream side of the throttle valve 75 to the total intake air fT was 52%, whereas the proportion of intake air fL flowing through a lower half in the figure as compared to the center axis X to the total intake air fT was 48%, it was confirmed that after passage through the throttle valve 75 in a slight opening state of a position of 15%, the proportion of intake air fA flowing through the tumble flow path 80A on the downstream side of the acute angle side gap 71A to the total intake air fT, in other words, tumble flow path flow rate ratio (fA/fT), is approximately 81%, finding that the intake air can be made to flow in a sufficiently localized manner in the tumble flow path 80A.

Note that it was also revealed that if the partition section 81 is disposed on the too upper side to set the ratio A:B excessively high, or is disposed on the too lower side to set the ratio A:B excessively low, the tumble flow path flow rate ratio (fA/fT) is lowered.

Thus, it was found that much intake air can be guided into the tumble flow path 80A at the time of slight opening of the throttle valve 75 at the time of a low load on the internal combustion engine 30, and the tumble flow T in the combustion chamber 36 at the time of a low load can be strengthened, without providing the aforementioned conventional TCV.

In addition, since it is unnecessary to particularly provide a barrier or a guide in the intake flow path 80 or the intake passage 70 on the front or rear side of the throttle valve 75, the intake air can be guided, without any trouble, to the main flow path 80B and the tumble flow path 80A according to the position of the throttle valve 75 at the time of a high load on the internal combustion engine.

According to the intake structure for the internal combustion engine of the present invention thus described in Embodiment 1, at the time of slight opening of the throttle valve 75, or at the time of a low load on the internal combustion engine 30, a negative pressure is generated and a converging flow fa of intake air is generated at the peripheral edge 77Aa of the one-end-side half 77A of the throttle valve 75 where the downstream side forms the acute angle $\alpha$ with the inner surface 70a of the intake passage 70, whereas a negative pressure is generated and a diverging flow fb of intake air is generated at the peripheral edge 77Ba of the other-end-side half 77B of the throttle valve 75 where the downstream side forms the obtuse angle $\beta$ with the inner surface 70a of the intake passage 70. Therefore, a back flow fc of intake air is generated on the side of the main flow path 80B located on the downstream side of the other-end-side half 77B, and the back flow fc is guided to the tumble flow path 80A on the downstream side of the one-end-side half 77A, so that it is possible to guide the intake air to the tumble flow path 80A and to strengthen the tumble flow T in the combustion chamber 36, without providing a TCV.

Note that as illustrated in FIG. 4, in this embodiment, the tumble flow path 80A is provided on the curved inner peripheral side of the curved intake flow path 80, whereas the main flow path 80B is provided on the curved outer peripheral side of the curved intake flow path 80, the height HB in the curve radial direction of the main flow path 80B in the inlet pipe 6 is set greater than the height HA in the curve radial direction of the tumble flow path 80A in the inlet pipe 6, and the fuel injection valve 87 is disposed on the main flow path 80B side.

With the main flow path 80B thus provided on the curved outer peripheral side of the intake flow path 80, the distance between the fuel injection valve 87 and the partition section 81 can be set large and the possibility of interference of the partition section 81 with the fuel from the fuel injection valve 87 is lowered, as compared to the case where the curved outer peripheral side of the intake flow path 80 is made to be the tumble flow path 80A.

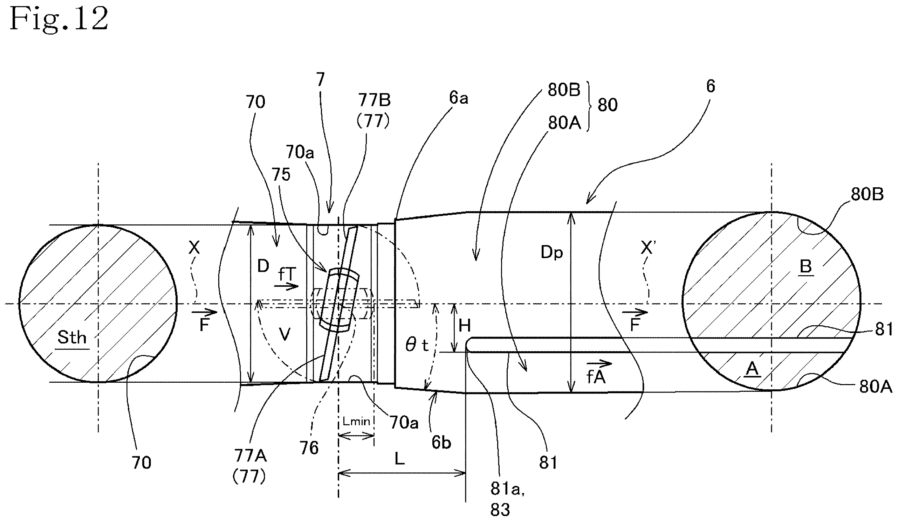

Here, FIG. 12 schematically depicts the form of the intake passage 70 on the front and rear sides of the throttle valve 75 of the throttle body 7 of this embodiment and the intake flow path 80 continuous therewith, in section orthogonal to the partition section 81 and along the center axis X' of the intake flow path 80. Note that the intake passage 70 and the intake flow path 80 are continuous with each other, with their center axes X and X' coincident with each other, and a surface in the width direction of the intake flow path 80 of the partition section 81 and the throttle valve shaft 76 are parallel to each other, so that FIG. 12 is also a figure depicting a section perpendicular to the throttle valve shaft 76 and along the center axis X of the intake passage 70. In the figure, a section of the intake flow path 80 is depicted adjacently at the right, and a section of the intake passage 70 at the position of the throttle valve 75 is depicted adjacently at the left.

As depicted in FIG. 12, the diameter Dp of the intake flow path 80 of the inlet pipe 6 connected to the downstream side of the throttle body 7 is set greater than the diameter of the intake passage 70 of the throttle body 7 at the position of the throttle valve 75, in other words, the throttle bore D.

In addition, the inlet pipe 6 is formed, from an upstream end 6a thereof toward the downstream side, with a tapered section 6b gradually enlarged in diameter toward the radially outer side.

By the difference between the diameter D and the diameter Dp, variation in flow path sectional area due to the addition of the partition section to the inside of the intake flow path 80 can be suppressed.

In addition, with the flow path sectional area of the inlet pipe 6 enlarged by the tapered section 6b gradually increased in diameter toward the radially outer side, from the upstream end toward the downstream side, variation in the flow path sectional area due to the addition of the partition section 81 can be suppressed.

In this embodiment, the taper angle is preferably 3.5 degrees, and is set to be equal to or less than 5 degrees, but the taper angle can be modified, as required, according to the structure of the partition section 81.

In FIG. 12, A is the sectional area of the tumble flow path 80A in the vicinity of the upstream-side end portion 81a of the partition section 81, B is the sectional area of the main flow path 80B in the vicinity of the upstream-side end portion 81a of the partition section 81, and Sth is the throttle bore sectional area of the intake passage 70 at the position of the throttle valve 75.

H is "partition height," and is the distance from the center axis X' of the intake flow path 80 in the vicinity of the upstream-side end portion 81a of the partition section 81 to a surface on the tumble flow path 80A side of the partition section 81.

L is "partition section depth," and is the distance in the direction of the center axis X' of the intake flow path 80 from the center of the throttle valve shaft 76 to the flow path width directional center 83 (see FIG. 6) of the upstream-side end portion 81a of the partition section 81. Note that in the case where the center axis X' of the part is curved, the distance along the curve is adopted.

V denotes the position (throttle position) of the throttle valve 75, indicating the opening ratio (%) in the range from the full-closed state (0%) to the full open state (100%).

The present inventors further analyzed under what conditions the localized flow of intake air into the tumble flow path 80A owing to the throttle valve 75 and the partition section 81 configured as above can be achieved favorably.

Specifically, in a fuel consumption measurement mode in traveling of the motorcycle 1 in a city area, normally, a throttle position of 0% to approximately 30% corresponding to the time of a low load on the internal combustion engine or the time of slight opening of the throttle valve is used. In view of this, with an intermediate throttle position of 15% as a typical position, conditions for strengthening the tumble flow T in the combustion chamber 36 at the time of a throttle opening of 15% were determined.

Let the total intake air passing through the throttle valve 75 be fT and let the intake air flowing through the tumble flow path 80A be fA, then, generally, as the ratio of the intake air fA flowing through the tumble flow path 80A to the total intake air fT, or the tumble flow path flow rate ratio (fA/fT), rises, the tumble ratio TR (the ratio of the rotating speed of the tumble flow to the rotating speed of the crankshaft) of the tumble flow T in the combustion chamber is improved. At a tumble ratio TR of equal to or more than 1.2, rapid combustion is obtained, and a fuel consumption effect appears.

Based on the fact that when the tumble flow path flow rate ratio (fA/fT) is equal to or more than 63%, the tumble ratio TR becomes equal to or more than 1.2, rapid combustion is obtained and the fuel consumption effect can be realized, the present inventors made a computational fluid dynamics (CFD) analysis in regard of throttle bore diameters D of 24 φ (diameter 24 mm), 48 φ (diameter 48 mm) and 80 φ (diameter 80 mm), with a target value of tumble flow path flow rate ratio (fA/fT) of equal to or more than 63%, and found out preferable ranges of L/D, H/D, A/Sth, and A/(A + B), as described below.

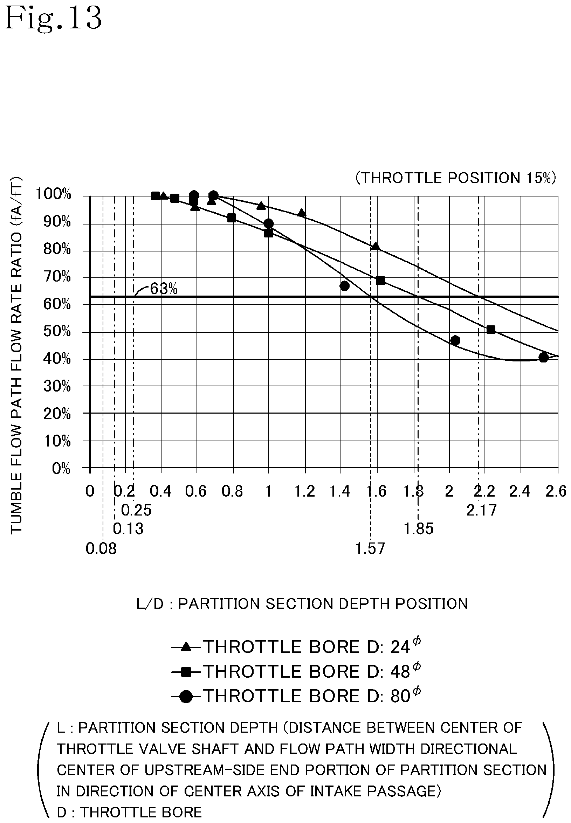

FIG. 13 depicts a graph of analytical results of the relation of "tumble flow path flow rate ratio (fA/fT)" to "L/D: partition section depth position" in the cases of throttle bores D of 24 φ, 48 φ and 80 φ, with the radio A:B of the sectional area A of the tumble flow path 80A to the sectional area B of the main flow path 80B being 2:8 and with the throttle position being 15%.

"L," "D," "fA" and "fT" are as depicted in FIG. 12 and described above.

As illustrated in the figure, the line of a throttle bore D of 80 φ represents that in the whole range between "L/D: partition section depth position" of 1.57 as an upper limit and a minimum of 0.0, the "tumble flow path flow rate ratio (fA/fT)" exceeds a target of 63%, and the tumble flow T is favorably strengthened in that range.

The line of a throttle bore D of 48 φ represents that the "tumble flow path flow rate ratio (fA/fT)" exceeds the target of 63% in the whole range from a minimum of 0.0 to an upper limit of "L/D" of 1.85, and the line of a throttle bore of 24 φ in the whole range from a minimum of 0.0 to an upper limit of "L/D" of 2.17, and the tumble flow T is strengthened more favorably in those ranges.

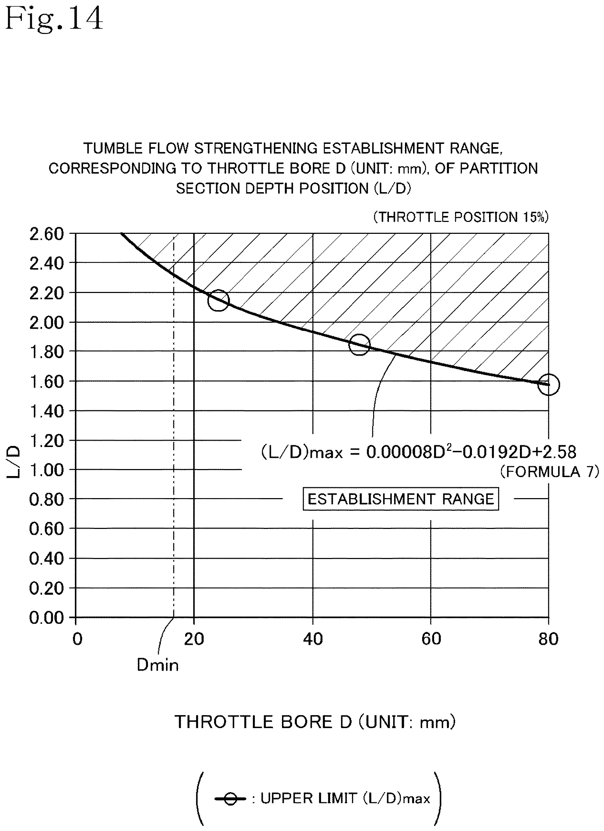

FIG. 14 is a graph depicting a tumble flow strengthening establishment range, corresponding to the throttle bore D (mm), of "L/D: partition section depth position," deduced from FIG. 13.

As depicted in FIG. 14, taking the throttle bore D (unit: mm) on the axis of abscissas, and taking "L/D: partition section depth position" on the axis of ordinates, upper limits (L/D)max of (L/D) on the basis of the throttle bores D of 24 φ, 48 φ and 80 φ were plotted.

Then, from the three points of the upper limits (L/D)max, "Formula 7" for calculating the upper limit (L/D)max of (L/D) correspondingly to the throttle bore D (unit: mm) was found out as follows.

$$(L/D)max = 0.00008D^2 - 0.0192D + 2.58...(Formula\ 7)$$

Therefore, in general, when the range of "L/D: partition section depth position" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (L/D)max indicating the tumble strengthening establishment range is obtained from Formula 7.

The lower limit for (L/D) is a minimum of 0.0 on a hydrodynamical basis.

In other words, by setting "L/D: partition section depth position" to within the range between the upper limit (L/D)max calculated by Formula 7 and the minimum of 0.0, correspondingly to the throttle bore D (unit: mm), the tumble flow path flow rate ratio (fA/fT) is increased, and the tumble flow T is strengthened favorably.

In addition, the throttle bore D (mm) has a lower limit Dmin on a production basis, and, in that case, the tumble flow strengthening establishment range is obtained for a throttle bore of equal to or more than Dmin.

Note that due to structural limitations concerning the throttle valve shaft 76 and the like, "partition section depth L" cannot be 0.0, and it may take a lower limit Lmin due to the structural limitations. In this case, (L/D) also cannot take a minimum of 0.0.

If Lmin = 6 mm irrespectively of the throttle bore D, the lower limit (L/D)min of "L/D" due to structural limitations is (Lmin/D) = 6/D, and the value is 0.08 for the throttle bore D of 80 φ, 0.13 for the throttle bore D of 48 φ, and 0.25 for the throttle bore D of 24 φ.

However, the lower limit of "L/D" due to the structural limitations is not a lower limit on a hydrodynamical basis, but is a value on a design basis that varies depending on structural conditions. In other words, the lower limit of "L/D" is that value within such a range that the valve body 77 of the throttle body 7 does not interfere with the partition section 81 when the valve body 77 rotates at which "L/D" is minimized.

As above-mentioned, let the diameter of the intake passage 70 of the throttle body 7 at the position of the throttle valve 75 be throttle bore D and let the distance from the flow path width directional center 83 of the upstream-side end portion 81a of the partition section 81 to the center of the throttle valve shaft 76 in the direction of the center axis X' of the intake flow path 80 be L, then the sectional area B of the main flow path 80B is set greater than the sectional area A of the tumble flow path 80A, and the partition section depth position LID is set in such a manner that at the time of slight opening of the throttle valve 75, or at the time of a low load on the internal combustion engine 30, the intake air passing through the throttle valve 75 and flowing in the main flow path 80B flows back, and the intake air flows into the tumble flow path 80A.

Therefore, at the time of slight opening of the throttle valve 75, or at the time of a low load on the internal combustion engine 30, the vigor of the intake air passing through the throttle valve 75 and flowing in the main flow path 80B is liable to be attenuated, and the intake air having flowed into the main flow path 80B while having lost its vigor is induced by a negative pressure generated at an immediate downstream part 72 of the throttle valve 75, and flows back toward the upstream side.

Then, the intake air flowing back through the main flow path 80B of larger sectional area is induced by a negative pressure generated in the immediate downstream part 72 on the tumble flow path 80A side, and flows into the tumble flow path 80A together with the intake air having passed through the throttle valve 75, so that the quantity of the intake air flowing through the tumble flow path 80A is increased.

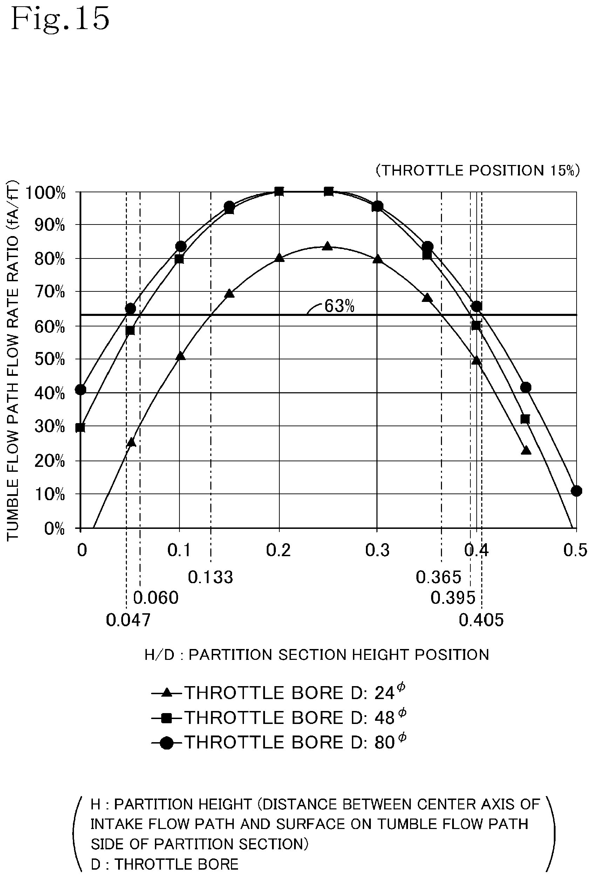

FIG. 15 is a graph of analytical results of the relation of "tumble flow path flow rate ratio (fA/fT)" to "H/D: partition section height position," in the cases where the throttle bore D is 24 φ, 48 φ and 80 φ, at a throttle position of 15%, with the partition section depth position LID being set in such a manner that at the time of slight opening of the throttle valve 75, or at the time of a low load on the internal combustion engine 30, the intake air passing through the throttle valve 75 and flowing in the main flow path 80B flows back toward the upstream side and the intake air flows into the tumble flow path 80A, as aforementioned.

"H," "D," "fA" and "fT" are as depicted in FIG. 12 and described above.

As illustrated in the figure, the line of the throttle bore D of 80 φ represents that "tumble flow path flow rate ratio (fA/fT)" exceeds a target of 63% within the whole range of (H/D) from a lower limit of 0.047 to an upper limit of 0.405, and the tumble flow T is favorably strengthened in that range.

The line of the throttle bore D of 48 φ represents that "tumble flow path flow rate ratio (fA/fT)" exceeds the target of 63%, in the whole range of (H/D) from a lower limit of 0.060 to an upper limit of 0.395, and

the line of the throttle bore D of 24 φ in the whole range of (H/D) from a lower limit of 0.133 to an upper limit of 0.365, and the tumble flow T is strengthened more favorably in those ranges.

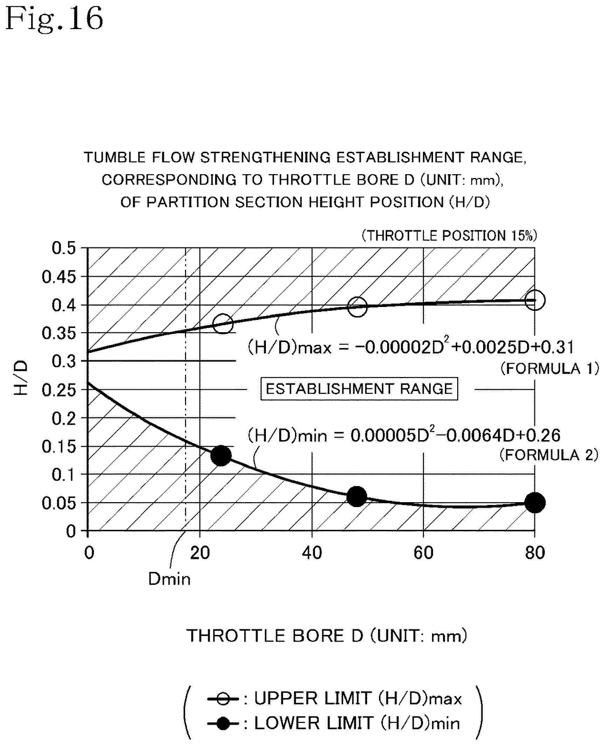

FIG. 16 is a graph depicting a tumble flow strengthening establishment range, corresponding to throttle bore D (mm), of "H/D: partition section height position," deduced from FIG. 15.

As illustrated in FIG. 16, taking the throttle bore D (unit: mm) on the axis of abscissas, and taking "H/D: partition section height position" on the axis of ordinates, upper limits (H/D)max and lower limits (H/D)min of (H/D) on the basis of the throttle bores D of 24 φ, 48 φ and 80 φ were plotted.

Then, from the three points of the upper limits (H/D)max, "Formula 1" for calculating the upper limit (H/D)max of the partition section height position: H/D correspondingly to the throttle bore D (unit: mm) was found out as follows.

$$(H/D)max = -0.00002D^2 + 0.0025D + 0.31...(Formula\ 1)$$

Similarly, from the three points of the lower limits (H/D)min, "Formula 2" for calculating the lower limit (H/D)min of the partition section height position: H/D correspondingly to the throttle bore D (unit: mm) was found out as follows.

$$(H/D)min = 0.00005D^2 - 0.0064D + 0.26...(Formula\ 2)$$

Therefore, in general, when the range of "H/D: partition section height position" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (H/D)max and the lower limit (H/D)min indicating the tumble flow strengthening establishment range are obtained from Formulas 1 and 2.

In other words, by setting "H/D: partition section height position" to within the range between the upper limit (H/D)max and the lower limit (H/D)min calculated by Formulas 1 and 2, correspondingly to the throttle bore D (unit: mm), the tumble flow path flow rate ratio (fA/fT) is increased, and the tumble flow T is strengthened favorably.

Note that the throttle bore D (mm) has a lower limit Dmin on a production basis, and, in that case, the tumble flow strengthening establishment range is obtained for a throttle bore of equal to or more than Dmin.

In addition, in the case where the throttle bore is elliptic or oblong in shape, the distance between upper and lower inner surfaces 70a of the intake passage 70 in the direction of a line passing through the center of the throttle valve shaft 76, perpendicular to the throttle valve shaft 76 and orthogonal to the upper and lower inner surfaces 70a is made to be the throttle bore D (unit: mm).

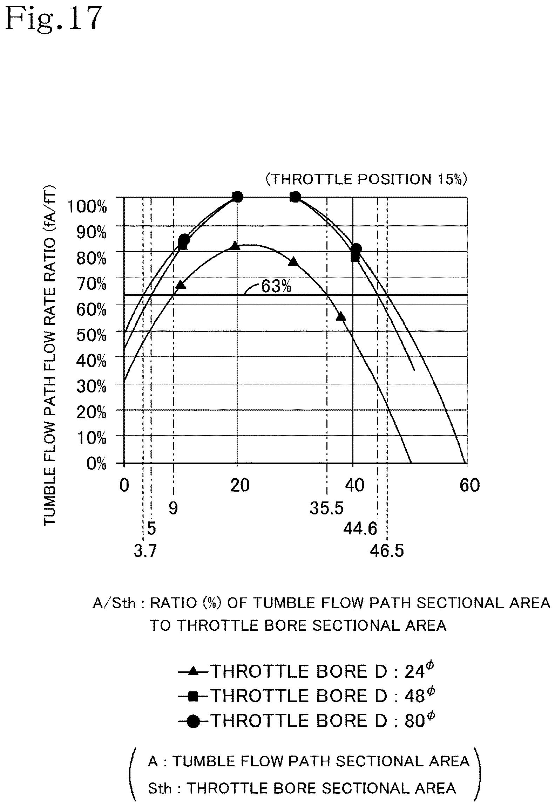

FIG. 17 is a graph of analytical results of the relation of "tumble flow path flow rate ratio (fA/fT)" to "A/Sth: the ratio (%) of tumble flow path sectional area to throttle bore sectional area," in the cases where the throttle bore D is 24 φ, 48 φ and 80 φ, at a throttle position of 15%, with the partition section depth position LID being set in such a manner that at the time of slight opening of the throttle valve 75, or at the time of a low load on the internal combustion engine 30, the intake air passing through the throttle valve 75 and flowing in the main flow path 80B flows back toward the upstream side and the intake air flows into the tumble flow path 80A, as aforementioned.

"A," "Sth," "fA" and "fT" are as depicted in FIG. 12 and described above.

As illustrated in the figure, the line of the throttle bore D of 80 φ represents that "tumble flow path flow rate ratio (fA/fT)" exceeds a target of 63% within the whole range of (A/Sth) from a lower limit of 3.7% to an upper limit of 46.5%, and the tumble flow T is favorably strengthened in that range.

The line of the throttle bore D of 48 φ represents that "tumble flow path flow rate ratio (fA/fT)" exceeds the target 63%, in the whole range of (A/Sth) from a lower limit of 5.0% to an upper limit of 44.6%, and

the line of the throttle bore D of 24 φ in the whole range of (A/Sth) from a lower limit of 9.0% to an upper limit of 35.5%, and

the tumble flow T is strengthened more favorably in those ranges.

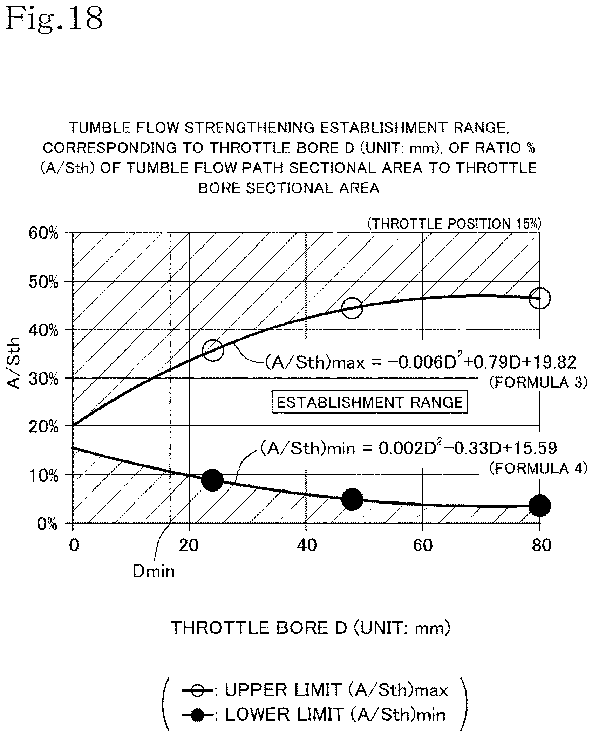

FIG. 18 is a graph depicting a tumble flow strengthening establishment range, corresponding to the throttle bore D (mm), of "A/Sth: the ratio (%) of tumble flow path sectional area to throttle bore sectional area," deduced from FIG. 17.

As illustrated in FIG. 18, taking the throttle bore D (unit: mm) on the axis of abscissas, and taking "A/Sth: the ratio (%) of tumble flow path sectional area to throttle bore sectional area" on the axis of ordinates, upper limits (A/Sth)max and lower limits (A/Sth)min of (A/Sth) on the basis of the throttle bores D of 24 φ, 48 φ and 80 φ were plotted.

Then, from the three points of the upper limits (A/Sth)max, "Formula 3" for calculating the upper limit (A/Sth)max of (A/Sth) correspondingly to the throttle bore D (unit: mm) was found out as follows.

$$(A/Sth)max = -0.006D^2 + 0.79D + 19.82...(Formula\ 3)$$

Similarly, from the three points of the lower limits (A/Sth)min, "Formula 4" for calculating the lower limit (A/Sth)min of (A/Sth) correspondingly to the throttle bore D (unit: mm) was found out as follows.

$$(A/Sth)min = 0.002D^2 - 0.33D + 15.59...(Formula\ 4)$$

Therefore, in general, when the range of "A/Sth: the ratio (%) of tumble flow path sectional area to throttle bore sectional area" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (A/Sth) and the lower limit (A/Sth)min indicating the tumble flow strengthening establishment range are obtained from Formulas 3 and 4.

In other words, by setting "A/Sth: the ratio (%) of tumble flow path sectional area to throttle bore sectional area" to within the range between the upper limit (A/Sth)max and the lower limit (A/Sth)min calculated by Formulas 3 and 4, correspondingly to the throttle bore D (unit: mm), the tumble flow path flow rate ratio (fA/fT) is increased, and the tumble flow T is strengthened favorably.

Note that the throttle bore D (mm) has a lower limit Dmin on a production basis, and, in that case, the tumble flow strengthening establishment range is obtained for a throttle bore of equal to or more than Dmin.

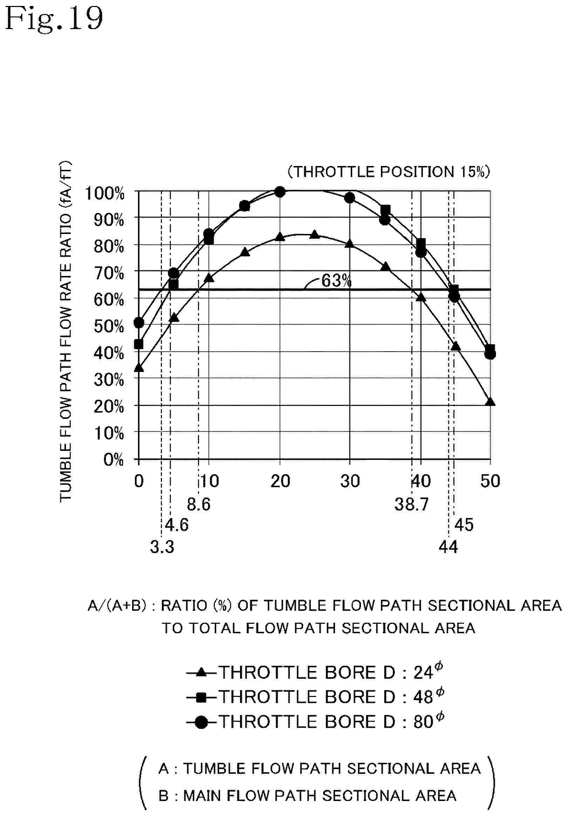

FIG. 19 is a graph of analytical results of the relation of "tumble flow path flow rate ratio (fA/fT)" to "A/(A + B): the ratio (%) of tumble flow path sectional area to total flow path sectional area," in the cases where the throttle bore D is 24 φ, 48 φ and 80 φ, at a throttle position of 15%, with the partition section depth position LID being set in such a manner that at the time of slight opening of the throttle valve 75, or at the time of a low load on the internal combustion engine 30, the intake air passing through the throttle valve 75 and flowing in the main flow path 80B flows back toward the upstream side and the intake air flows into the tumble flow path 80A, as aforementioned.

"A," "B," "fA" and "fT" are as depicted in FIG. 12 and described above.

As illustrated in the figure, the line of a throttle bore D of 80 φ represents that "tumble flow path flow rate ratio (fA/fT)" exceeds a target of 63% within the whole range of "A/(A + B)" from a lower limit of 3.3% to an upper limit of 44.0%, and the tumble flow T is favorably strengthened in that range.

The line of the throttle bore D of 48 φ represents that "tumble flow path flow rate ratio (fA/fT)" exceeds the target of 63%, in the whole range of "A/(A + B)" from a lower limit of 4.6% to an upper limit of 45.0%, and

the line of the throttle bore D of 24 φ in the whole range of "A/(A + B)" from a lower limit of 8.6% to an upper limit of 38.7%, and

the tumble flow T is strengthened more favorably in those ranges.

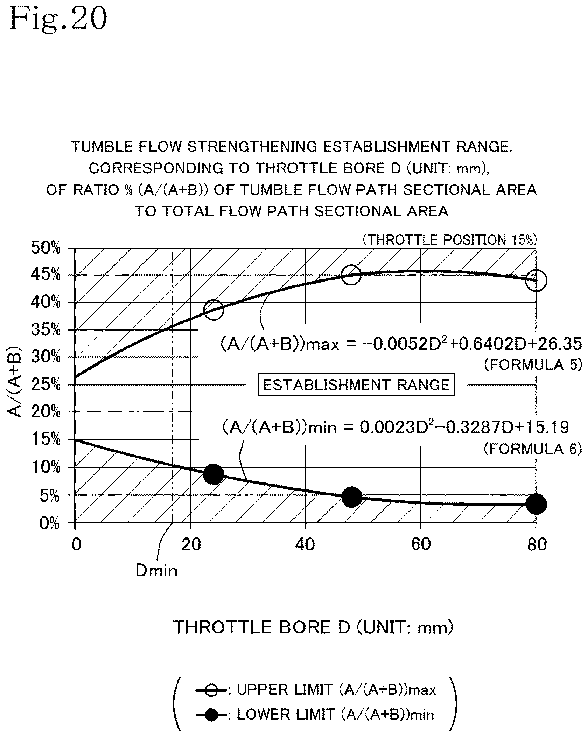

FIG. 20 is a graph depicting a tumble flow strengthening establishment range, corresponding to the throttle bore D (mm), of "A/(A + B): the ratio (%) of tumble flow path sectional area to total flow path sectional area," deduced from FIG. 19.

As illustrated in FIG. 20, taking the throttle bore D (unit: mm) on the axis of abscissas, and taking "A/(A + B): the ratio (%) of tumble flow path sectional area to total flow path sectional area" on the axis of ordinates, upper limits (A/ (A + B))max and lower limits (A/(A + B))min of (A/(A + B)) on the basis of the throttle bores D of 24 φ, 48 φ and 80 φ were plotted.

Then, from the three points of the upper limits (A/(A + B))max, "Formula 5" for calculating the upper limit (A/(A + B))max of (A/(A + B)) correspondingly to the throttle bore D (unit: mm) was found out as follows.

$$(A/(A + B))max = -0.0052D^2 + 0.6402D + 26.35...(Formula 5)$$

Similarly, from the three points of the lower limits (A/(A + B))min, "Formula 6" for calculating the lower limit (A/(A + B))min of (A/(A + B)) correspondingly to the throttle bore D (unit: mm) was found out as follows.

$$(A/(A + B))min = 0.0023D^2 - 0.3287D + 15.19...(Formula 6)$$

Therefore, in general, when the range of "A/(A + B): the ratio (%) of tumble flow path sectional area to total flow path sectional area" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (A/ (A + B))max and the lower limit (A/(A + B))min indicating the tumble flow strengthening establishment range are obtained from Formula 5 and 6.

In other words by setting "A/(A + B): the ratio (%) of tumble flow path sectional area to total flow path sectional area" to within the range between the upper limit (A/(A + B))max and the lower limit (A/(A + B))min calculated by Formulas 5 and 6, correspondingly to the throttle bore D (unit: mm), the tumble flow path flow rate ratio (fA/fT)is increased, and the tumble flow T is strengthened favorably.

Note that the throttle bore D (mm) has a lower limit Dmin on a production basis, and, in that case, the tumble flow strengthening establishment range is obtained for a throttle bore of equal to or more than Dmin.

Hereinabove, a case where the intake structure for the internal combustion engine according to Embodiment 1 of the present invention is applied to a power unit 3 constituting a swing unit has been described as Example 1A. However, the intake structure for the internal combustion engine according to Embodiment 1 of the present invention is not limited in its application to only the power unit 3 having a cylinder axis C inclined forward substantially horizontally, and is applicable to power units of other styles.

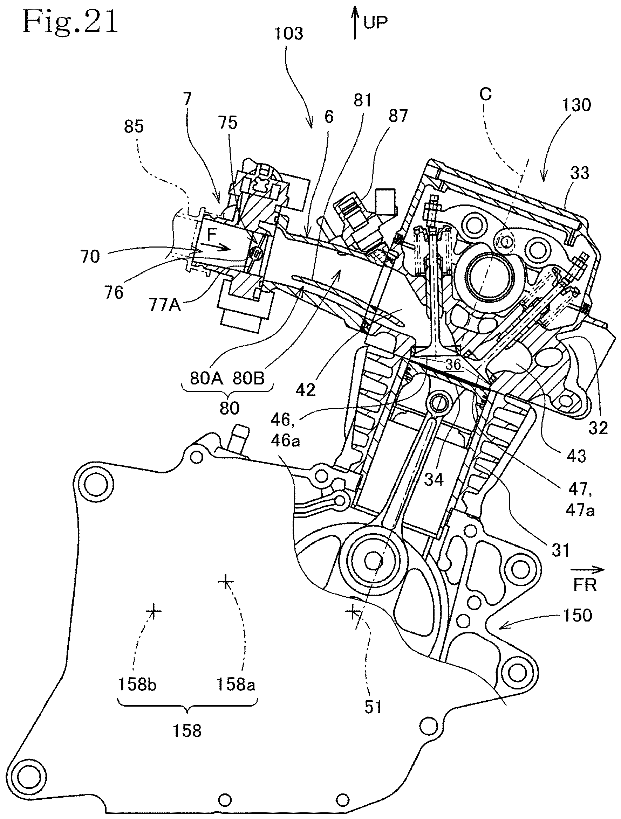

For example, the intake structure for the internal combustion engine according to the present invention produces similar effects also when applied to a power unit 103 to be mounted on a vehicle provided with an internal combustion engine with a cylinder axis C rising up as depicted in FIG. 21, or a so-called vertical type internal combustion engine 130.

This will be described below as Example 1B.

The power unit 103 of Example 1B, a right side view of which is depicted partly in section in FIG. 21, is fixed to and mounted on a body frame of a motorcycle in a posture depicted in FIG. 21. At a front portion of a power unit case 150, a cylinder block 31, a cylinder head 32 and a cylinder head cover 33 are fastened while inclined slightly forwardly upward in such a manner as to be sequentially piled up, and a crankshaft 51 is disposed in the vehicle width direction, to constitute the internal combustion engine 130.

In this Example 1B, the internal combustion engine 130 adopts an SOHC type two-valve system.

A gear transmission 158 having a main shaft 158a and a counter shaft 158b which are parallel to the crankshaft 51 is provided at a rear portion of the power unit case 150, and the counter shaft 158b serves as an output shaft.

An exhaust port 43 is opened on the front side of the cylinder head 32 and is connected to an exhaust pipe (not illustrated), and an intake port 42 is opened on the rear side of the cylinder head 32. An inlet pipe 6, a throttle body 7 and a connecting tube 85 are sequentially connected to extend rearward, or toward the upstream side in regard of the flow of intake air, and, further, the connecting tube 85 is connected to an air cleaner device (not illustrated).

The throttle body 7 is provided with a throttle valve 75 similar to that in Example 1A. A fuel injection valve 87 is provided on a main flow path 80A side of the inlet pipe 6, like in Example 1A.

An intake flow path 80 in the inlet pipe 6 and the intake port 42 is provided with a partition section 81 similarly to Example 1A, a lower end side valve body of the throttle valve 75 is a one-end-side half 77A, and a tumble flow path 80A is located on the downstream side of the one-end-side half 77A. In other words, the tumble flow path 80A is disposed on the lower side of the intake flow path 80.

Therefore, also in this Example 1B, as depicted in FIG. 21, an intake structure for an internal combustion engine of the present invention is provided similarly to Example 1A, and a similar operation and effect can be produced.

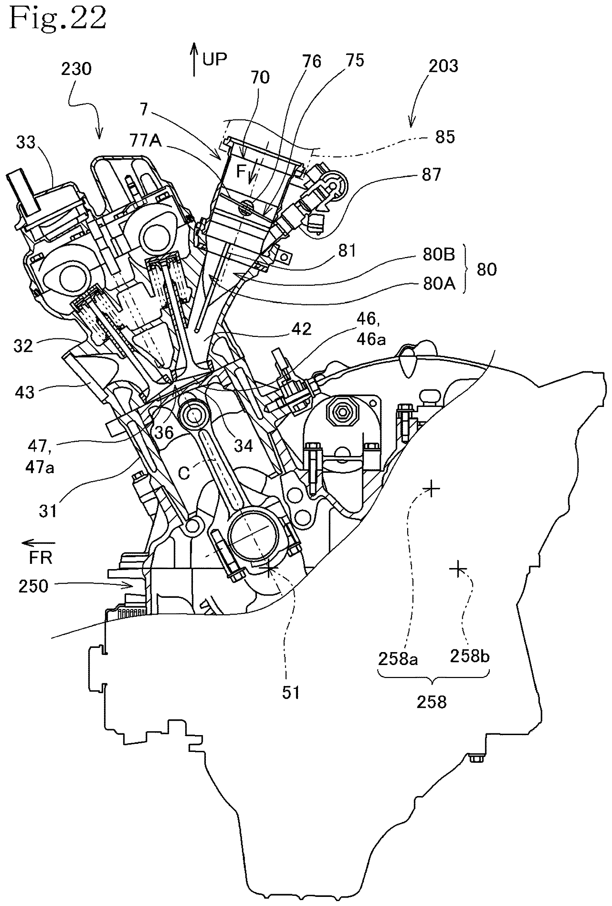

Illustrated in FIG. 22 is also a power unit 203 to be mounted on a vehicle that is provided with an internal combustion engine with a cylinder axis C rising up, or a so-called vertical type internal combustion engine 230, and the intake structure for the internal combustion engine according to Embodiment 1 of the present invention produces a similar effect when applied.

This will be described below as Example 1C.

The power unit 203 of Example 1C, a left side view of which is depicted partly in section in FIG. 22, is fixed to and mounted on a body frame of a motorcycle in a posture depicted in FIG. 22. A cylinder block 31 is provided at a front portion of a power unit case 250, a cylinder head 32 and a cylinder head cover 33 are fastened thereto while inclined slightly forwardly upward in such a manner as to be sequentially piled up, and a crankshaft 51 is disposed in the vehicle width direction, to constitute the internal combustion engine 230.

In this Example 1C, the internal combustion engine 230 is of a WOHC type.

A gear transmission 258 having a main shaft 258a and a counter shaft 258b which are parallel to the crankshaft 51 is provided at a rear portion of the power unit case 250, and the counter shaft 258b serves as an output shaft.

An exhaust port 43 is opened on the front side of the cylinder head 32 and is connected to an exhaust pipe (not illustrated), an intake port 42 which is projecting is opened toward a rear upper side of the cylinder head 32, and a throttle body 7 and an air cleaner device (not illustrated) are connected thereto to extend toward the upstream side in regard of the flow of intake air.

An intake flow path 80 in the projecting intake port 42 is partitioned by a partition section 81 along the intake air flow direction F, so that a main flow path 80B is disposed on the lower side whereas a tumble flow path 80A is disposed on the upper side.

The throttle body 7 is provided with a throttle valve 75 similar to that in Example 1A. A fuel injection valve 87 is provided on the throttle body 7, and is provided on the main flow path 80B side like in Example 1A.

In this Example 1C, an upper end side valve body of the throttle valve 75 is a one-end-side half 77A, and the tumble flow path 80A is located on the downstream side of the one-end-side half 77A.

Therefore, also in Example 1C, as depicted in FIG. 22, an intake structure for an internal combustion engine of Embodiment 1 of the present invention similar to that in Example 1A is provided, and a similar operation and effect can be produced.

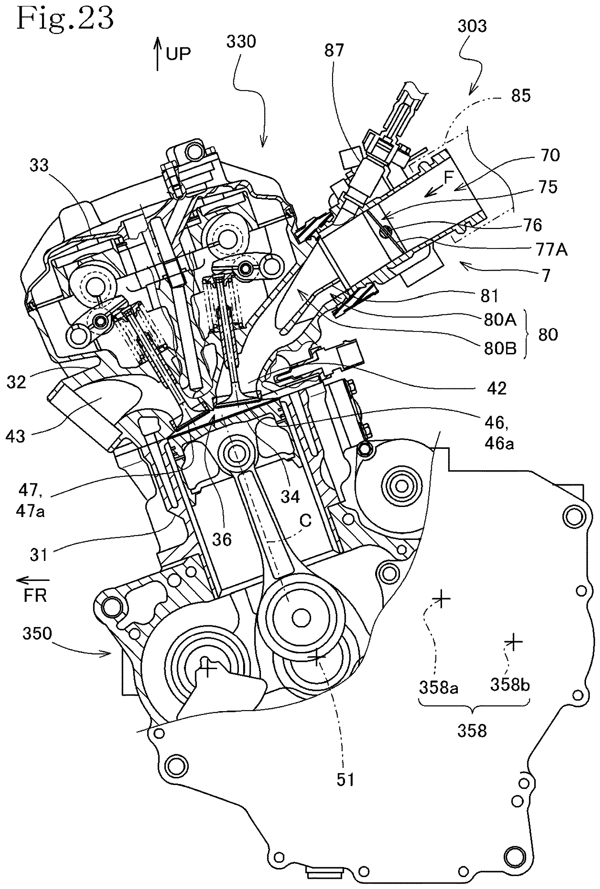

Illustrated in FIG. 23 is also a power unit 303 to be mounted on a vehicle that is provided with an internal combustion engine with a cylinder axis C raised up, or a so-called vertical type internal combustion engine 330, and the intake structure for the internal combustion engine according to Embodiment 1 of the present invention produces a similar effect when applied.

This will be described below as Example 1D.

The power unit 303 of Example 1D, a left side view of which is depicted partly in section in FIG. 23, is fixed to and mounted on a body frame of a motorcycle in a posture depicted in FIG. 23. At a front portion of a power unit case 350, a cylinder block 31, a cylinder head 32 and a cylinder head cover 33 are fastened while inclined slightly forwardly upward in such a manner as to be sequentially piled up, and a crankshaft 51 is disposed in the vehicle width direction, to constitute the internal combustion engine 330.

In this Example 1D, the internal combustion engine 330 is of a WOHC type.

A gear transmission 358 having a main shaft 358a and a counter shaft 358b which are parallel to the crankshaft 51 is provided at a rear portion of the power unit case 350, and the counter shaft 358b serves as an output shaft.

An exhaust port 43 is opened on the front side of the cylinder head 32 and is connected to an exhaust pipe (not illustrated), an intake port 42 which is projecting is opened toward a rear upper side of the cylinder head 32, and a throttle body 7 and an air cleaner device (not illustrated) are connected thereto to extend toward the upstream side in regard of the flow of intake air.

An intake flow path 80 in the projecting intake port 42 is partitioned by a partition section 81 along the intake air flow direction F, so that a tumble flow path 80A is disposed on the lower side whereas a main flow path 80B is disposed on the upper side.

The throttle body 7 is provided with a throttle valve 75 similar to that in Example 1A. A fuel injection valve 87 is provided on the throttle body 7, and is provided on the main flow path 80B side like in Example 1A.

In this Example 1D, an upper end side valve body of the throttle valve 75 is a one-end-side half 77A, and the tumble flow path 80A is located on the downstream side of the one-end-side half 77A.

Therefore, also in Example 1D, as depicted in FIG. 23, an intake structure for an internal combustion engine of Embodiment 1 of the present invention is provided similarly to Example 1A, and a similar operation and effect can be produced.

As seen in various Examples of Embodiment 1 described above, the present invention can be configured with the tumble flow path 80A disposed on either of the upper and lower sides in the intake flow path 80. A valve-opening rotating direction and a valve-closing rotating direction of the throttle valve 75 are set according to the disposition.

In addition, the present invention can be configured as a configuration in which the inlet pipe 6 is not provided and the partition section 81 is provided only in the intake port 42, and the fuel injection valve 87 is provided at a suitable position accordingly.

Based on FIGS. 1, 2 and 24 to 39, an intake structure for an internal combustion engine according to Embodiment 2 of the present invention will be described.

FIG. 1 illustrates also a right side surface of a motorcycle 1 on which is mounted a power unit 3 of Example 2A provided with the intake structure for the internal combustion engine of Embodiment 2 of the present invention, similarly to Embodiment 1.

In addition, FIG. 2 depicts a rear portion right side view in a state in which the body cover 10 of the motorcycle 1 of FIG. 1 has been detached, and this figure is referred to also in Embodiment 2.

In Embodiment 2, the structure and disposition concerning a throttle valve 575 in the intake structure for the internal combustion engine are only differing from those in Embodiment 1, and the structure and disposition of other parts are similar to those in Embodiment 1.

Therefore, the parts similar to those in Embodiment 1 are denoted by the same reference symbols as used in Embodiment 1, and descriptions thereof will be omitted or simplified. The parts differing from the corresponding parts in Embodiment 1 are denoted by reference symbols of the 500s with the same last two figures as those in the reference symbols for the corresponding parts in Embodiment 1, and descriptions thereof will be given.

Therefore, the items described above referring to FIGS. 1 and 2 similarly apply to the motorcycle 1 provided with the intake structure for the internal combustion engine of Embodiment 2 and a power unit 3 of the same, and, accordingly, descriptions thereof will be omitted.

FIG. 24 is a side sectional view of the power unit 3, taking out the power unit 3 of FIG. 2 and depicting the power unit 3 in an orientation substantially the same as in FIG. 2.

In FIG. 24, as depicted, a throttle valve 575, a throttle valve shaft 576 and a valve body 577 are only differing from the throttle valve 75, the throttle valve shaft 76 and the valve body 77 in Embodiment 1 illustrated in FIG. 3, and the structure and disposition of other parts are similar.

Therefore, the throttle valve 575, the throttle valve shaft 576 and the valve body 577 differing from those in Embodiment 1 will be described, whereas descriptions of the other parts described above referring to FIG. 24 will be omitted.

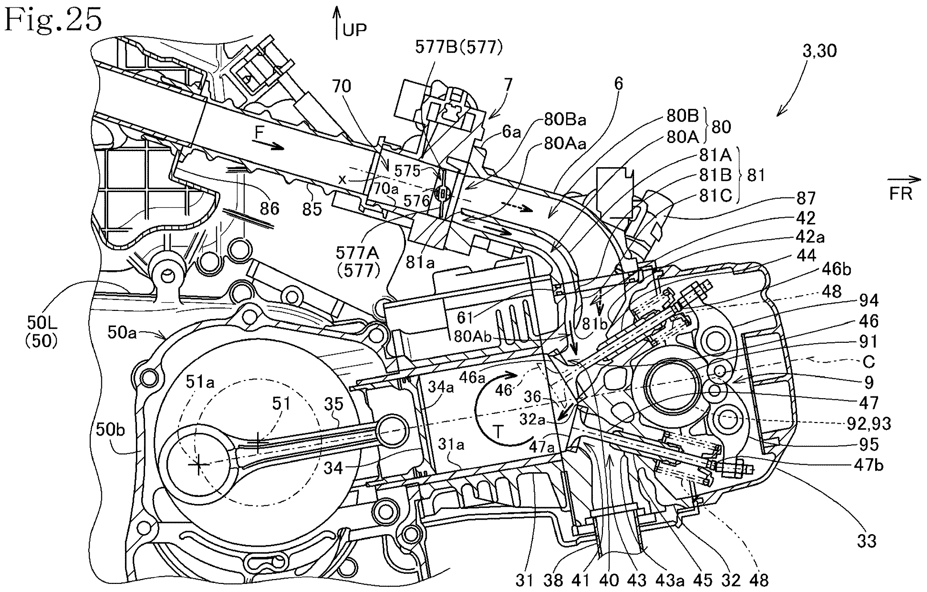

Example 2A of Embodiment 2, as depicted in FIG. 25 which is an enlarged view of a major part of FIG. 24, includes a cylinder head 32 with a cylinder axis C largely inclined forward substantially horizontally, in which an intake port 42 and an exhaust port 43 are formed to extend from an intake valve port 40 and an exhaust valve port 41 opened in a combustion chamber ceiling surface 32a while being curved in directions for vertically spacing away from each other.

An upstream end of the intake port 42 is opened toward the upper side of the cylinder head 32, and is connected to an inlet pipe 6, to constitute a continuous intake flow path 80, and a throttle body 7 is connected to the upstream side of the inlet pipe 6.

A downstream end of the exhaust port 43 is opened toward the lower side of the cylinder head 32, and is linked to an exhaust pipe 38 (see FIG. 2).

A cylindrical intake valve guide 44 is integrally fitted to a curve outer wall section 42a of the intake port 42 in the cylinder head 32, and an intake valve 46 slidably supported by the intake valve guide 44 opens and closes the intake valve port 40, fronting on a combustion chamber 36, of the intake port 42.

In addition, an exhaust valve 47 slidably supported by an exhaust valve guide 45 integrally fitted to a curve outer wall section 43a of the exhaust port 43 in the cylinder head 32 opens and closes an exhaust valve port 41, fronting on the combustion chamber 36, of the exhaust port 43.

The intake valve 46 and the exhaust valve 47 are biased upward by a valve spring 48 such that their valve head portions 46a, 47a close the intake valve port 40 and the exhaust valve port 41 both fronting on the combustion chamber 36. As depicted in FIG. 25, stem ends 46b, 47b of the intake valve 46 and the exhaust valve 47 are pushed down by an intake rocker arm 94 and an exhaust rocker arm 95 oscillated in contact with an intake cam 92 and an exhaust cam 93 of a cam shaft 91, whereby the intake valve 46 and the exhaust valve 47 are opened at predetermined timings, resulting in communication between the intake port 42 and the combustion chamber 36 and communication between the exhaust port 43 and the combustion chamber 36, so that intake and exhaust are performed at predetermined timings.

In the internal combustion engine 30 of Example 2A as above, an intake structure for giving a tumble flow ("tumble flow" in the present invention) T, or vertical rotation, of a fuel-air mixture in the combustion chamber 36 is configured for the purpose of obtaining better combustion in the combustion chamber 36.

Specifically, to an upstream end of the intake port 42 of the internal combustion engine 30, the inlet pipe 6 is connected through an insulator 61, whereby the intake flow path 80 having a roughly circular continuous sectional shape is configured, and the throttle body 7 is connected to the upstream side of the inlet pipe 6.

The throttle body 7 has the intake passage 70 which has a roughly circular sectional shape and constitutes part of the intake flow path 80 continuous with the combustion chamber 36 of the internal combustion engine 30, and the upstream side of the throttle body 7 is connected to an air cleaner device 86 (see FIG. 2) through a connecting tube 85.

The throttle body 7 is provided with a single throttle valve 575 which is rotatably supported in the throttle body

7 by a throttle valve shaft 576, disposed substantially horizontally while perpendicularly interesting an intake air flow direction F of the intake passage 70, in other words, perpendicularly intersecting the center axis X of the intake passage 70, controls variably the flow path area of the intake passage 70, and can open and close the intake passage 70.

An upstream-side front surface of the throttle body 7 of Embodiment 2 is similar to that depicted in FIG. 5 of Embodiment 1, except that the rotating direction of the valve body 577 differs as described later. The throttle valve 575 is of a butterfly type, and includes the throttle valve shaft 576 and a disk-shaped valve body 577 which is fixed to and rotated as one body with the throttle valve shaft 576. The valve body 577 is bisected on both sides of the throttle valve shaft 576, into a one-end-side half 577A on one side and a semi-disk-shaped other-end-side half 577B on the other side (reference symbols are indicated in brackets in FIG. 5).

The throttle valve 575 can be rotated counterclockwise in a valve-opening direction in FIGS. 24 and 25 by a driver's operation or the like. The valve body 577 is biased clockwise in a valve-closing direction by a return spring (not illustrated) to be located in a full-closed position such that the rotating one-end-side half 577A contacts the inner surface 70a of the intake passage 70 and the rotating other-end-side half 577B contacts the inner surface 70a of the intake passage 70.

In this Example 2A, the intake passage 70 of the throttle body 7 is disposed substantially horizontally, a lower-end-side valve body is the one-end-side half 577A, and an upper-end-side valve body is the other-end-side half 577B.

In this Example 2A, the intake flow path 80 is divided along the intake air flow direction by a partition section 81 continuously from the inlet pipe 6 to the intake port 42, and is partitioned into a tumble flow path 80A configured such that intake air passed therethrough generates the tumble flow T in the combustion chamber 36, and a main flow path 80B other than the tumble flow path 80A.

In the present invention, the "tumble flow path" is an intake air flow path for generating the tumble flow T in the combustion chamber 36 at the time of a slight position of the throttle valve 575, in other words, at the time of a low load on the internal combustion engine 30.

In this Example 2A, the lower-side portion of the intake flow path 80 partitioned by the partition section 81 is the tumble flow path 80A, and the upper-side portion is the main flow path 80B, but their upper-lower disposition is not limitative in the present invention.

In addition, herein the "upper, lower" regarding the intake flow path 80, the intake passage 70 and the throttle valve 575 is such that in the direction of the cylinder axis C, the direction of the cylinder head 32 or the cylinder head cover 33 is "upper" and the direction of the crankshaft 51 is "lower," and is not meaning the absolute "upper, lower" on a spatial basis.

The partition section 81 is configured by an inlet pipe side partition section 81A, an insulator side partition section 81B and an intake port side partition section 81C which are located in succession from the upstream side toward the downstream side of the intake air flow.

The main flow path 80B on the upper side in the drawing and the tumble flow path 80A on the lower side in the drawing are formed by partitioning the intake flow path 80 on the downstream side of the throttle valve 575 vertically in the drawing by the longitudinal partition section 81 over a range from the inlet pipe 6 to the intake port 42, similarly to illustration in FIG. 5, and are each defined to have a roughly circular sectional shape.

Note that a surface, in the width direction of the intake flow path 80, of the partition section 81 and the throttle valve shaft 576 are parallel to each other.

Therefore, an inlet opening 80Aa of the tumble flow path 80A of the intake flow path 80 of the inlet pipe 6 connected to the downstream side of the intake passage 70 of the throttle body 7 is located and opens on the downstream side of the one-end-side half 577A of the throttle valve 575, whereas an inlet opening 80Ba of the main flow path 80B is located and opens on the downstream side of the other-end-side half 577B of the throttle valve 575.

Note that a fuel injection valve 87 externally penetrating the main flow path 80B from above and disposed such as to inject and supply a fuel toward the intake valve port 40 is attached to the inlet pipe 6.

While the fuel injection valve 87 is disposed at the inlet pipe 6 in this Example 2A, a direct injection structure may also be adopted in which the fuel injection valve 87 is disposed at the cylinder head 32 or the cylinder block 31 and injects the fuel into the combustion chamber 36.

In addition, as illustrated in FIG. 25, a downstream-side end portion 81b of the partition section 81, in other words, the downstream-side end portion 81b located in the intake port 42 of the cylinder head 32 is integrally formed while bent toward the cylinder block 31 side in the cylinder head 32, and a final end 80Ab of the tumble flow path 80A is formed to be directed to the combustion chamber ceiling surface 32a of the cylinder head 32.

For this reason, the intake air flowing in the tumble flow path 80A can be caused to flow into the cylinder bore 31a after passing on the upper side of the valve head portion 46a of the intake valve 46 as indicated by small arrow in FIG. 25, and, therefore, it is ensured that a tumble flow T is easily generated in the combustion chamber 36. In this way, the tumble flow path 80A is configured such that the intake air passed therethrough will easily generate a tumble flow T.

In a conventional device, generally, a TCV for guiding the intake air when the throttle valve is in a slight opening position to the tumble flow path is provided on the downstream side of the throttle valve controlling the intake flow rate.

In the present invention, on the other hand, the TCV is not provided, and a barrier or a guide is not particularly provided in the intake flow path 80 or the intake passage 70, but it is ensured that much intake air can be guided to the tumble flow path 80A when the throttle valve 575 is slightly opened at the time of a low load on the internal combustion engine 30, and the intake air can be guided to the tumble flow path 80A and the main flow path 80B, without any trouble, according to the position (throttle position) of the throttle valve 575 at the time of a high load on the internal combustion engine 30.

Note that "slight opening" described in the present invention as described in the claims and in the embodiments means a throttle position in the range from full closure of the throttle valve to a predetermined position at the time of a low load on the internal combustion engine, and can be set arbitrarily according to the characteristics of the internal combustion engine under low load. In Embodiment 2, a region ranging from the full closure of the throttle valve to a throttle position of 30% is assumed, but this throttle position is not limitative. For example, it may be set, as required, to a throttle position which is used frequently, according to the driver's operation characteristics and road conditions.

The characteristic feature of the present invention is found out from the present inventors' extensive and intensive research, and is not found from the viewpoint of using the conventional device similarly to the conventional use. With the throttle valve 575 and the partition section 81 configured in a specified setting as indicated in Embodiment 2, the inflow of intake air into the main flow path 80B can be restrained by the throttle valve 575 in a region ranging from the full closure of the throttle valve 575 to a slight opening state. In addition, the flow of intake air can be localized and guided to the tumble flow path 80A, and the tumble flow T in the combustion chamber 36 can be strengthened.

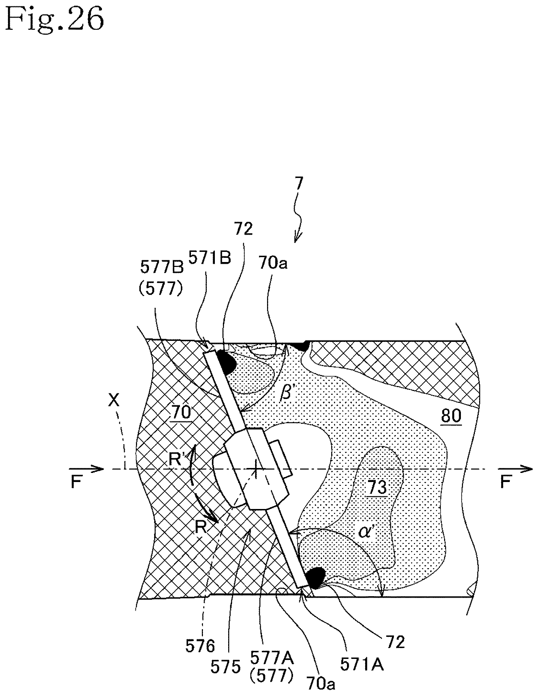

As depicted in FIG. 26 which illustrates a section, including the center axis X of the intake passage 70 and perpendicular to the throttle valve shaft 576, of a part in the vicinity of the throttle valve 575 of the throttle body 7 of Embodiment 2, in this embodiment, the throttle valve 575 can be rotated counterclockwise R in a valve-opening direction in the drawing. In addition, in a full-closed position where the throttle valve 575 is biased clockwise R', the valve body 577 of the throttle valve 575 is positioned in a state in which the rotating one-end-side half 577A contacts the inner surface 70a on the lower side in the drawing of the intake passage 70, whereas the rotating other-end-side half 577B contacts the inner surface 70a on the upper side in the drawing of the intake passage 70.

The one-end-side half 577A of the throttle valve 575 in the full-closed position is such that its contact angle $\alpha'$ with the inner surface 70a of the intake passage 70 on the downstream side of the intake air flor direction F is an acute angle, whereas the other-end-side half 577B of the throttle valve 75 is such that its contact angle $\beta'$ with the inner surface 70a of the intake passage 70 on the downstream side of the intake air flow direction F is an obtuse angle.

When the throttle valve 575 is moved from the full-closed position in such a state to a slight opening position, the intake air passes from the upstream side of the intake passage 70 through a gap (hereinafter referred to as "obtuse angle side gap") 571A formed between the one-end-side half 577A and the inner surface 70a of the intake passage 70 and through a gap (hereinafter referred to as "acute angle side gap") 571B formed between the other-end-side half 577B and the inner surface 70a of the intake passage 70, and then flows from the downstream side of the intake passage 70 to the intake flow path 80.

A strong negative pressure is generated in the immediate downstream parts 72 (black parts in the drawing) of the obtuse angle side gap 571A and the acute angle side gap 571B, and a wide negative pressure region 73 (dot hatched part in the drawing) is generated in a range on the downstream side of the throttle valve 575 inclusive of the throttle valve shaft 576.

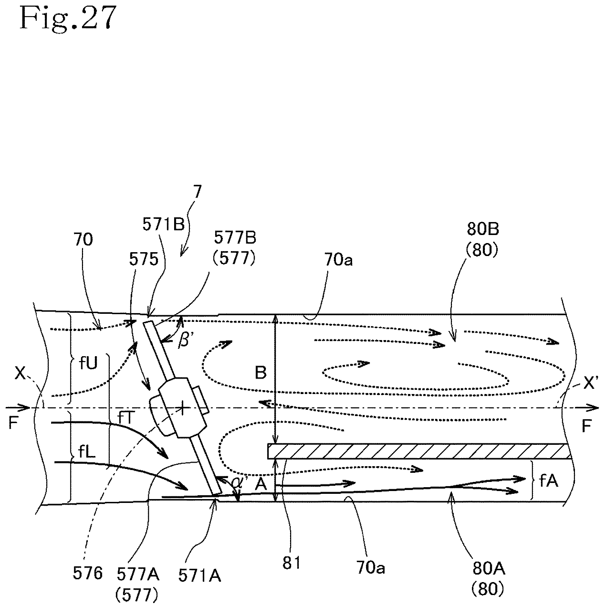

FIG. 27 is a schematic illustration of a state in which the partition section 81 is provided in the intake flow path 80 and when the throttle valve 575 is located in a slight opening position in FIG. 26, in a sectional view perpendicular to the throttle valve shaft 576 and along the center axis X of the intake passage 70.

Specifically, as illustrated in FIG. 27, the intake flow path 80 on the downstream side of the throttle valve 575 is partitioned along the intake air flow direction F by the partition section 81 having a surface parallel to the throttle valve shaft 576, into the two flow paths 80B, 80A which are respectively larger and smaller in sectional area, the flow path 80B on the side of larger sectional area is disposed on the downstream side of the other-end-side half 577B, and the flow path 80A on the side of smaller sectional area is disposed on the downstream side of the one-end-side half 577A. With such a configuration, at the time of slight opening of the throttle valve 575, or at the time of a low load on the internal combustion engine 30, the vigor of the intake air passing through the throttle valve 575 and flowing into the flow path 80B of larger sectional area is liable to be attenuated, and the intake air having flowed into the flow path 80B of larger sectional area while having lost its vigor is induced by the negative pressure generated in the immediate downstream parts 72 (black parts in the drawing) of end portions of the one-end-side half 577A and the other-end-side half 577B of the throttle valve 575, and flows back toward the upstream side.

Then, the intake air thus flowing back is induced by the negative pressure generated in the immediate downstream part 72 of the one-end-side half 577A on the side of the flow path 80A of smaller sectional area, and flows into the flow path 80A of smaller sectional area together with the intake air having passed the throttle valve 575, so that the quantity of the intake air flowing in the flow path 80A is increased.

From the foregoing, the present inventors have found out that by causing the flow path 80B of larger sectional area to be a main flow path and causing the flow path 80A of smaller sectional area to be a tumble flow path, in other words, by setting the sectional area of the main flow path 80B larger than the sectional area of the tumble flow path 80A, the intake air having once flowed into the main flow path 80B can be guided into the tumble flow path 80A.

Thus, when the sectional area of the main flow path 80B is set greater than the sectional area of the tumble flow path 80A, the intake air having once flowed into the main flow path 80B can be guided into the tumble flow path 80A, and the tumble flow T in the combustion chamber 36 can be strengthened, without providing a TCV. In addition, the device configuration of the intake structure of the internal combustion engine 30 can be simplified, and it is possible to reduce the number of component parts and cost as compared to the case where a TCV is provided.

Further, in this embodiment, in a sectional view perpendicular to the throttle valve shaft 576 and along the center axis X of the intake passage 70, the one-end-side half 577A of the throttle valve 575 at the time of full closure contacts the inner surface 70a of the intake passage 70 on the downstream side at an obtuse angle a', whereas the other-end-side half 577B of the throttle valve 575 contacts the inner surface 70a of the intake passage 70 on the downstream side at an acute angle β', the tumble flow path 80A of the intake flow path 80 is located on the downstream side of the one-end-side half 577A, and the main flow path 80B of the intake flow path 80 is located on the downstream side of the other-end-side half 577B.

Since the one-end-side half 577A of the throttle valve 575 at the time of full closure is disposed to contact the inner surface 70a of the intake passage 70 on the downstream side at an obtuse angle a', the one-end-side half 577A is inclined from the main flow path 80B toward the tumble flow path 80A on the downstream side of the throttle valve 575, so that, at the time of slight opening of the throttle valve 575 or the like, a back flow in the main flow path 80B is easily guided toward the tumble flow path 80A side, and the partition section 81 can be set close to the one-end-side half 577A. Thus, in the intake air flow direction F, the distance from the one-end-side half 577A to the partition section 81 is smaller than the distance from the other-end-side half 577B to the partition section 81. Therefore, the intake air having passed through the one-end-side half 577A easily flows into the tumble flow path 80A, and the quantity of intake air flowing into the tumble flow path 80A can be increased.

As illustrated in FIG. 27, the intake passage 70 and the intake flow path 80 are continuous with each other in a state in which the center axis X of the intake passage 70 of the throttle body 7 and the center axis X' of the intake flow path 80 on the downstream side as compared to the intake passage 70 of the throttle body 7 coincide with each other. In this embodiment, by the partition section 81 located on the obtuse angle side gap 571A side on the lower side in the drawing as compared to the center axis X of the intake passage 70, in other words, on the one-end-side half 577A side of the throttle valve 575, the intake flow path 80 was partitioned into the tumble flow path 80A on the lower side in the drawing and the main flow path 80B on the upper side in the drawing, and distribution of intake air flow at the time of slight opening of the throttle valve 575 was confirmed.

In this embodiment, the intake flow path 80 includes the intake passage 70 of the throttle body 7 and the intake flow path 80 on the downstream side as compared to the intake passage 70 of the throttle body 7, and the intake flow path 80 on the downstream side of the intake passage 70 of the throttle body 7 corresponds to the inlet pipe 6 and the intake port 42 of the cylinder head 32.

As a result, in the case where the ratio A:B of the sectional area A of the tumble flow path 80A to the sectional area B of the main flow path 80B is 2:8, and when the ratio of intake air fU flowing on the upper half in the drawing as compared to the center axis X of the intake passage 70, on the upstream side of the throttle valve 575, to the total intake air fT was 52%, whereas the ratio of intake air fL flowing on the lower half in the drawing as compared to the center axis X to the total intake air fT was 48%, it was confirmed that after passage through the throttle valve 575 in a slight opening state of a position of 15%, the ratio of the intake air fA flowing through the tumble flow path 80A on the downstream side of the acute angle side gap 571B to the total intake air fT, or tumble flow path flow rate ratio (fA/fT), was sufficiently greater than 63% described later, revealing that the intake air can be sufficiently made to flow into the tumble flow path 80A in a localized manner.

Note that it was also revealed that if the partition section 81 is disposed on the too upper side to set the ratio A:B excessively high, or is disposed on the too lower side to set the ratio A:B excessively low, the tumble flow path flow rate ratio (fA/fT) is lowered.

In other words, it has been found possible to guide much intake air to the tumble flow path 80A when the throttle valve 575 is slightly opened at the time of a low load on the internal combustion engine 30, and to strengthen the tumble flow T in the combustion chamber 36 at the time of low load, without providing the conventional TCV mentioned above.

In addition, since it is unnecessary to particularly provide a barrier or a guide in the intake flow path 80 or the intake passage 70 on the front or rear side of the throttle valve 575, it is possible at the time of a high load on the internal combustion engine 30 to guide the intake air to the main flow path 80A and the tumble flow path 80B, without any trouble, according to the position of the throttle valve 575.

Note that as depicted in FIG. 25, in this embodiment, the tumble flow path 80A is provided on a curved inner peripheral side of the curved intake flow path 80, whereas the main flow path 80B is provided on a curved outer peripheral side of the curved intake flow path 80, the height HB in the curve radial direction of the main flow path 80B in the inlet pipe 6 is set greater than the height HA in the curve radial direction of the tumble flow path 80A in the inlet pipe 6, and the fuel injection valve 87 is disposed on the main flow path 80B side.

With the main flow path 80B thus provided on the curved outer peripheral side of the intake flow path 80, it is ensured that the distance between the fuel injection valve 87 and the partition section 81 can be set larger, and the partition section 81 more hardly interferes with the fuel from the fuel injection valve 87, as compared to the case where the tumble flow path 80A is provided on the curved outer peripheral side of the intake flow path 80.

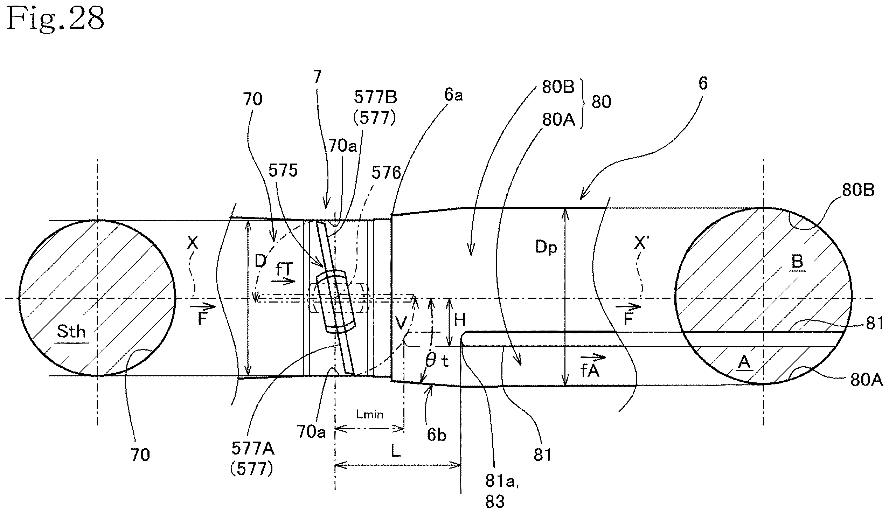

Here, FIG. 28 schematically depicts the form of the intake passage 70 on the front and rear sides of the throttle valve 575 of the throttle body 7 of this embodiment and the intake flow path 80 continuous with the same, in a section orthogonal to the partition section 81 and along the center axis X' of the intake flow path 80. Note that since the intake passage 70 and the intake flow path 80 are continuous with each other with the center axes X and X' coinciding with each other, and a surface in the width direction of the intake flow path 80 of the partition section 81 and the throttle valve shaft 576 are parallel to each other, FIG. 28 also depicts a section perpendicular to the throttle valve shaft 576 and along the center axis X of the intake passage 70. In the figure, a section of the intake flow path 80 is adjacently depicted at the right side, and a section of the intake passage 70 at the position of the throttle valve 575 is adjacently depicted at the left.

As illustrated in FIG. 28, the diameter Dp of the intake flow path 80 of the inlet pipe connected to the downstream side of the throttle body 7 is set larger than the diameter of the intake passage 70 of the throttle body 7 at the position of the throttle valve 575, in other words, the throttle bore D.

In addition, from an upstream end 6a of the inlet pipe 6 toward the downstream side, a tapered section 6b is formed which is gradually enlarged in diameter toward the radially outer side.

By the difference between the diameter D and the diameter Dp, variation in the flow path sectional area due to the addition of the partition section to the inside of the intake flow path can be suppressed.

In addition, with the flow path sectional area in the inlet pipe 6 enlarged from the upstream end toward the downstream side by the tapered section 6b gradually enlarged in diameter toward the radially outer side, variation in the flow path sectional area due to the addition of the partition section 81 can be suppressed.

In this embodiment, the taper angle $\theta t$ is preferably 3.5 degrees, and is set to be equal to or less than 5 degrees, but the taper angle can be modified, as required, according to the structure of the partition section 81.

In FIG. 28, A is the sectional area of the tumble flow path 80A in the vicinity of the upstream-side end portion 81a of the partition section 81, B is the sectional area of the main flow path 80B in the vicinity of the upstream-side end portion 81a of the partition section 81, and Sth is the throttle bore sectional area of the intake passage 70 at the position of the throttle valve 575.

H is "partition height," which is the distance from the center axis X' of the intake flow path 80 in the vicinity of the upstream-side end portion 81a of the partition section 81 to a surface on the tumble flow path 80A side of the partition section 81.

L is "partition section depth," which is the distance from the center of the throttle valve shaft 576 to the flow path width directional center 83 (see FIG. 6) of the upstream-side end portion 81a of the partition section 81, in the direction of the center axis X' of the intake flow path 80. Note that in the case where the center axis X' of the part is curved, the distance along the curve is adopted.

V denotes the position (throttle position) of the throttle valve 75, indicating the opening ratio (%) in the range from the full-closed state (0%) to the full open state (100%).

The present inventors further analyzed under what conditions the localized flow of intake air into the tumble flow path 80A owing to the throttle valve 575 and the partition section 81 configured as above can be achieved favorably.

Specifically, in a fuel consumption measurement mode in traveling of the motorcycle 1 in a city area, normally, a throttle position of 0% to approximately 30% corresponding to the time of a low load on the internal combustion engine or the time of slight opening of the throttle valve is used. In view of this, with an intermediate throttle position of 15% as a typical position, conditions for strengthening the tumble flow T in the combustion chamber 36 at the time of a throttle opening of 15% were determined.

Let the total intake air passing through the throttle valve 575 be fT and let the intake air flowing through the tumble flow path 80A be fA, then, generally, as the ratio of the intake air fA flowing through the tumble flow path 80A to the total intake air fT, or the tumble flow path flow rate ratio (fA/fT), rises, the tumble ratio TR (the ratio of the rotating speed of the tumble flow to the rotating speed of the crankshaft) of the tumble flow T in the combustion chamber is improved. At a tumble ratio TR of equal to or more than 1.2, rapid combustion is obtained, and a fuel consumption effect appears.

Based on the fact that when the tumble flow path flow rate ratio (fA/fT) is equal to or more than 63%, the tumble ratio TR becomes equal to or more than 1.2, rapid combustion is obtained and the fuel consumption effect can be realized, the present inventors made a CFD (computational fluid dynamics) analysis in regard of throttle bore diameters D of 24 $\varphi$ (diameter 24 mm), 48 $\varphi$ (diameter 48 mm) and 80 $\varphi$ (diameter 80 mm), with a target value of tumble flow path flow rate ratio (fA/fT) of equal to or more than 63%, and found out preferable ranges of L/D, H/D, A/Sth, and A/(A + B), as described below.

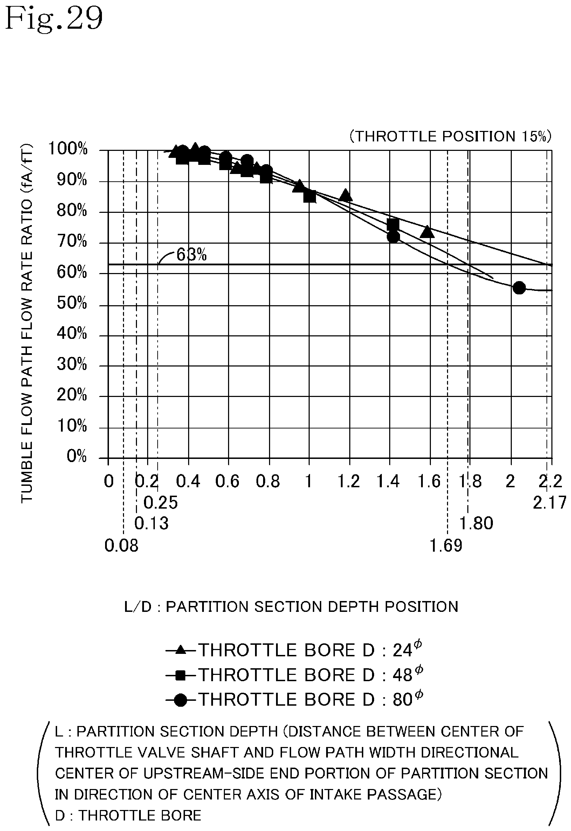

FIG. 29 depicts a graph of analytical results of the relation of "tumble flow path flow rate ratio (fA/fT)" to "L/D: partition section depth position" in the cases of throttle bores D of 24 φ, 48 φ and 80 φ, with the radio A:B of the sectional area A of the tumble flow path 80A to the sectional area B of the main flow path 80B being 2:8 and with the throttle position being 15%.

"L," "D," "fA" and "fT" are as depicted in FIG. 28 and described above.

As illustrated in the figure, the line of a throttle bore D of 80 φ represents that in the whole range between "L/D: partition section depth position" of 1.69 as an upper limit and a minimum of 0.0, the "tumble flow path flow rate ratio (fA/fT)" exceeds a target of 63%, and the tumble flow T is favorably strengthened in that range.

The line of a throttle bore D of 48 φ represents that the "tumble flow path flow rate ratio (fA/fT)" exceeds the target of 63% in the whole range from a minimum of 0.0 to an upper limit of "L/D" of 1.80, and the line of a throttle bore D of 24 φ in the whole range from a minimum of 0.0 to an upper limit of "L/D" of 2.17, and the tumble flow T is strengthened more favorably in those ranges.

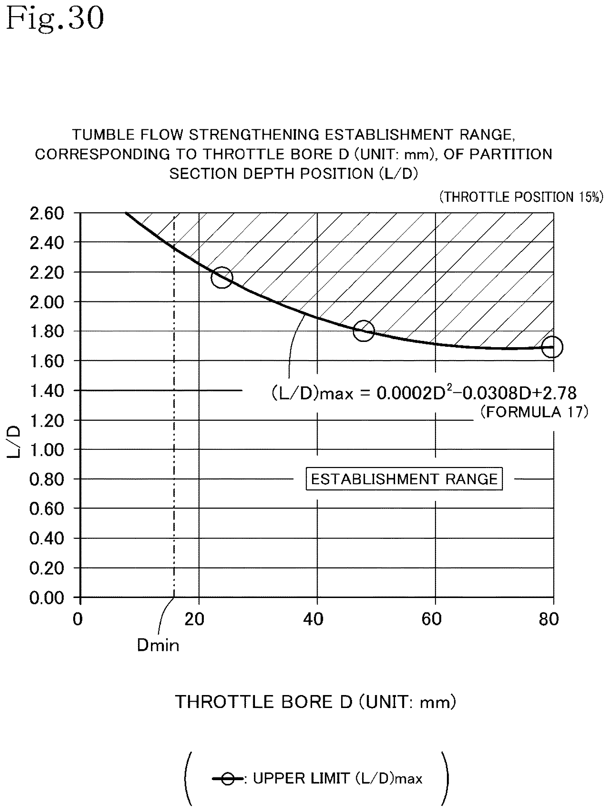

FIG. 30 is a graph depicting a tumble flow strengthening establishment range, corresponding to the throttle bore D (mm), of "L/D: partition section depth position," deduced from FIG. 29.

As depicted in FIG. 30, taking the throttle bore D (unit: mm) on the axis of abscissas, and taking "L/D: partition section depth position" on the axis of ordinates, upper limits (L/D)max of (L/D) on the basis of the throttle bores D of 24 φ, 48 φ and 8o φ were plotted.

Then, from the three points of the upper limits (L/D)max, "Formula 17" for calculating the upper limit (L/D)max of (L/D) correspondingly to the throttle bore D (unit: mm) was found out as follows.

$$(L/D)max = 0.0002D^2 - 0.0308D + 2.78...(Formula\ 17)$$

Therefore, in general, when the range of "L/D: partition section depth position" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (L/D)max indicating the tumble strengthening establishment range is obtained from Formula 17.

The lower limit for (L/D) is a minimum of 0.0 on a hydrodynamical basis.

In other words, by setting "L/D: partition section depth position" to within the range between the upper limit (H/D)max calculated by Formula 17 and the minimum of 0.0, correspondingly to the throttle bore D (unit: mm), the tumble flow path flow rate ratio (fA/fT) is increased, and the tumble flow T is strengthened favorably.

In addition, the throttle bore D (mm) has a lower limit Dmin on a production basis, and, in that case, the tumble flow strengthening establishment range is obtained for a throttle bore of equal to or more than Dmin.

Note that due to structural limitations concerning the throttle valve 575 and the like, "partition section depth L" cannot be 0.0, and it may take a lower limit Lmin due to the structural limitations. In this case, (L/D) also cannot take a minimum of 0.0.

If Lmin = 6 mm irrespectively of the throttle bore D, the lower limit (L/D)min of "L/D" due to structural limitations is (Lmin/D) = 6/D, and the value is 0.08 for the throttle bore D of 80 φ, 0.13 for the throttle bore D of 48 φ, and 0.25 for the throttle bore D of 24φ.

However, the lower limit of "L/D" due to the structural limitations is not a lower limit on a hydrodynamical basis, but is a value on a design basis that varies depending on structural conditions. In other words, the lower limit of "L/D" is that value within such a range that the valve body 77 of the throttle valve 75 does not interfere with the partition section 81 when the valve body 77 rotates at which "L/D" is minimized.

As above-mentioned, let the diameter of the intake passage 70 of the throttle body 7 at the position of the throttle valve 575 be throttle bore D and let the distance from the flow path width directional center 83 of the upstream-side end portion 81a of the partition section 81 to the center of the throttle valve shaft 576 in the direction of the center axis X' of the intake flow path 80 be L, then the sectional area B of the main flow path 80B is set greater than the sectional area A of the tumble flow path 80A, and the partition section depth position LID is set in such a manner that at the time of slight opening of the throttle valve 575, or at the time of a low load on the internal combustion engine 30, the intake air passing through the throttle valve 575 and flowing in the main flow path 80B flows back, and the intake air flows into the tumble flow path 80A.

Therefore, at the time of slight opening of the throttle valve 575, or at the time of a low load on the internal combustion engine 30, the vigor of the intake air passing through the throttle valve 575 and flowing in the main flow path 80B is liable to be attenuated, and the intake air having flowed into the main flow path 80B while having lost its vigor is induced by a negative pressure generated at an immediate downstream part 72 of the throttle valve 575, and flows back toward the upstream side.

Then, the intake air flowing back through the main flow path 80B of larger sectional area is induced by a negative pressure generated in the immediate downstream part 72 on the tumble flow path 80A side, and flows into the tumble flow path 80A together with the intake air having passed through the throttle valve 575, so that the quantity of the intake air flowing through the tumble flow path 80A is increased.

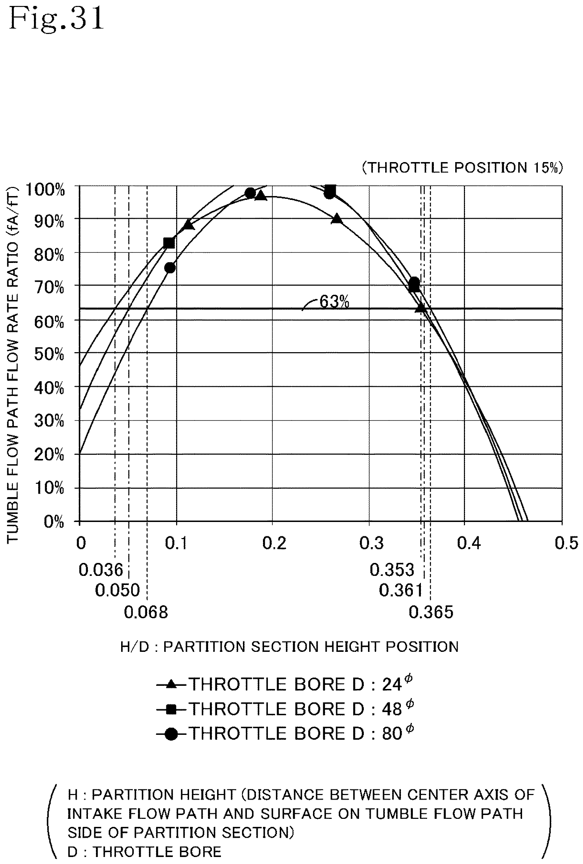

FIG. 31 is a graph of analytical results of the relation of "tumble flow path flow rate ratio (fA/fT)" to "H/D: partition section height position," in the cases where the throttle bore D is 24 φ, 48 φ and 80 φ, at a throttle position of 15%, with the partition section depth position LID being set in such a manner that at the time of slight opening of the throttle valve 575, or at the time of a low load on the internal combustion engine 30, the intake air passing through the throttle valve 575 and flowing in the main flow path 80B flows back toward the upstream side and the intake air flows into the tumble flow path 80A, as aforementioned.

"H," "D," "fA" and "fT" are as depicted in FIG. 28 and described above.

As illustrated in the figure, the line of the throttle bore D of 80 φ represents that "tumble flow path flow rate ratio (fA/fT)" exceeds a target of 63% within the whole range of (H/D) from a lower limit of 0.068 to an upper limit of 0.365, and the tumble flow T is favorably strengthened in that range.

The line of the throttle bore D of 48 φ represents that "tumble flow path flow rate ratio (fA/fT)" exceeds the target of 63%, in the whole range of (H/D) from a lower limit of 0.050 to an upper limit of 0.361, and

the line of the throttle bore D of 24 φ in the whole range of (H/D) from a lower limit of 0.036 to an upper limit of 0.353, and the tumble flow T is strengthened more favorably in those ranges.

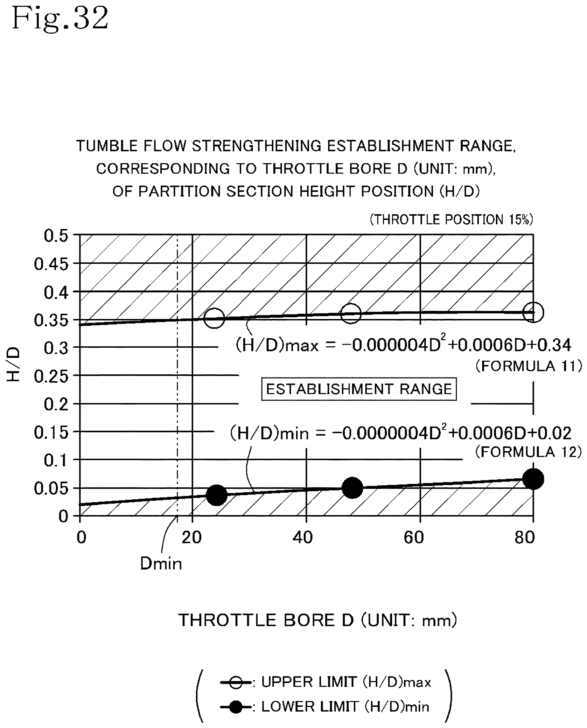

FIG. 32 is a graph depicting a tumble flow strengthening establishment range, corresponding to throttle bore D (mm), of "H/D: partition section height position," deduced from FIG. 31.

As illustrated in FIG. 32, taking the throttle bore D (unit: mm) on the axis of abscissas, and taking "H/D: partition section height position" on the axis of ordinates, upper limits (H/D)max and lower limits (H/D)min of (H/D) on the basis of the throttle bores D of 24 φ, 48 φ and 80 φ were plotted.

Then, from the three points of the upper limits (H/D)max, "Formula 11" for calculating the upper limit (H/D)max of the partition section height position: H/D correspondingly to the throttle bore D (unit: mm) was found out as follows.

$$(H/D)max = -0.000004D^2 + 0.0006D + 0.34...(Formula\ 11)$$

Similarly, from the three points of the lower limits (H/D)min, "Formula 12" for calculating the lower limit (H/D)min of the partition section height position: H/D correspondingly to the throttle bore D (unit: mm) was found out as follows.

$$(H/D)min = 0.0000004D^2 + 0.0006D + 0.02...(Formula\ 12)$$

Therefore, in general, when the range of "H/D: partition section height position" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (H/D)max and the lower limit (H/D)min indicating the tumble flow strengthening establishment range are obtained from Formulas 11 and 12.

In other words, by setting "H/D: partition section height position" to within the range between the upper limit (H/D)max and the lower limit (H/D)min calculated by Formulas 11 and 12, correspondingly to the throttle bore D (unit: mm), the tumble flow path flow rate ratio (fA/fT) is increased, and the tumble flow T is strengthened favorably.

Note that the throttle bore D (mm) has a lower limit Dmin on a production basis, and, in that case, the tumble flow strengthening establishment range is obtained for a throttle bore of equal to or more than Dmin.

In addition, in the case where the throttle bore is elliptic or oblong in shape, the distance between upper and lower inner surfaces 70a of the intake passage 70 in the direction of a line passing through the center of the throttle valve shaft 576, perpendicular to the throttle valve shaft 576 and orthogonal to the upper and lower inner surfaces 70a is made to be the throttle bore D (unit: mm).

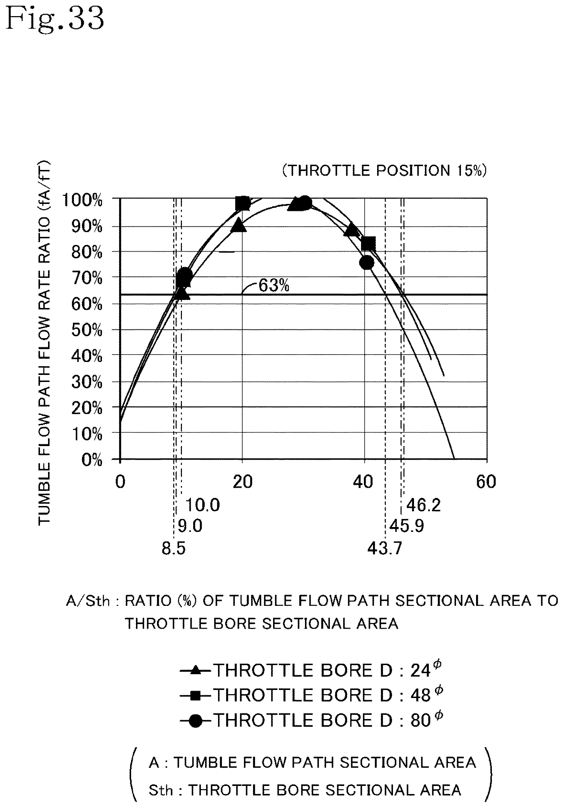

FIG. 33 is a graph of analytical results of the relation of "tumble flow path flow rate ratio (fA/fT)" to "A/Sth: the ratio (%) of tumble flow path sectional area to throttle bore sectional area," in the cases where the throttle bore D is 24 φ, 48 φ and 80 φ, at a throttle position of 15%, with the partition section depth position LID being set in such a manner that at the time of slight opening of the throttle valve 575, or at the time of a low load on the internal combustion engine 30, the intake air passing through the throttle valve 575 and flowing in the main flow path 80B flows back toward the upstream side and the intake air flows into the tumble flow path 80A, as aforementioned.

"A," "Sth," "fA" and "fT" are as depicted in FIG. 28 and described above.

As illustrated in the figure, the line of the throttle bore D of 80 φ represents that "tumble flow path flow rate ratio (fA/fT)" exceeds a target of 63% within the whole range of (A/Sth) from a lower limit of 8.5% to an upper limit of 43.7%, and the tumble flow T is favorably strengthened in that range.

The line of the throttle bore D of 48 φ represents that "tumble flow path flow rate ratio (fA/fT)" exceeds the target 63%, in the whole range of (A/Sth) from a lower limit of 9.0% to an upper limit of 45.9%, and

the line of the throttle bore D of 24 φ in the whole range of (A/Sth) from a lower limit of 10.0% to an upper limit of 46.2%, and the tumble flow T is strengthened more favorably in those ranges.

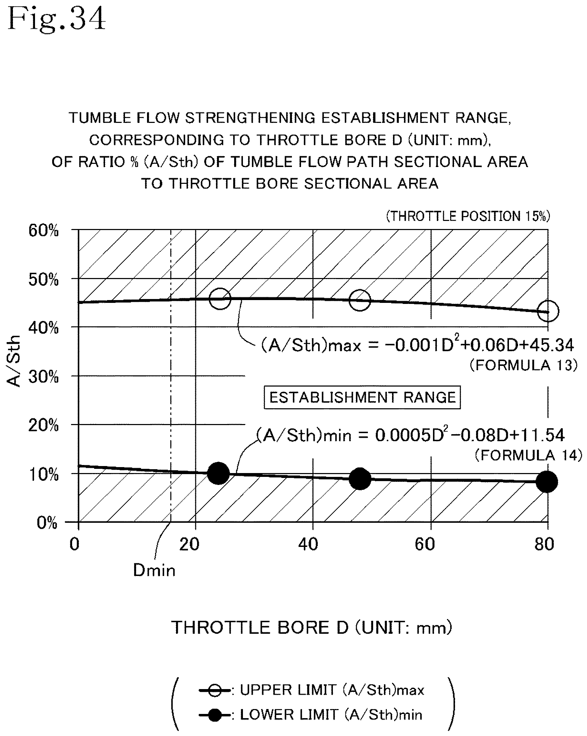

FIG. 34 is a graph depicting a tumble flow strengthening establishment range, corresponding to the throttle bore D (mm), of "A/Sth: the ratio (%) of tumble flow path sectional area to throttle bore sectional area," deduced from FIG. 33.

As illustrated in FIG. 34, taking the throttle bore D (unit: mm) on the axis of abscissas, and taking "A/Sth: the ratio (%) of tumble flow path sectional area to throttle bore sectional area" on the axis of ordinates, upper limits (A/Sth)max and lower limits (A/Sth)min of (A/Sth) on the basis of the throttle bores D of 24 φ, 48 φ and 80 φ were plotted.

Then, from the three points of the upper limits (A/Sth)max, "Formula 13" for calculating the upper limit (A/Sth)max of (A/Sth) correspondingly to the throttle bore D (unit: mm) was found out as follows.

$$(A/Sth)max = -0.001D^2 + 0.06D + 45.34...(Formula~13)$$

Similarly, from the three points of the lower limits (A/Sth)min, "Formula 14" for calculating the lower limit (A/Sth)min of (A/Sth) correspondingly to the throttle bore D (unit: mm) was found out as follows.

$$(A/Sth)min = 0.0005D^2 - 0.08D + 11.54...(Formula~14)$$

Therefore, in general, when the range of "A/Sth: the ratio (%) of tumble flow path sectional area to throttle bore sectional area" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (A/Sth) and the lower limit (A/Sth)min indicating the tumble flow strengthening establishment range are obtained from Formulas 13 and 14.

In other words, by setting "A/Sth: the ratio (%) of tumble flow path sectional area to throttle bore sectional area" to within the range between the upper limit (A/Sth)max and the lower limit (A/Sth)min calculated by Formulas 13 and 14, correspondingly to the throttle bore D (unit: mm), the tumble flow path flow rate ratio (fA/fT) is increased, and the tumble flow T is strengthened favorably.

Note that the throttle bore D (mm) has a lower limit Dmin on a production basis, and, in that case, the tumble flow strengthening establishment range is obtained for a throttle bore of equal to or more than Dmin.

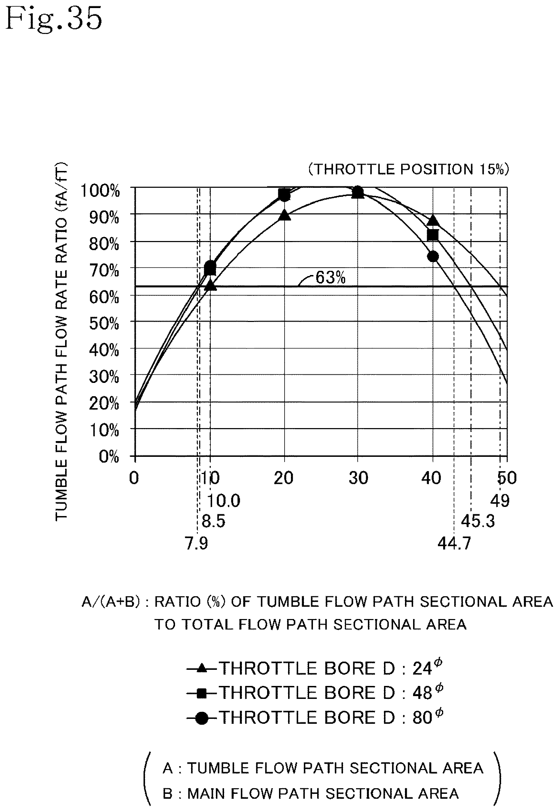

FIG. 35 is a graph of analytical results of the relation of "tumble flow path flow rate ratio (fA/fT)" to "A/(A + B): the ratio (%) of tumble flow path sectional area to total flow path sectional area," in the cases where the throttle bore D is 24 φ, 48 φ and 80 φ, at a throttle position of 15%, with the partition section depth position LID being set in such a manner that at the time of slight opening of the throttle valve 575, or at the time of a low load on the internal combustion engine 30, the intake air passing through the throttle valve 575 and flowing in the main flow path 80B flows back toward the upstream side and the intake air flows into the tumble flow path 80A, as aforementioned.

"A," "B," "fA" and "fT" are as depicted in FIG. 28 and described above.

As illustrated in the figure, the line of a throttle bore D of 80 φ represents that "tumble flow path flow rate ratio (fA/fT)" exceeds a target of 63% within the whole range of "A/(A + B)" from a lower limit of 7.9% to an upper limit of 44.7%, and the tumble flow T is favorably strengthened in that range.

The line of the throttle bore D of 48 φ represents that "tumble flow path flow rate ratio (fA/fT)" exceeds the target of 63%, in the whole range of "A/(A + B)" from a lower limit of 8.5% to an upper limit of 45.3%, and

the line of the throttle bore D of 24 φ in the whole range of "A/(A + B)" from a lower limit of 10% to an upper limit of 49%, and the tumble flow T is strengthened more favorably in those ranges.

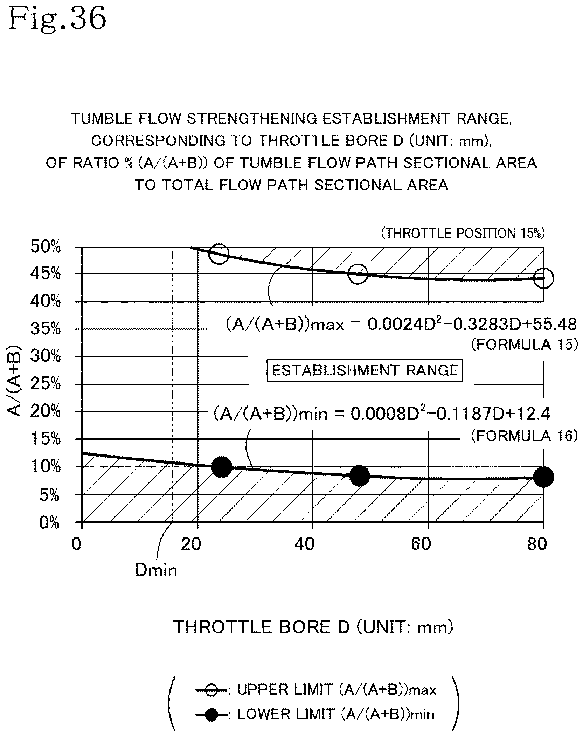

FIG. 36 is a graph depicting a tumble flow strengthening establishment range, corresponding to the throttle bore D (mm), of "A/(A + B): the ratio (%) of tumble flow path sectional area to total flow path sectional area," deduced from FIG. 35.

As illustrated in FIG. 36, taking the throttle bore D (unit: mm) on the axis of abscissas, and taking "A/(A + B): the ratio (%) of tumble flow path sectional area to total flow path sectional area" on the axis of ordinates, upper limits (A/(A + B))max and lower limits (A/(A + B))min of (A/(A + B)) on the basis of the throttle bores D of 24 φ, 48 φ and 80 φ were plotted.

Then, from the three points of the upper limits (A/(A + B))max, "Formula 15" for calculating the upper limit (A/(A + B))max of (A/(A + B)) correspondingly to the throttle bore D (unit: mm) was found out as follows.

$$(A/(A + B))max = 0.0024D^2 - 0.3283D + 55.48...(Formula~15)$$

Similarly, from the three points of the lower limits (A/(A + B))min, "Formula 16" for calculating the lower limit (A/(A + B))min of (A/(A + B)) correspondingly to the throttle bore D (unit: mm) was found out as follows.

$$(A/(A + B))min = 0.0008D^2 - 0.1187D + 12.4...(Formula\ 16)$$

Therefore, in general, when the range of "A/(A + B): the ratio (%) of tumble flow path sectional area to total flow path sectional area" to be adopted for ensuring that "tumble flow path flow rate ratio (fA/fT)" exceeds the target of 63% and the tumble flow T is strengthened more favorably, correspondingly to the throttle bore D (unit: mm), is assumed to be "tumble flow strengthening establishment range," then the upper limit (A/(A + B))max and the lower limit (A/(A + B))min indicating the tumble flow strengthening establishment range are obtained from Formula 15 and 16.

In other words by setting "A/(A + B): the ratio (%) of tumble flow path sectional area to total flow path sectional area" to within the range between the upper limit (A/(A + B))max and the lower limit (A/(A + B))min calculated by Formulas 15 and 16, correspondingly to the throttle bore D (unit: mm), the tumble flow path flow rate ratio (fA/fT) is increased, and the tumble flow T is strengthened favorably.

Note that the throttle bore D (mm) has a lower limit Dmin on a production basis, and, in that case, the tumble flow strengthening establishment range is obtained for a throttle bore of equal to or more than Dmin.

Hereinabove, a case where the intake structure for the internal combustion engine according to Embodiment 2 of the present invention is applied to a power unit 3 constituting a swing unit has been described as Example 2A. However, the intake structure for the internal combustion engine according to Embodiment 2 of the present invention is not limited in its application to only the power unit 3 having a cylinder axis C inclined forward substantially horizontally, and is applicable to power units of other styles.

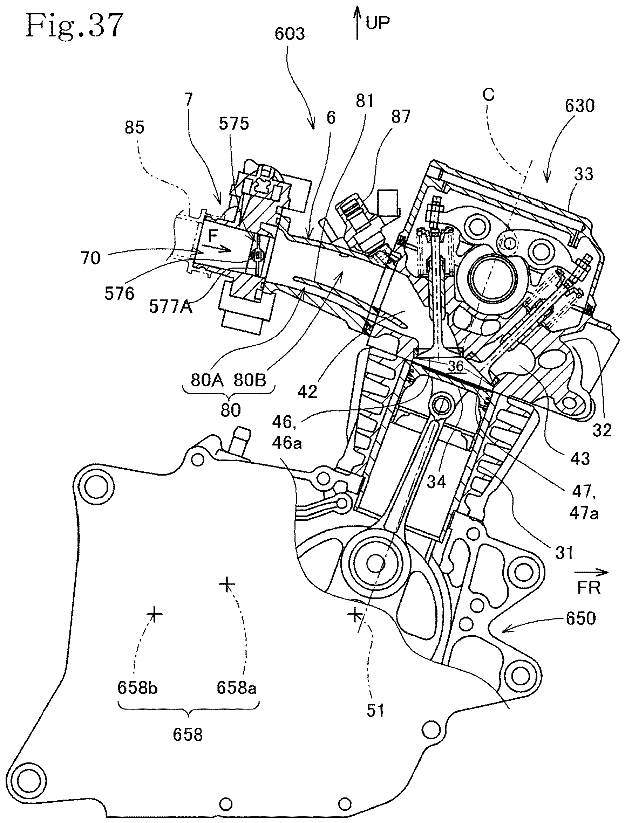

For example, the intake structure for the internal combustion engine according to the present invention produces similar effects also when applied to a power unit 603 to be mounted on a vehicle provided with an internal combustion engine with a cylinder axis C rising up as depicted in FIG. 37, or a so-called vertical type internal combustion engine 630.

This will be described below as Example 2B.

The power unit 603 of Example 2B, a right side view of which is depicted partly in section in FIG. 37, is fixed to and mounted on a body frame of a motorcycle in a posture depicted in FIG. 37. At a front portion of a power unit case 650, a cylinder block 31, a cylinder head 32 and a cylinder head cover 33 are fastened while inclined slightly forwardly upward in such a manner as to be sequentially piled up, and a crankshaft 51 is disposed in the vehicle width direction, to constitute the internal combustion engine 630.

In Embodiment 2, the internal combustion engine 630 adopts an SOHC type two-valve system.

A gear transmission 658 having a main shaft 658a and a counter shaft 658b which are parallel to the crankshaft 51 is provided at a rear portion of the power unit case 650, and the counter shaft 658b serves as an output shaft.

An exhaust port 43 is opened on the front side of the cylinder head 32 and is connected to an exhaust pipe (not illustrated), and an intake port 42 is opened on the rear side of the cylinder head 32. An inlet pipe 6, a throttle body 7 and a connecting tube 85 are sequentially connected to extend rearward, or toward the upstream side in regard of the flow of intake air, and, further, the connecting tube 85 is connected to an air cleaner device (not illustrated).

The throttle body 7 is provided with a throttle valve 575 similar to that in Example 2A. A fuel injection valve 87 is provided on a main flow path 80B side of the inlet pipe 6, like in Example 2A.

An intake flow path 80 in the inlet pipe 6 and the intake port 42 is provided with a partition section 81 similarly to Example 2A, a lower end side valve body of the throttle valve 575 is a one-end-side half 577A, and a tumble flow path 80A is located on the downstream side of the one-end-side half 577A. In other words, the tumble flow path 80A is disposed on the lower side of the intake flow path 80.

Therefore, also in this Example 2B, as depicted in FIG. 37, an intake structure for an internal combustion engine of the present invention is provided similarly to Example 2A, and a similar operation and effect can be produced.

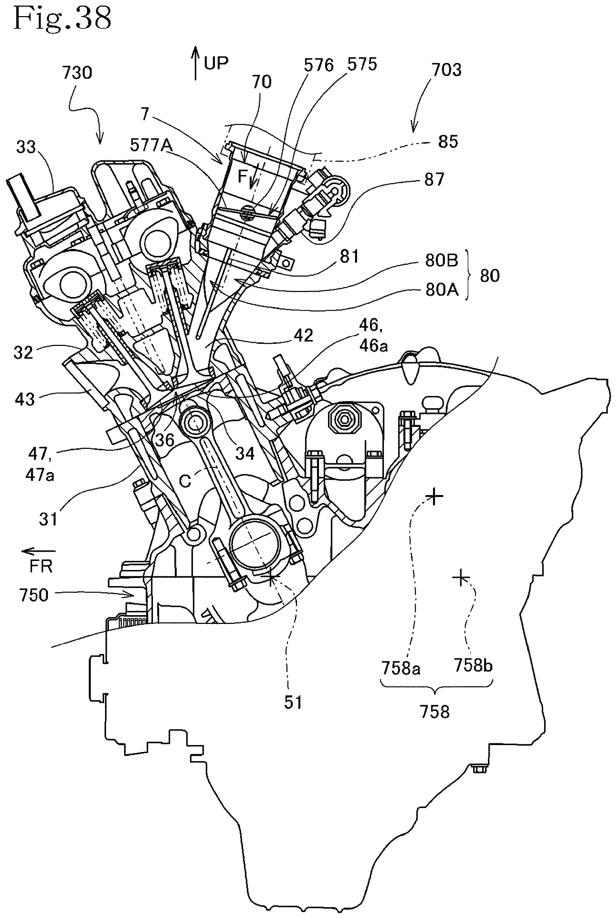

Illustrated in FIG. 38 is also a power unit 703 to be mounted on a vehicle that is provided with an internal combustion engine with a cylinder axis C rising up, or a so-called vertical type internal combustion engine 730, and the intake structure for the internal combustion engine according to the present invention produces a similar effect when applied.

This will be described below as Example 2C.

The power unit 703 of Example 2C, a left side view of which is depicted partly in section in FIG. 38, is fixed to and mounted on a body frame of a motorcycle in a posture depicted in FIG. 38. A cylinder block 31 is provided at a front portion of a power unit case 750, a cylinder head 32 and a cylinder head cover 33 are fastened thereto while inclined slightly forwardly upward in such a manner as to be sequentially piled up, and a crankshaft 51 is disposed in the vehicle width direction, to constitute the internal combustion engine 730.

In this Example 2C, the internal combustion engine 730 is of a WOHC type.

A gear transmission 758 having a main shaft 758a and a counter shaft 758b which are parallel to the crankshaft 51 is provided at a rear portion of the power unit case 750, and the counter shaft 758b serves as an output shaft.

An exhaust port 43 is opened on the front side of the cylinder head 32 and is connected to an exhaust pipe (not illustrated), an intake port 42 which is projecting is opened toward a rear upper side of the cylinder head 32, and a throttle body 7 and an air cleaner device (not illustrated) are connected thereto to extend toward the upstream side in regard of the flow of intake air.

An intake flow path 80 in the projecting intake port 42 is partitioned by a partition section 81 along the intake air flow direction F, so that a main flow path 80B is disposed on the lower side whereas a tumble flow path 80A is disposed on the upper side.

The throttle body 7 is provided with a throttle valve 575 similar to that in Example 2A. A fuel injection valve 87 is provided on the throttle body 7, and is provided on the main flow path 80B side like in Example 2A.

In Example 2C, an upper end side valve body of the throttle valve 575 is a one-end-side half 577A, and the tumble flow path 80A is located on the downstream side of the one-end-side half 577A.

Therefore, also in Example 2C, as depicted in FIG. 38, an intake structure for an internal combustion engine of the present invention similar to that in Example 2A is provided, and a similar operation and effect can be produced.

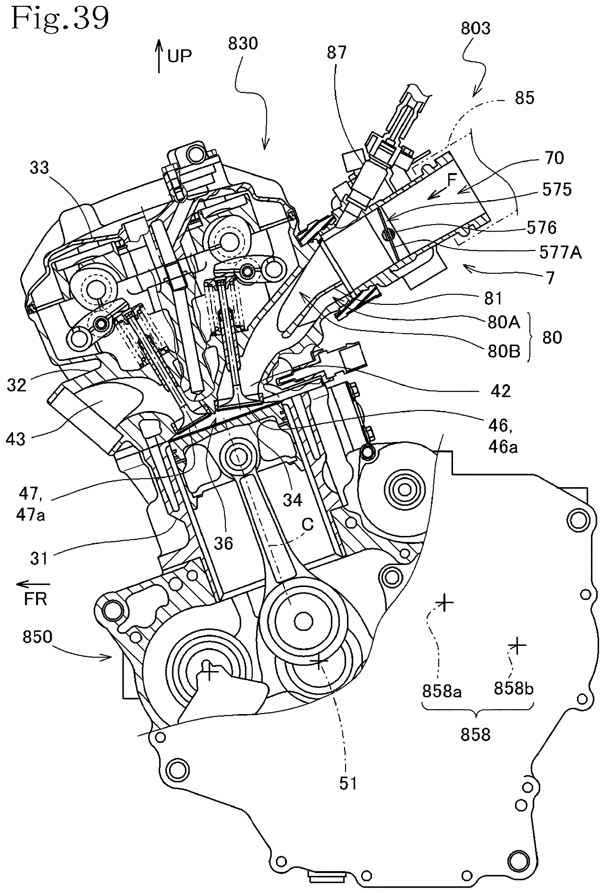

Illustrated in FIG. 39 is also a power unit 803 to be mounted on a vehicle that is provided with an internal combustion engine with a cylinder axis C raised up, or a so-called vertical type internal combustion engine 830, and the intake structure for the internal combustion engine according to the present invention produces a similar effect when applied.

This will be described below as Example 2D.

The power unit 803 of Example 2D, a left side view of which is depicted partly in section in FIG. 39, is fixed to and mounted on a body frame of a motorcycle in a posture depicted in FIG. 39. At a front portion of a power unit case 850, a cylinder block 31, a cylinder head 32 and a cylinder head cover 33 are fastened while inclined slightly forwardly upward in such a manner as to be sequentially piled up, and a crankshaft 51 is disposed in the vehicle width direction, to constitute the internal combustion engine 830.

In Example 2D, the internal combustion engine 830 is of a WOHC type.

A gear transmission 858 having a main shaft 858a and a counter shaft 858b which are parallel to the crankshaft 51 is provided at a rear portion of the power unit case 850, and the counter shaft 858b serves as an output shaft.

An exhaust port 43 is opened on the front side of the cylinder head 32 and is connected to an exhaust pipe (not illustrated), an intake port 42 which is projecting is opened toward a rear upper side of the cylinder head 32, and a throttle body 7 and an air cleaner device (not illustrated) are connected thereto to extend toward the upstream side in regard of the flow of intake air.

An intake flow path 80 in the projecting intake port 42 is partitioned by a partition section 81 along the intake air flow direction F, so that a tumble flow path 80A is disposed on the lower side whereas a main flow path 80B is disposed on the upper side.

The throttle body 7 is provided with a throttle valve 575 similar to that in Example 2A. A fuel injection valve 87 is provided on the throttle body 7, and is provided on the main flow path 80B side like in Example 2A.

In Example 2D, an upper end side valve body of the throttle valve 575 is a one-end-side half 577A, and the tumble flow path 80A is located on the downstream side of the one-end-side half 577A.

Therefore, also in Example 2D, as depicted in FIG. 39, an intake structure for an internal combustion engine of the present invention similar to that in Example 2A is provided, and a similar operation and effect can be produced.

As seen in various Examples of Embodiment 2 described above, the present invention can be configured with the tumble flow path 80A disposed on either of the upper and lower sides in the intake flow path 80. A valve-opening rotating direction and a valve-closing rotating direction of the throttle valve 575 are set according to the disposition.

In addition, the present invention can be configured as a configuration in which the inlet pipe 6 is not provided and the partition section 81 is provided only in the intake port 42, and the fuel injection valve 87 is provided at a suitable position accordingly.

[Reference Signs List]

1 ... Motorcycle, 3, 103, 203, 303, 603, 703, 803 ... Power unit, 6 ... Inlet pipe, 6a ... Upstream end, 6b ... Tapered section, 7 ... Throttle body, 30, 130, 230, 330, 630, 730, 830 ... Internal combustion engine, 31 ... Cylinder block, 31a ... Cylinder bore, 32 ... Cylinder head, 32a ... Combustion chamber ceiling surface, 34 ... Piston, 34a ... Top surface, 36 ... Combustion engine, 40 ... Intake valve port, 42 ... Intake port, 42a ... Curve outer wall section, 46 ... Intake valve, 46a ... Valve head portion, 48 ... Valve spring, 50, 150, 250, 350, 650, 750, 850 ... Power unit case, 50L... Left case half, 50a ... Crank case section, 51 ... Crankshaft, 61 ... Insulator, 70 ... Intake passage, 70a ... Inner surface, 71A, 571B ... Acute angle side gap, 71B, 571A ... Obtuse angle side gap, 72 ... Immediate downstream part, 73 ... Negative pressure region, 75, 575 ... Throttle valve, 76, 576 ... Throttle valve shaft, 77, 577 ... Valve body, 77A, 577A ... One-end-side half, 77Aa ... Peripheral edge, 77B, 577B ... Other-end-side half, 77Ba ... Peripheral edge, 80 ... Intake flow path, 80A... Tumble flow path, 80Ab ... Final end, 80B ... Main flow path, 81 ... Partition section, 81a ... Upstream-side end portion, 81b ... Downstream-side end portion, 82 ... Cutout recess, 83 ... Flow path width directional center, 87 ... Fuel injection valve, C ... Cylinder axis, F ... Intake air flow direction, T ... Tumble flow ("tumble flow" in the present invention), X ... Center axis (of intake passage 70), X' ... Center axis (of intake flow path 80), $\alpha$... Contact angle (Acute angle), $\alpha$' ... Contact angle (obtuse angle), $\beta$ ... Contact angle (obtuse angle), $\beta$' ... Contact angle (acute angle), $\theta$t ... Taper angle, A... Sectional area of tumble flow path 80A, B ... Sectional area of main flow path 80B, Sth ... Throttle bore sectional area, D ... Throttle bore, Dp ... Diameter of intake flow path 80, H ... Partition height, L ... Partition section depth, H/D ... Partition section height position, A/Sth ... Ratio (%) of tumble flow path sectional area to throttle bore sectional area, A/(A + B) ... Ratio (%) of tumble flow path sectional area to total flow path sectional area, LID ... Partition section depth position, V ... Position (throttle position) of throttle valve 75, fT ... Total intake air, fA... Intake air flowing in tumble flow path 80A, HA ... Height in curve radial direction of tumble flow path 80A, HB ... Height in curve radial direction of main flow path 80B

**Claims**

1. An intake structure for an internal combustion engine,

    comprising a throttle body (7) having an intake passage (70) constituting part of an intake flow path (80) continuous with a combustion chamber (36) of an internal combustion engine (30), a throttle valve (75) provided in the throttle body (7), an intake port (42) constituting part of the intake flow path (80), and an intake valve (46) that opens and closes an intake valve port (40) fronting on the combustion chamber (36) on a downstream end of the intake port (42),
    the intake flow path (80) being partitioned on a downstream side of the throttle valve (75) by a partition section (81) into a tumble flow path (80A) configured such that intake air passed therethrough generates a tumble flow in the combustion chamber (36) and a main flow path (80B) exclusive of the tumble flow path (80A), and
    the intake structure further comprising a fuel injection valve (87) configured to inject and supply a fuel,
    wherein a sectional area of the main flow path (80B) is greater than a sectional area of the tumble flow path (80A),
    wherein the throttle valve (75) is a butterfly type valve rotatably supported in the throttle body (7) by a throttle valve shaft (76) disposed to perpendicularly intersect a center axis (X) of the intake passage (70), and wherein a valve body (77) of the throttle valve (75) is bisected on both sides of the throttle valve shaft (76) to have a one-end-side half (77A) and an other-end-side half (77B),
    wherein a center of the throttle valve shaft (76) is spaced apart from a flow path width directional center (83) of an upstream-side end portion (81a) of the partition section (81), such that a partition section depth position LID in relation to a throttle bore D (unit: mm) is within a range between an upper limit (L/D)max that is calculated by

$$(L/D)\text{max} = 0.00008D^2 - 0.0192D + 2.58$$

    and a minimum of 0.0, where a diameter of the intake passage (70) of the throttle body (7) at a position of the throttle valve (75) is the throttle bore D, and a distance from a flow path width directional center (83) of an upstream-side end portion (81a) of the partition section (81) to a center of the throttle valve shaft (76) in the direction of a center axis (X') of the intake flow path (80) is L,
    wherein at a slight opening position of the throttle valve (75), which is a throttle position in a range from full closure of the throttle valve (75) to a 30 % open position, the intake air passes through a gap formed between the one-end-side half (77A) and an inner surface (70a) of the intake passage (70) and through a gap formed between the other-end-side half (77B) and the inner surface (70a) of the intake passage (70), and
    wherein a varying member that is configured to variably control a flow path area in the intake passage (70) in the throttle body (7) and a part ranging from the downstream of the throttle body (7) to the intake valve (46), of the intake flow path (80), is only the throttle valve (75),
    wherein in a sectional view perpendicular to the throttle valve shaft (76) and along the center axis (X) of the intake passage (70), the one-end-side half (77A) of the throttle valve (75) at the time of full closure contacts the inner surface (70a) of the intake passage (70) on a downstream side at an acute angle ($\alpha$), whereas the other-end-side half (77B) of the throttle valve (75) contacts the inner surface (70a) of the intake passage (70) on the downstream side at an obtuse angle ($\beta$), and
    the tumble flow path (80A) of the intake flow path (80) is located on the downstream side of the one-end-side half (77A), whereas the main flow path (80B) of the intake flow path (80) is located on the downstream side of the other-end-side half (77B).

2. The intake structure for the internal combustion engine as claimed in claim 1,

    wherein a distance between a center axis (X') of the intake flow path (80) and a surface on the tumble flow path side of the partition section (81), in a sectional view orthogonal to the partition section (81) and along the center axis (X') of the intake flow path (80), is a partition height H (unit: mm), and
    H/D is
    within a range between an upper limit (H/D)max and a lower limit (H/D)min that are calculated by

$$\text{Formula 1: } (H/D)max = -0.00002D^2 + 0.0025D + 0.31$$

    , and

$$\text{Formula 2: } (H/D)min = 0.00005D^2 - 0.0064D + 0.26.$$

3. The intake structure for the internal combustion engine as claimed in claim 1,

    wherein an intake passage sectional area is a throttle bore sectional area Sth, and the sectional area of the tumble flow path (80A) is A, and
    A/Sth (a ratio (%) of tumble flow path sectional area to throttle bore sectional area) is
    within a range between an upper limit (A/Sth)max and a lower limit (A/Sth)min that are calculated by

$$\text{Formula 3: } (A/Sth)max = -0.006D^2 + 0.79D + 19.82,$$

    and

$$\text{Formula 4: } (A/Sth)min = 0.002D^2 - 0.33D + 15.59.$$

4. The intake structure for the internal combustion engine as claimed in claim 1,

    wherein the sectional area of the tumble flow path (80A) is A, and the sectional area of the main flow path (80B) is B, and
    A/(A + B) (a ratio (%) of tumble flow path sectional area to total flow path sectional area) is
    within a range between an upper limit (A/(A + B))max and a lower limit (A/(A + B))min that are calculated by

$$\text{Formula 5: } (A/(A + B))max = -0.0052D^2 + 0.6402D + 26.35,$$

    and

$$\text{Formula 6: } (A/(A + B))min = 0.0023D^2 - 0.3287D + 15.19.$$

5. The intake structure for the internal combustion engine as claimed in any one of claims 1 to 4, wherein an upstream-side end portion (81a) of the partition section (81) is formed with a cutout recess (82) recessed toward a downstream side.

6. The intake structure for the internal combustion engine as claimed in any one of claims 1 to 4, wherein a diameter Dp of the intake flow path (80) of an inlet pipe (6) connected to a downstream side of the throttle body (7) is greater than throttle bore D.

7. The intake structure for the internal combustion engine as claimed in claim 6, wherein a tapered section (6b) gradually increasing in diameter toward a radial-directionally outer side is formed from an upstream end (6a) of the inlet pipe (6) toward the downstream side.

8. The intake structure for the internal combustion engine as claimed in any one of claims 1 to 4,

   wherein the tumble flow path (80A) is provided on a curve inner periphery side of the intake flow path (80) being curved, whereas the main flow path (80B) is provided on a curve outer periphery side of the curved intake flow path (80),
   wherein a height HB of the main flow path (80B) of the inlet pipe (6) connected to a downstream side of the throttle body (7) in a curve radial direction is greater than a height HA of the tumble flow path (80A) of the inlet pipe (6) in the curve radial direction, and
   wherein the fuel injection valve (87) is disposed on the main flow path side.

9. An intake structure for an internal combustion engine,

   comprising a throttle body (7) having an intake passage (70) constituting part of an intake flow path (80) continuous with a combustion chamber (36) of an internal combustion engine (30), a throttle valve (575) provided in the throttle body (7), an intake port (42) constituting part of the intake flow path (80), and an intake valve (46) that opens and closes an intake valve port (40) fronting on the combustion chamber (36) on a downstream end of the intake port (42),
   the intake flow path (80) being partitioned on a downstream side of the throttle valve (575) by a partition section (81) into a tumble flow path (80A) configured such that intake air passed therethrough generates a tumble flow in the combustion chamber (36) and a main flow path (80B) exclusive of the tumble flow path (80A), and
   the intake structure further comprising a fuel injection valve (87) configured to inject and supply a fuel,
   wherein a sectional area of the main flow path (80B) is greater than a sectional area of the tumble flow path (80A),
   wherein the throttle valve (575) is a butterfly type valve rotatably supported in the throttle body (7) by a throttle valve shaft (576) disposed to perpendicularly intersect a center axis (X) of the intake passage (70), and wherein a valve body (577) of the throttle valve (575) is bisected on both sides of the throttle valve shaft (576) to have a one-end-side half (577A) and an other-end-side half 577B),
   wherein a center of the throttle valve shaft (576) is spaced apart from a flow path width directional center (83) of an upstream-side end portion (81a) of the partition section (81), such that a partition section depth position LID in relation to a throttle bore D (unit: mm) is within a range between an upper limit (L/D)max that is calculated by

$$(L/D)\text{max} = 0.0002D^2 - 0.0308D + 2.78$$

   and a minimum of 0.0, where a diameter of the intake passage (70) of the throttle body (7) at a position of the throttle valve (75) is the throttle bore D, and a distance from a flow path width directional center (83) of an upstream-side end portion (81a) of the partition section (81) to a center of the throttle valve shaft (76) in the direction of a center axis (X') of the intake flow path (80) is L,
   wherein at a slight opening position of the throttle valve (575), which is a throttle position in a range from full closure of the throttle valve (575) to a 30 % open position, the intake air passes through a gap formed between the one-end-side half (577A) and an inner surface (70a) of the intake passage (70) and through a gap formed between the other-end-side half (577B) and the inner surface (70a) of the intake passage (70), and
   wherein a varying member that is configured to variably control a flow path area in the intake passage (70) in the throttle body (7) and a part ranging from the downstream of the throttle body (7) to the intake valve (46), of the intake flow path (80), is only the throttle valve (575).
   wherein in a sectional view perpendicular to the throttle valve shaft (576) and along a center axis (X) of the intake passage (70), the one-end-side half (577A) of the throttle valve (575) at the time of full closure contacts an inner surface (70a) of the intake passage (70) on a downstream side at an obtuse angle ($\alpha$'), whereas the other-end-side half (577B) of the throttle valve (575) contacts the inner surface (70a) of the intake passage (70) on the downstream side at an acute angle ($\beta$'), and
   wherein the tumble flow path (80A) of the intake flow path (80) is located on the downstream side of the one-end-side half (577A), whereas the main flow path (80B) of the intake flow path (80) is located on the downstream side of the other-end-side half (577B).

10. The intake structure for the internal combustion engine as claimed in claim 9,

    wherein a distance between the center axis (X') of the intake flow path (80) and a surface on the tumble flow path (80A) of the partition section (81) in a sectional view orthogonal to the partition section (81) and along the center axis (X') of the intake flow path (80) is a partition height H (unit: mm), and

H/D is
within a range between an upper limit (H/D)max and a lower limit (H/D)min that are calculated by

$$\text{Formula 11: } (H/D)max = -0.000004D^2 + 0.0006D + 0.34,$$

and

$$\text{Formula 12: } (H/D)min = -0.0000004D^2 + 0.0006D + 0.02.$$

11. The intake structure for the internal combustion engine as claimed in claim 9,

wherein an intake passage sectional area is a throttle bore sectional area Sth, and the sectional area of the tumble flow path (80A) is A, and
A/Sth (a ratio (%) of tumble flow path sectional area to throttle bore sectional area) is
within a range between an upper limit (A/Sth)max and a lower limit (A/Sth)min that are calculated by

$$\text{Formula 13: } (A/Sth)max = -0.001D^2 + 0.06D + 45.34,$$

and

$$\text{Formula 14: } (A/Sth)min = 0.0005D^2 - 0.08D + 11.54.$$

12. The intake structure for the internal combustion engine as claimed in claim 9,

wherein the sectional area of the tumble flow path (80A) is A, and the sectional area of the main flow path (80B) is B, and
A/(A + B) (a ratio (%) of tumble flow path sectional area to total flow path sectional area) is
within a range between an upper limit (A/(A + B))max and a lower limit (A/(A + B))min that are calculated by

$$\text{Formula 15: } (A/(A + B))max = 0.0024D^2 - 0.3283D + 55.48,$$

and

$$\text{Formula 16: } (A/(A + B))min = 0.0008D^2 - 0.1187D + 12.4.$$

**Patentansprüche**

1. Ansaugstruktur für einen Verbrennungsmotor,

mit einem Drosselkörper (7), der einen Ansaugkanal (70) als Teil eines Ansaugfließwegs (80) aufweist, der mit einer Brennkammer (36) eines Verbrennungsmotors (30) durchgängig ist, einem Drosselventil (75), das in dem Drosselkörper (7) vorgesehen ist, einem Ansaugstutzen (42) als Teil des Ansaugfließwegs (80) sowie einem Ansaugventil (46), das eine Ansaugventilöffnung (40) öffnet und verschließt, die der Brennkammer (36) an einem stromabwärtigen Ende des Ansaugstutzens (42) gegenüberliegt,
wobei der Ansaugfließweg (80) auf einer stromabwärtigen Seite des Drosselventils (75) durch einen Teilungsabschnitt (81) in einen Taumelfließweg (80A), der so konfiguriert ist, dass durch diesen geführte Ansaugluft einen Taumeldurchfluss in der Brennkammer (36) erzeugt, und einen Hauptfließweg (80B) abgesehen von dem Taumelfließweg (80A) untergliedert ist, und
die Ansaugstruktur weiterhin ein Kraftstoffeinspritzventil (87) umfasst, das zum Einspritzen und Zuführen eines Kraftstoffs konfiguriert ist,

wobei eine Querschnittsfläche des Hauptfließwegs (80B) größer als eine Querschnittsfläche des Taumelfließwegs (80A) ist,

wobei das Drosselventil (75) ein Drosselklappenventil ist, das in dem Drosselkörper (7) über eine Drosselklappenwelle (76) drehbar gelagert ist, welche so angeordnet ist, dass sie eine Mittelachse (X) des Ansaugkanals (70) senkrecht schneidet, und wobei ein Ventilkörper (77) des Drosselventils (76) auf beiden Seiten der Drosselklappenwelle (76) halbiert ist, so dass er eine Hälfte auf einer Endseite (77A) und eine Hälfte auf der anderen Endseite (77B) aufweist,

wobei eine Mitte der Drosselklappenwelle (76) von einer auf eine Fließwegbreite gerichteten Mitte (83) eines stromaufwärtsseitigen Endabschnitts (81a) des Teilungsabschnitts (81) derart beabstandet ist, dass eine Tiefenposition des Teilungsabschnitts L/D bezüglich einer Drosselbohrung D (Einheit: mm) in einem Bereich zwischen einer Obergrenze (L/D)max, die durch

$$(L/D)max = 0.00008D^2 - 0.0192D + 2.58$$

berechnet wird,

und einem Minimum von 0.0 liegt, in dem ein Durchmesser des Ansaugkanals (70) des Drosselkörpers (7) an einer Position des Drosselventils (75) die Drosselbohrung D darstellt, und ein Abstand von einer auf eine Fließwegbreite gerichteten Mitte (83) eines stromaufwärtsseitigen Endabschnitts (81a) des Teilungsabschnitts (81) zu einer Mitte der Drosselklappenwelle (76) in Richtung einer Mittelachse (X') des Ansaugfließwegs (80) L darstellt,

wobei an einer leicht geöffneten Position des Drosselventils (75), die eine Drosselposition in einem Bereich von vollständigem Verschluss des Drosselventils (75) bis zu einer 30% geöffneten Position darstellt, die Ansaugluft durch einen zwischen der Hälfte auf einer Endseite (77A) und einer Innenfläche (70a) des Ansaugkanals (70) gebildeten Spalt sowie durch einen zwischen der Hälfte auf der anderen Endseite (77B) und der Innenfläche (70a) des Ansaugkanals (70) gebildeten Spalt gelangt, und

wobei ein sich veränderndes Teil, das dazu konfiguriert ist, eine Fließwegfläche in dem Ansaugkanal (70) in dem Drosselkörper (7) und einen Teil im Bereich von stromabwärts des Drosselkörpers (7) bis zum Ansaugventil (46) des Ansaugfließwegs (80) veränderlich zu steuern, nur das Drosselventil (75) ist,

wobei in einer Schnittansicht senkrecht zur Drosselklappenwelle (76) und entlang der Mittelachse (X) des Ansaugkanals (70) die Hälfte auf einer Endseite (77A) des Drosselventils (75) zum Zeitpunkt des vollständigen Verschlusses die Innenfläche (70a) des Ansaugkanals (70) auf einer stromabwärtigen Seite in einem spitzen Winkel ($\alpha$) kontaktiert, wohingegen die Hälfte auf der anderen Endseite (77B) des Drosselventils (75) die Innenfläche (70a) des Ansaugkanals (70) auf der stromabwärtigen Seite in einem stumpfen Winkel (($3) kontaktiert, und

sich der Taumelfließweg (80A) des Ansaugfließwegs (80) auf der stromabwärtigen Seite der Hälfte auf einer Endseite (77A) befindet, während sich der Hauptfließweg (80B) des Ansaugfließwegs (80) auf der stromabwärtigen Seite der Hälfte auf der anderen Endseite (77B) befindet.

2. Ansaugstruktur für den Verbrennungsmotor nach Anspruch 1,

wobei ein Abstand zwischen einer Mittelachse (X') des Ansaugfließwegs (80) und einer Fläche auf der Taumelfließwegseite des Teilungsabschnitts (81) in einer Schnittansicht orthogonal zu dem Teilungsabschnitt (81) und entlang der Mittelachse (X') des Ansaugfließwegs (80) eine Teilungshöhe H (Einheit: mm) darstellt, und H/D

in einem Bereich zwischen einer Obergrenze (H/D)max und einer Untergrenze (H/D)min liegt, welche durch

$$\text{Formel 1: } (H/D)max = -0.00002D^2 + 0.0025D + 0.31$$

sowie

$$\text{Formel 2: } (H/D)min = 0.00005D^2 - 0.0064D + 0.26$$

berechnet werden.

3. Ansaugstruktur für den Verbrennungsmotor nach Anspruch 1,

wobei eine Querschnittsfläche des Ansaugkanals eine Querschnittsfläche der Drosselbohrung Sth ist, und die Querschnittsfläche des Taumelfließwegs (80A) Aist, und
A/Sth (ein Verhältnis (%) von Taumelfließweg-Querschnittsfläche zu Drosselbohrungs-Querschnittsfläche) in einem Bereich zwischen einer Obergrenze (A/Sth)max und einer Untergrenze (A/Sth)min liegt, welche durch

$$\text{Formel 3: } (A/Sth)max = -0.006D^2 + 0.79D + 19.82$$

sowie

$$\text{Formel 4: } (A/Sth)min = 0.002D^2 - 0.33D + 15.59$$

berechnet werden.

4. Ansaugstruktur für den Verbrennungsmotor nach Anspruch 1, wobei die Querschnittsfläche des Taumelfließwegs (80A) A ist, und die Querschnittsfläche des Hauptfließwegs (80B) B ist, und

A/(A + B) (ein Verhältnis (%) von Taumelfließweg-Querschnittsfläche zu Gesamtfließweg-Querschnittsfläche) in einem Bereich zwischen einer Obergrenze (A/(A + B))max und einer Untergrenze (A/(A + B))min liegt, welche durch

$$\text{Formel 5: } (A/(A + B))max = -0.0052D^2 + 0.6402D + 26.35$$

sowie

$$\text{Formel 6: } (A/(A + B))min = 0.0023D^2 - 0.3287D + 15.19$$

berechnet werden.

5. Ansaugstruktur für den Verbrennungsmotor nach einem der Ansprüche 1 bis 4,
wobei ein stromaufwärtsseitiger Endabschnitt (81a) des Teilungsabschnitts (81) mit einer ausgeschnittenen Vertiefung (82) ausgebildet ist, die zu einer stromabwärtigen Seite hin vertieft ist.

6. Ansaugstruktur für den Verbrennungsmotor nach einem der Ansprüche 1 bis 4, wobei ein Durchmesser Dp des Ansaugfließwegs (80) eines mit einer stromabwärtigen Seite des Drosselkörpers (7) verbundenen Saugrohrs (6) größer als die Drosselbohrung D ist.

7. Ansaugstruktur für den Verbrennungsmotor nach Anspruch 6, wobei ein verjüngter Abschnitt (6b), dessen Durchmesser in Richtung einer radial gerichteten Außenseite allmählich zunimmt, von einem stromaufwärtigen Ende (6a) des Saugrohrs (6) zur stromabwärtigen Seite hin ausgebildet ist.

8. Ansaugstruktur für den Verbrennungsmotor nach einem der Ansprüche 1 bis 4,

wobei der Taumelfließweg (80A) auf einer Krümmungsinnenumfangsseite des gekrümmten Ansaugfließwegs (80) vorgesehen ist, während der Hauptfließweg (80B) auf einer Krümmungsaußenumfangsseite des gekrümmten Ansaugfließwegs (80) vorgesehen ist,
wobei eine Höhe HB des Hauptfließwegs (80B) des mit einer stromabwärtigen Seite des Drosselkörpers (7) verbundenen Saugrohrs (6) in einer radialen Krümmungsrichtung größer als eine Höhe HA des Taumelfließwegs (80A) des Saugrohrs (6) in der radialen Krümmungsrichtung ist, und
wobei das Kraftstoffeinspritzventil (87) auf der Hauptfließwegseite angeordnet ist.

9. Ansaugstruktur für einen Verbrennungsmotor,

mit einem Drosselkörper (7), der einen Ansaugkanal (70) als Teil eines Ansaugfließwegs (80) aufweist, der mit einer Brennkammer (36) eines Verbrennungsmotors (30) durchgängig ist, einem Drosselventil (75), das in dem Drosselkörper (7) vorgesehen ist, einem Ansaugstutzen (42) als Teil des Ansaugfließwegs (80) sowie einem Ansaugventil (46), das eine Ansaugventilöffnung (40) öffnet und verschließt, die der Brennkammer (36) an einem stromabwärtigen Ende des Ansaugstutzens (42) gegenüberliegt,

wobei der Ansaugfließweg (80) auf einer stromabwärtigen Seite des Drosselventils (575) durch einen Teilungsabschnitt (81) in einen Taumelfließweg (80A), der so konfiguriert ist, dass durch diesen geführte Ansaugluft einen Taumeldurchfluss in der Brennkammer (36) erzeugt, und einen Hauptfließweg (80B) ohne den Taumelfließweg (80A) untergliedert ist, und

die Ansaugstruktur weiterhin ein Kraftstoffeinspritzventil (87) umfasst, das zum Einspritzen und Zuführen eines Kraftstoffs konfiguriert ist,

wobei eine Querschnittsfläche des Hauptfließwegs (80B) größer als eine Querschnittsfläche des Taumelfließwegs (80A) ist,

wobei das Drosselventil (575) ein Drosselklappenventil ist, das in dem Drosselkörper (7) über eine Drosselklappenwelle (576) drehbar gelagert ist, welche so angeordnet ist, dass sie eine Mittelachse (X) des Ansaugkanals (70) senkrecht schneidet, und wobei ein Ventilkörper (577) des Drosselventils (576) auf beiden Seiten der Drosselklappenwelle (576) halbiert ist, so dass er eine Hälfte auf einer Endseite (577A) und eine Hälfte auf der anderen Endseite (577B) aufweist,

wobei eine Mitte der Drosselklappenwelle (576) von einer auf eine Fließwegbreite gerichteten Mitte (83) eines stromaufwärtsseitigen Endabschnitts (81a) des Teilungsabschnitts (81) derart beabstandet ist, dass eine Tiefenposition des Teilungsabschnitts L/D bezüglich einer Drosselbohrung D (Einheit: mm) in einem Bereich zwischen einer Obergrenze (L/D)max, die durch

$$(L/D)max = 0.0002D^2 - 0.0308D + 2.78$$

berechnet wird,

und einem Minimum von 0.0 liegt, in dem ein Durchmesser des Ansaugkanals (70) des Drosselkörpers (7) an einer Position des Drosselventils (75) die Drosselbohrung D darstellt, und ein Abstand von einer auf eine Fließwegbreite gerichteten Mitte (83) eines stromaufwärtsseitigen Endabschnitts (81a) des Teilungsabschnitts (81) zu einer Mitte der Drosselklappenwelle (76) in Richtung einer Mittelachse (X') des Ansaugfließwegs (80) L darstellt,

wobei an einer leicht geöffneten Position des Drosselventils (575), die eine Drosselposition in einem Bereich vom vollständigen Verschluss des Drosselventils (575) bis zu einer 30% geöffneten Position darstellt, die Ansaugluft durch einen zwischen der Hälfte auf einer Endseite (577A) und einer Innenfläche (70a) des Ansaugkanals (70) gebildeten Spalt sowie durch einen zwischen der Hälfte auf der anderen Endseite (577B) und der Innenfläche (70a) des Ansaugkanals (70) gebildeten Spalt gelangt, und

wobei ein sich veränderndes Teil, das dazu konfiguriert ist, eine Fließwegfläche in dem Ansaugkanal (70) in dem Drosselkörper (7) und einen Teil im Bereich von stromabwärts des Drosselkörpers (7) bis zum Ansaugventil (46) des Ansaugfließwegs (80) veränderlich zu steuern, lediglich das Drosselventil (575) ist,

wobei in einer Schnittansicht senkrecht zur Drosselklappenwelle (576) und entlang der Mittelachse (X) des Ansaugkanals (70) die Hälfte auf einer Endseite (577A) des Drosselventils (575) zum Zeitpunkt des vollständigen Verschlusses eine Innenfläche (70a) des Ansaugkanals (70) auf einer stromabwärtigen Seite in einem stumpfen Winkel (α') kontaktiert, wohingegen die Hälfte auf der anderen Endseite (577B) des Drosselventils (575) die Innenfläche (70a) des Ansaugkanals (70) auf der stromabwärtigen Seite in einem spitzen Winkel (β') kontaktiert, und

wobei sich der Taumelfließweg (80A) des Ansaugfließwegs (80) auf der stromabwärtigen Seite der Hälfte auf einer Endseite (577A) befindet, während sich der Hauptfließweg (80B) des Ansaugfließwegs (80) auf der stromabwärtigen Seite der Hälfte auf der anderen Endseite (577B) befindet.

**10.** Ansaugstruktur für den Verbrennungsmotor nach Anspruch 9,

wobei ein Abstand zwischen der Mittelachse (X') des Ansaugfließwegs (80) und einer Fläche auf dem Taumelfließweg (80A) des Teilungsabschnitts (81) in einer Schnittansicht orthogonal zu dem Teilungsabschnitt (81) und entlang der Mittelachse (X') des Ansaugfließwegs (80) eine Teilungshöhe H (Einheit: mm) darstellt, und H/D

in einem Bereich zwischen einer Obergrenze (H/D)max und einer Untergrenze (H/D)min liegt, welche durch

$$\text{Formel 11: } (H/D)max = -0.000004D^2 + 0.0006D + 0.34$$

sowie

$$\text{Formel 12: } (H/D)\text{min} = 0.0000004D^2 + 0.0006D + 0.02$$

berechnet werden.

**11.** Ansaugstruktur für den Verbrennungsmotor nach Anspruch 9,

wobei eine Querschnittsfläche des Ansaugkanals eine Querschnittsfläche der Drosselbohrung Sth ist, und die Querschnittsfläche des Taumelfließwegs (80A) Aist, und
A/Sth (ein Verhältnis (%) von Taumelfließweg-Querschnittsfläche zu Drosselbohrungs-Querschnittsfläche) in einem Bereich zwischen einer Obergrenze (A/Sth)max und einer Untergrenze (A/Sth)min liegt, welche durch

$$\text{Formel 13: } (A/Sth)\text{max} = -0.001D^2 + 0.06D + 45.34$$

sowie

$$\text{Formel 14: } (A/Sth)\text{min} = 0.0005D^2 - 0.08D + 11.54$$

berechnet werden.

**12.** Ansaugstruktur für den Verbrennungsmotor nach Anspruch 9, wobei die Querschnittsfläche des Taumelfließwegs (80A) A ist, und die Querschnittsfläche des Hauptfließwegs (80B) B ist, und

A/(A + B) (ein Verhältnis (%) von Taumelfließweg-Querschnittsfläche zu Gesamtfließweg-Querschnittsfläche) in einem Bereich zwischen einer Obergrenze (A/(A + B))max und einer Untergrenze (A/(A + B))min liegt, welche durch

$$\text{Formel 15: } (A/(A + B))\text{max} = 0.0024D^2 - 0.3283D + 55.48$$

sowie

$$\text{Formel 16: } (A/(A + B))\text{min} = 0.0008D^2 - 0.1187D + 12.4$$

berechnet werden.

**Revendications**

**1.** Structure d'admission pour un moteur à combustion interne,

comprenant un corps de papillon des gaz (7) possédant un passage d'admission (70) constituant une partie d'un chemin d'écoulement d'admission (80) continu avec une chambre de combustion (36) d'un moteur à combustion interne (30), une soupape de papillon des gaz (75) disposée dans le corps de papillon des gaz (7), un orifice d'admission (42) constituant une partie du chemin d'écoulement d'admission (80), et une soupape d'admission (46) qui ouvre et ferme un orifice de soupape d'admission (40) devant la chambre de combustion (36) sur une extrémité aval de l'orifice d'admission (42),
le chemin d'écoulement d'admission (80) étant séparé sur un côté aval de la soupape de papillon des gaz (75) par une section de séparation (81) en un chemin d'écoulement en tourbillon (80A) configuré de telle sorte que de l'air d'admission qui passe à travers celui-ci génère un écoulement en tourbillon dans la chambre de combustion (36) et en un chemin d'écoulement principal (80B) à l'exclusion du chemin d'écoulement en tourbillon (80A), et
la structure d'admission comprenant en outre une soupape d'injection de carburant (87) configurée pour injecter et apporter un carburant,

dans laquelle une superficie en coupe du chemin d'écoulement principal (80B) est supérieure à une superficie en coupe du chemin d'écoulement en tourbillon (80A),

dans laquelle la soupape de papillon des gaz (75) est une soupape de type papillon supportée en rotation dans le corps de papillon des gaz (7) par un arbre de soupape de papillon des gaz (76) disposé pour couper perpendiculairement un axe central (X) du passage d'admission (70), et dans laquelle un corps de soupape (77) de la soupape de papillon des gaz (75) est coupé sur les deux côtés de l'arbre de soupape de papillon des gaz (76) pour avoir une moitié côté première extrémité (77A) et une moitié côté autre extrémité (77B),

dans laquelle un centre de l'arbre de soupape de papillon des gaz (76) est espacé d'un centre directionnel de largeur de chemin d'écoulement (83) d'une partie d'extrémité côté amont (81a) de la section de séparation (81), de telle sorte qu'une position de profondeur de section de séparation L/D par rapport à un alésage de papillon des gaz D (unité : mm) se trouve dans une plage entre une limite supérieure (L/D)max qui est calculée par

$$(L/D)max = 0{,}00008D^2 - 0{,}0192D + 2{,}58$$

et un minimum de 0,0, où un diamètre du passage d'admission (70) du corps de papillon des gaz (7) à une position de la soupape de papillon des gaz (75) est l'alésage de papillon des gaz D, et une distance depuis un centre directionnel de largeur de chemin d'écoulement (83) d'une partie d'extrémité côté amont (81a) de la section de séparation (81) jusqu'à un centre de l'arbre de soupape de papillon des gaz (76) dans la direction d'un axe central (X') du chemin d'écoulement d'admission (80) est L,

dans laquelle à une position d'ouverture légère de la soupape de papillon des gaz (75), qui est une position de papillon des gaz dans une plage allant d'une fermeture totale de la soupape de papillon des gaz (75) à une position ouverte à 30 %, l'air d'admission passe à travers un espace formé entre la moitié côté première extrémité (77A) et une surface intérieure (70a) du passage d'admission (70) et à travers un espace formé entre la moitié côté autre extrémité (77B) et la surface intérieure (70a) du passage d'admission (70), et

dans laquelle un organe de variation qui est configuré pour commander de manière variable une superficie de chemin d'écoulement dans le passage d'admission (70) dans le corps de papillon des gaz (7) et une partie allant de l'aval du corps de papillon des gaz (7) à la soupape d'admission (46), du chemin d'écoulement d'admission (80), est seulement la soupape de papillon des gaz (75),

dans laquelle, sur une vue en coupe perpendiculaire à l'arbre de soupape de papillon des gaz (76) et le long de l'axe central (X) du passage d'admission (70), la moitié côté première extrémité (77A) de la soupape de papillon des gaz (75) au moment de la fermeture totale est en contact avec la surface intérieure (70a) du passage d'admission (70) sur un côté aval à un angle aigu (α), alors que la moitié côté autre extrémité (77B) de la soupape de papillon des gaz (75) est en contact avec la surface intérieure (70a) du passage d'admission (70) sur le côté aval à un angle obtus (β), et

le chemin d'écoulement en tourbillon (80A) du chemin d'écoulement d'admission (80) est situé sur le côté aval de la moitié côté première extrémité (77A), alors que le chemin d'écoulement principal (80B) du chemin d'écoulement d'admission (80) est situé sur le côté aval de la moitié côté autre extrémité (77B).

2. Structure d'admission pour le moteur à combustion interne selon la revendication 1,

dans laquelle une distance entre un axe central (X') du chemin d'écoulement d'admission (80) et une surface sur le côté chemin d'écoulement en tourbillon de la section de séparation (81), sur une vue en coupe orthogonale à la section de séparation (81) et le long de l'axe central (X') du chemin d'écoulement d'admission (80), est une hauteur de séparation H (unité : mm), et

H/D est

dans une plage entre une limite supérieure (H/D)max et une limite inférieure (H/D)min qui sont calculées par

$$\text{Formule 1 : } (H/D)max = -0{,}00002D^2 + 0{,}0025D + 0{,}31,$$

et

$$\text{Formule 2 : } (H/D)min = 0{,}00005D^2 + 0{,}0064D + 0{,}26.$$

3. Structure d'admission pour le moteur à combustion interne selon la revendication 1,

dans laquelle une superficie en coupe de passage d'admission est une superficie en coupe d'alésage de papillon des gaz Sth, et la superficie en coupe du chemin d'écoulement en tourbillon (80A) est A, et

A/Sth (un rapport (%) de la superficie en coupe de chemin d'écoulement en tourbillon sur la superficie en coupe d'alésage de papillon des gaz) est

dans une plage entre une limite supérieure (A/Sth)max et une limite inférieure (A/Sth)min qui sont calculées par

$$\text{Formule 3 : } (A/Sth)max = -0{,}006D^2 + 0{,}79D + 19{,}82,$$

et

$$\text{Formule 4 : } (A/Sth)min = 0{,}002D^2 - 0{,}33D + 15{,}59.$$

4. Structure d'admission pour le moteur à combustion interne selon la revendication 1, dans laquelle la superficie en coupe du chemin d'écoulement en tourbillon (80A) est A, et la superficie en coupe du chemin d'écoulement principal (80B) est B, et

A/(A + B) (un rapport (%) de la superficie en coupe de chemin d'écoulement en tourbillon sur la superficie en coupe de chemin d'écoulement total) est

dans une plage entre une limite supérieure (A/(A + B))max et une limite inférieure (A/(A + B))min qui sont calculées par

$$\text{Formule 5 : } (A/(A + B))max = -0{,}0052D^2 + 0{,}6402D + 26{,}35,$$

et

$$\text{Formule 6 : } (A/(A + B))min = 0{,}0023D^2 - 0{,}3287D + 15{,}19.$$

5. Structure d'admission pour le moteur à combustion interne selon l'une quelconque des revendications 1 à 4, dans laquelle une partie d'extrémité côté amont (81a) de la section de séparation (81) est formée avec un évidement découpé (82) évidé vers un côté aval.

6. Structure d'admission pour le moteur à combustion interne selon l'une quelconque des revendications 1 à 4, dans laquelle un diamètre Dp du chemin d'écoulement d'admission (80) d'un tuyau d'entrée (6) raccordé à un côté aval du corps de papillon des gaz (7) est supérieur à l'alésage de papillon des gaz D.

7. Structure d'admission pour le moteur à combustion interne selon la revendication 6, dans laquelle une section conique (6b) dont le diamètre augmente progressivement vers un côté radial-directionnellement extérieur est formée depuis une extrémité amont (6a) du tuyau d'entrée (6) vers le côté aval.

8. Structure d'admission pour le moteur à combustion interne selon l'une quelconque des revendications 1 à 4,

dans laquelle le chemin d'écoulement en tourbillon (80A) est disposé sur un côté périphérie intérieure de courbe du chemin d'écoulement d'admission (80) qui est incurvé, alors que le chemin d'écoulement principal (80B) est disposé sur un côté périphérie extérieure de courbe du chemin d'écoulement d'admission incurvé (80),

dans laquelle une hauteur HB du chemin d'écoulement principal (80B) du tuyau d'entrée (6) raccordé à un côté aval du corps de papillon des gaz (7) dans une direction radiale de courbe est supérieure à une hauteur HA du chemin d'écoulement en tourbillon (80A) du tuyau d'entrée (6) dans la direction radiale de courbe, et

dans laquelle la soupape d'injection de carburant (87) est disposée sur le côté chemin d'écoulement principal.

9. Structure d'admission pour un moteur à combustion interne,

comprenant un corps de papillon des gaz (7) possédant un passage d'admission (70) constituant une partie d'un chemin d'écoulement d'admission (80) continu avec une chambre de combustion (36) d'un moteur à combustion interne (30), une soupape de papillon des gaz (575) disposée dans le corps de papillon des gaz (7), un orifice d'admission (42) constituant une partie du chemin d'écoulement d'admission (80), et une soupape d'admission (46) qui ouvre et ferme un orifice de soupape d'admission (40) devant la chambre de combustion (36) sur une extrémité aval de l'orifice d'admission (42),

le chemin d'écoulement d'admission (80) étant séparé sur un côté aval de la soupape de papillon des gaz (575) par une section de séparation (81) en un chemin d'écoulement en tourbillon (80A) configuré de telle sorte que de l'air d'admission qui passe à travers celui-ci génère un écoulement en tourbillon dans la chambre de combustion (36) et en un chemin d'écoulement principal (80B) à l'exclusion du chemin d'écoulement en tourbillon (80A), et

la structure d'admission comprenant en outre une soupape d'injection de carburant (87) configurée pour injecter et apporter un carburant,

dans laquelle une superficie en coupe du chemin d'écoulement principal (80B) est supérieure à une superficie en coupe du chemin d'écoulement en tourbillon (80A),

dans laquelle la soupape de papillon des gaz (575) est une soupape de type papillon supportée en rotation dans le corps de papillon des gaz (7) par un arbre de soupape de papillon des gaz (576) disposé pour couper perpendiculairement un axe central (X) du passage d'admission (70), et dans laquelle un corps de soupape (577) de la soupape de papillon des gaz (575) est coupé sur les deux côtés de l'arbre de soupape de papillon des gaz (576) pour avoir une moitié côté première extrémité (577A) et une moitié côté autre extrémité (577B),

dans laquelle un centre de l'arbre de soupape de papillon des gaz (576) est espacé d'un centre directionnel de largeur de chemin d'écoulement (83) d'une partie d'extrémité côté amont (81a) de la section de séparation (81), de telle sorte qu'une position de profondeur de section de séparation L/D par rapport à un alésage de papillon des gaz D (unité : mm) se trouve dans une plage entre une limite supérieure (L/D)max qui est calculée par

$$(L/D)max = 0,0002D^2 - 0,0308D + 2,78$$

et un minimum de 0,0, où un diamètre du passage d'admission (70) du corps de papillon des gaz (7) à une position de la soupape de papillon des gaz (75) est l'alésage de papillon des gaz D, et une distance depuis un centre directionnel de largeur de chemin d'écoulement (83) d'une partie d'extrémité côté amont (81a) de la section de séparation (81) jusqu'à un centre de l'arbre de soupape de papillon des gaz (76) dans la direction d'un axe central (X') du chemin d'écoulement d'admission (80) est L,

dans laquelle, à une position d'ouverture légère de la soupape de papillon des gaz (575), qui est une position de papillon des gaz dans une plage allant d'une fermeture totale de la soupape de papillon des gaz (575) à une position ouverte à 30 %, l'air d'admission passe à travers un espace formé entre la moitié côté première extrémité (577A) et une surface intérieure (70a) du passage d'admission (70) et à travers un espace formé entre la moitié côté autre extrémité (577B) et la surface intérieure (70a) du passage d'admission (70), et

dans laquelle un organe de variation qui est configuré pour commander de manière variable une superficie de chemin d'écoulement dans le passage d'admission (70) dans le corps de papillon des gaz (7) et une partie allant de l'aval du corps de papillon des gaz (7) à la soupape d'admission (46), du chemin d'écoulement d'admission (80), est seulement la soupape de papillon des gaz (575),

dans laquelle, sur une vue en coupe perpendiculaire à l'arbre de soupape de papillon des gaz (576) et le long de l'axe central (X) du passage d'admission (70), la moitié côté première extrémité (577A) de la soupape de papillon des gaz (575) au moment de la fermeture totale est en contact avec la surface intérieure (70a) du passage d'admission (70) sur un côté aval à un angle obtus ($\alpha$'), alors que la moitié côté autre extrémité (577B) de la soupape de papillon des gaz (575) est en contact avec la surface intérieure (70a) du passage d'admission (70) sur le côté aval à un angle aigu ($\beta$'), et

dans laquelle le chemin d'écoulement en tourbillon (80A) du chemin d'écoulement d'admission (80) est situé sur le côté aval de la moitié côté première extrémité (577A), alors que le chemin d'écoulement principal (80B) du chemin d'écoulement d'admission (80) est situé sur le côté aval de la moitié côté autre extrémité (577B).

**10.** Structure d'admission pour le moteur à combustion interne selon la revendication 9,

dans laquelle une distance entre un axe central (X') du chemin d'écoulement d'admission (80) et une surface sur le chemin d'écoulement en tourbillon (80A) de la section de séparation (81), sur une vue en coupe orthogonale à la section de séparation (81) et le long de l'axe central (X') du chemin d'écoulement d'admission (80), est une hauteur de séparation H (unité : mm), et

H/D est

dans une plage entre une limite supérieure (H/D)max et une limite inférieure (H/D)min qui sont calculées par

$$\text{Formule 11 : } (H/D)\text{max} = -0{,}000004D^2 + 0{,}0006D + 0{,}34,$$

et

$$\text{Formule 12 : } (H/D)\text{min} = -0{,}0000004D^2 + 0{,}0006D + 0{,}02.$$

**11.** Structure d'admission pour le moteur à combustion interne selon la revendication 9,

dans laquelle une superficie en coupe de passage d'admission est une superficie en coupe d'alésage de papillon des gaz Sth, et la superficie en coupe du chemin d'écoulement en tourbillon (80A) est A, et
A/Sth (un rapport (%) de la superficie en coupe de chemin d'écoulement en tourbillon sur la superficie en coupe d'alésage de papillon des gaz) est
dans une plage entre une limite supérieure (A/Sth)max et une limite inférieure (A/Sth)min qui sont calculées par

$$\text{Formule 13 : } (A/Sth)\text{max} = -0{,}001D^2 + 0{,}06D + 45{,}34,$$

et

$$\text{Formule 14 : } (A/Sth)\text{min} = 0{,}0005D^2 - 0{,}08D + 11{,}54.$$

**12.** Structure d'admission pour le moteur à combustion interne selon la revendication 9,

dans laquelle la superficie en coupe du chemin d'écoulement en tourbillon (80A) est A, et la superficie en coupe du chemin d'écoulement principal (80B) est B, et
A/(A + B) (un rapport (%) de la superficie en coupe de chemin d'écoulement en tourbillon sur la superficie en coupe de chemin d'écoulement total) est
dans une plage entre une limite supérieure (A/(A + B))max et une limite inférieure (A/(A + B))min qui sont calculées par

$$\text{Formule 15 : } (A/(A + B))\text{max} = 0{,}0024D^2 - 0{,}3283D + 55{,}48,$$

et

$$\text{Formule 16 : } (A/(A + B))\text{min} = 0{,}0008D^2 - 0{,}1187D + 12{,}4.$$

Fig.1

Fig.2

Fig.3

Fig.4

Fig.5

Fig.6

Fig.7

Fig.8

Fig.9

Fig.10

# Fig.11

Fig.12

# Fig.13

(THROTTLE POSITION 15%)

Y-axis: TUMBLE FLOW PATH FLOW RATE RATIO (fA/FT)

63%

X-axis values: 0.08, 0.13, 0.25, 1.57, 1.85, 2.17

L/D : PARTITION SECTION DEPTH POSITION

—▲—THROTTLE BORE D: 24$^\phi$

—■—THROTTLE BORE D: 48$^\phi$

—●—THROTTLE BORE D: 80$^\phi$

$\left(\begin{array}{l} \text{L : PARTITION SECTION DEPTH (DISTANCE BETWEEN CENTER OF} \\ \text{THROTTLE VALVE SHAFT AND FLOW PATH WIDTH DIRECTIONAL} \\ \text{CENTER OF UPSTREAM-SIDE END PORTION OF PARTITION SECTION} \\ \text{IN DIRECTION OF CENTER AXIS OF INTAKE PASSAGE)} \\ \text{D : THROTTLE BORE} \end{array}\right)$

# Fig.14

TUMBLE FLOW STRENGTHENING ESTABLISHMENT RANGE,
CORRESPONDING TO THROTTLE BORE D (UNIT: mm), OF PARTITION
SECTION DEPTH POSITION (L/D)

(THROTTLE POSITION 15%)

$(L/D)max = 0.00008D^2 - 0.0192D + 2.58$

(FORMULA 7)

ESTABLISHMENT RANGE

Dmin

THROTTLE BORE D (UNIT: mm)

$\left( \quad \text{—} \ominus \text{—} : \text{UPPER LIMIT } (L/D)max \right)$

# Fig.15

(THROTTLE POSITION 15%)

H/D : PARTITION SECTION HEIGHT POSITION

—▲—THROTTLE BORE D: 24$^{\phi}$
—■—THROTTLE BORE D: 48$^{\phi}$
—●—THROTTLE BORE D: 80$^{\phi}$

H : PARTITION HEIGHT (DISTANCE BETWEEN CENTER AXIS OF
INTAKE FLOW PATH AND SURFACE ON TUMBLE FLOW PATH
SIDE OF PARTITION SECTION)
D : THROTTLE BORE

# Fig.16

TUMBLE FLOW STRENGTHENING ESTABLISHMENT RANGE,
CORRESPONDING TO THROTTLE BORE D (UNIT: mm),
OF PARTITION SECTION HEIGHT POSITION (H/D)

(THROTTLE POSITION 15%)

$(H/D)max = -0.00002D^2 + 0.0025D + 0.31$

(FORMULA 1)

ESTABLISHMENT RANGE

$(H/D)min = 0.00005D^2 - 0.0064D + 0.26$

(FORMULA 2)

THROTTLE BORE D (UNIT: mm)

$\left( \begin{array}{l} \text{—○— : UPPER LIMIT (H/D)max} \\ \text{—●— : LOWER LIMIT (H/D)min} \end{array} \right)$

# Fig.17

(THROTTLE POSITION 15%)

A/Sth : RATIO (%) OF TUMBLE FLOW PATH SECTIONAL AREA
TO THROTTLE BORE SECTIONAL AREA

—▲—THROTTLE BORE D : 24$^\phi$
—■—THROTTLE BORE D : 48$^\phi$
—●—THROTTLE BORE D : 80$^\phi$

$\left(\begin{array}{l} \text{A : TUMBLE FLOW PATH SECTIONAL AREA} \\ \text{Sth : THROTTLE BORE SECTIONAL AREA} \end{array}\right)$

# Fig.18

TUMBLE FLOW STRENGTHENING ESTABLISHMENT RANGE,
CORRESPONDING TO THROTTLE BORE D (UNIT: mm), OF RATIO %
(A/Sth) OF TUMBLE FLOW PATH SECTIONAL AREA TO THROTTLE
BORE SECTIONAL AREA

(THROTTLE POSITION 15%)

$$(A/Sth)max = -0.006D^2 + 0.79D + 19.82$$

(FORMULA 3)

ESTABLISHMENT RANGE

$$(A/Sth)min = 0.002D^2 - 0.33D + 15.59$$

(FORMULA 4)

THROTTLE BORE D (UNIT: mm)

$\left( \begin{array}{l} \multimap\!\!\!\circ\!\!\!\multimap : \text{UPPER LIMIT (A/Sth)max} \\ \multimap\!\!\!\bullet\!\!\!\multimap : \text{LOWER LIMIT (A/Sth)min} \end{array} \right)$

# Fig.19

(THROTTLE POSITION 15%)

TUMBLE FLOW PATH FLOW RATE RATIO (fA/fT)

63%

A/(A+B) : RATIO (%) OF TUMBLE FLOW PATH SECTIONAL AREA
TO TOTAL FLOW PATH SECTIONAL AREA

—▲—THROTTLE BORE D : 24$^\phi$
—■—THROTTLE BORE D : 48$^\phi$
—●—THROTTLE BORE D : 80$^\phi$

$\left(\begin{array}{l} \text{A : TUMBLE FLOW PATH SECTIONAL AREA} \\ \text{B : MAIN FLOW PATH SECTIONAL AREA} \end{array}\right)$

# Fig.20

TUMBLE FLOW STRENGTHENING ESTABLISHMENT RANGE,
CORRESPONDING TO THROTTLE BORE D (UNIT: mm),
OF RATIO % (A/(A+B)) OF TUMBLE FLOW PATH SECTIONAL AREA
TO TOTAL FLOW PATH SECTIONAL AREA

(THROTTLE POSITION 15%)

$(A/(A+B))max = -0.0052D^2 + 0.6402D + 26.35$

(FORMULA 5)

ESTABLISHMENT RANGE

$(A/(A+B))min = 0.0023D^2 - 0.3287D + 15.19$

(FORMULA 6)

Dmin

THROTTLE BORE D (UNIT: mm)

$\left( \begin{array}{l} \text{—○—: UPPER LIMIT } (A/(A+B))max \\ \text{—●—: LOWER LIMIT } (A/(A+B))min \end{array} \right)$

# Fig.21

# Fig.22

# Fig.23

Fig.24

Fig.25

# Fig.26

Fig.27

Fig.28

# Fig.29

(THROTTLE POSITION 15%)

L/D : PARTITION SECTION DEPTH POSITION

—▲—THROTTLE BORE D : 24$^{\phi}$
—■—THROTTLE BORE D : 48$^{\phi}$
—●—THROTTLE BORE D : 80$^{\phi}$

$\Bigg/$ L : PARTITION SECTION DEPTH (DISTANCE BETWEEN CENTER OF
THROTTLE VALVE SHAFT AND FLOW PATH WIDTH DIRECTIONAL
CENTER OF UPSTREAM-SIDE END PORTION OF PARTITION SECTION
IN DIRECTION OF CENTER AXIS OF INTAKE PASSAGE)
D : THROTTLE BORE $\Bigg\rangle$

# Fig.30

TUMBLE FLOW STRENGTHENING ESTABLISHMENT RANGE, CORRESPONDING TO THROTTLE BORE D (UNIT: mm), OF PARTITION SECTION DEPTH POSITION (L/D)

(THROTTLE POSITION 15%)

$(L/D)max = 0.0002D^2 - 0.0308D + 2.78$

(FORMULA 17)

ESTABLISHMENT RANGE

L/D

Dmin

THROTTLE BORE D (UNIT: mm)

$\left( \begin{array}{c} \text{——⊖——: UPPER LIMIT (L/D)max} \end{array} \right)$

# Fig.31

(THROTTLE POSITION 15%)

H/D : PARTITION SECTION HEIGHT POSITION

—▲—THROTTLE BORE D : 24$^\phi$
—■—THROTTLE BORE D : 48$^\phi$
—●—THROTTLE BORE D : 80$^\phi$

$\left(\begin{array}{l}\text{H : PARTITION HEIGHT (DISTANCE BETWEEN CENTER AXIS OF} \\ \text{INTAKE FLOW PATH AND SURFACE ON TUMBLE FLOW PATH} \\ \text{SIDE OF PARTITION SECTION)} \\ \text{D : THROTTLE BORE}\end{array}\right)$

# Fig.32

TUMBLE FLOW STRENGTHENING ESTABLISHMENT RANGE,
CORRESPONDING TO THROTTLE BORE D (UNIT: mm),
OF PARTITION SECTION HEIGHT POSITION (H/D)

(THROTTLE POSITION 15%)

$(H/D)max = -0.000004D^2+0.0006D+0.34$

(FORMULA 11)

ESTABLISHMENT RANGE

$(H/D)min = -0.0000004D^2+0.0006D+0.02$

(FORMULA 12)

Dmin

THROTTLE BORE D (UNIT: mm)

$\left( \begin{array}{l} \text{—○—: UPPER LIMIT } (H/D)max \\ \text{—●—: LOWER LIMIT } (H/D)min \end{array} \right)$

# Fig.33

(THROTTLE POSITION 15%)

A/Sth : RATIO (%) OF TUMBLE FLOW PATH SECTIONAL AREA TO
THROTTLE BORE SECTIONAL AREA

—▲—THROTTLE BORE D : 24$^\phi$
—■—THROTTLE BORE D : 48$^\phi$
—●—THROTTLE BORE D : 80$^\phi$

$\left(\begin{array}{l} \text{A : TUMBLE FLOW PATH SECTIONAL AREA} \\ \text{Sth : THROTTLE BORE SECTIONAL AREA} \end{array}\right)$

# Fig.34

TUMBLE FLOW STRENGTHENING ESTABLISHMENT RANGE,
CORRESPONDING TO THROTTLE BORE D (UNIT: mm),
OF RATIO % (A/Sth) OF TUMBLE FLOW PATH SECTIONAL AREA
TO THROTTLE BORE SECTIONAL AREA

(THROTTLE POSITION 15%)

$(A/Sth)max = -0.001D^2 + 0.06D + 45.34$
(FORMULA 13)

ESTABLISHMENT RANGE

$(A/Sth)min = 0.0005D^2 - 0.08D + 11.54$
(FORMULA 14)

Dmin

THROTTLE BORE D (UNIT: mm)

$\left( \begin{array}{l} \text{—○—: UPPER LIMIT (A/Sth)max} \\ \text{—●—: LOWER LIMIT (A/Sth)min} \end{array} \right)$

Fig.35

(THROTTLE POSITION 15%)

A/(A+B) : RATIO (%) OF TUMBLE FLOW PATH SECTIONAL AREA
TO TOTAL FLOW PATH SECTIONAL AREA

—▲—THROTTLE BORE D : 24$^\phi$
—■—THROTTLE BORE D : 48$^\phi$
—●—THROTTLE BORE D : 80$^\phi$

$\left(\begin{array}{l} \text{A : TUMBLE FLOW PATH SECTIONAL AREA} \\ \text{B : MAIN FLOW PATH SECTIONAL AREA} \end{array}\right)$

# Fig.36

TUMBLE FLOW STRENGTHENING ESTABLISHMENT RANGE,
CORRESPONDING TO THROTTLE BORE D (UNIT: mm),
OF RATIO % (A/(A+B)) OF TUMBLE FLOW PATH SECTIONAL AREA
TO TOTAL FLOW PATH SECTIONAL AREA

(THROTTLE POSITION 15%)

$(A/(A+B))max = 0.0024D^2-0.3283D+55.48$

(FORMULA 15)

ESTABLISHMENT RANGE

$(A/(A+B))min = 0.0008D^2-0.1187D+12.4$

(FORMULA 16)

A/(A+B)

Dmin

THROTTLE BORE D (UNIT: mm)

$\left(\begin{array}{l} \text{—⊖—: UPPER LIMIT (A/(A+B))max} \\ \text{—●—: LOWER LIMIT (A/(A+B))min} \end{array}\right)$

Fig.37

## Fig.38

# Fig.39

**REFERENCES CITED IN THE DESCRIPTION**

**Patent documents cited in the description**

- WO 2013146703 A1
- US 4240387 A